(19) Europäisches Patentamt
European Patent Office
Office européen des brevets

(11) **EP 0 795 162 B1**

(12) **EUROPEAN PATENT SPECIFICATION**

(45) Date of publication and mention
of the grant of the patent:
**18.09.2002 Bulletin 2002/38**

(51) Int Cl.[7]: **G06F 17/60**

(21) Application number: **95905857.9**

(86) International application number:
**PCT/US94/13949**

(22) Date of filing: **01.12.1994**

(87) International publication number:
**WO 96/017317 (06.06.1996 Gazette 1996/26)**

(54) **SYSTEM FOR VOTING STOCK COMPONENT INTERESTS**

SYSTEM ZUR AKTIEN-KOMPONENTEN-ANTEILS-WAHL

SYSTEME PERMETTANT DE VOTER DES INTERETS COMPOSES DE VALEURS BOURSIERES

(84) Designated Contracting States:
**AT BE CH DE DK ES FR GB GR IE IT LI LU MC NL PT SE**

(43) Date of publication of application:
**17.09.1997 Bulletin 1997/38**

(73) Proprietor: **AMERICUS STOCK PROCESS CORP.**
**Wilmington DE 19805 (US)**

(72) Inventors:
• **DEBE, A., Joseph**
**Garden City, NY 11530 (US)**
• **BROMS, Peter, A.**
**Glen Ridge, NJ 07028 (US)**

(74) Representative: **Schickedanz, Willi, Dr. Dipl.-Ing.**
**Langener Strasse 68**
**63073 Offenbach (DE)**

(56) References cited:
**EP-A- 0 401 203      EP-A- 0 411 748**
**EP-A- 0 453 150      US-A- 4 093 276**
**US-A- 4 412 287      US-A- 4 674 044**
**US-A- 4 823 265**

• **AMERICUS TRUST PRIME/SCORE PROSPECTUS, AMERICUS TRUST FOR AT&T COMMON SHARES, Series A, 25 October 1983, Published by AMERICUS SHAREOWNER SERVICE CORP., Pages 1-29.**

**Description**

BACKGROUND OF THE INVENTION

This invention relates to a system for voting in accordance with component interests of a share of stock in two or three separately tradeable components. In the three component case they may be called DIVS$^{SM}$, SPECS$^{SM}$, and ZIPS$^{SM}$; in the two component case they may be called ZIPS$^{SM}$ and SPECS$^{SM}$. It is anticipated that these components will be created relating to the common stock of large "Blue Chip" corporations in arrangements having a series term of approximately five years. However, any time period could be designated. Components can be created by a holder of a long position in the underlying common stock associated with the component sold. The characteristics of these components are as follows:

DIVS$^{SM}$ - This component gets the payment of dividends on the common stock over the term of the series. It is anticipated that the initial market pricing of the DIVS$^{SM}$ will approximate the discounted present value of the applicable nominal dividend rate using the yields on Treasury Notes of comparable maturity as the discount rate. Historic and prospective dividend growth rates of individual stocks will be factored in to lower or increase the dividend discount rate actually used. The return to the DIVS$^{SM}$ holder must take into account the fact that the initial investment or cost of the DIVS$^{SM}$ will end up with a zero value at termination. Therefore, a significant portion of the dividends received by the DIVS$^{SM}$ holder represents a return of the initial investment. The dividends to the DIVS$^{SM}$ holder preferably will be paid in the same amount and at the same time as the dividends are paid on the underlying common stock. In the two component case the DIVS$^{SM}$ will not trade and the dividend paid on the stock will be retained by the shareholder who had sold the ZIPS$^{SM}$ and/or SPECS$^{SM}$.

SPECS$^{SM}$ - This component is entitled to any and all appreciation in the stock's price above the Termination Claim (TC$^{SM}$) at maturity. Unlike conventional options where the strike rice (Termination Claim (TC$^{SM}$)) must be paid in order to obtain the common stock at expiration, the holder of SPECS$^{SM}$ will receive shares of common stock in satisfaction of their claim at termination. If the common stock's price closes below the Termination Claim (TC$^{SM}$) at expiration, the SPECS$^{SM}$ will be worthless. Even in that eventuality, however, the SPECS$^{SM}$ will have provided investors with innumerable profit making opportunities during the five year period. Their utility results from the fact that they embrace most of the volatility of the common stock because of their significant leverage, thus appealing to speculative investors.

ZIPS$^{SM}$ - This component represents the nucleus of the common stock preferably collateralized at all times by the value of a full common share because of its preferential claim at termination. The initial investment in the ZIPS$^{SM}$ will be considerably less than the price of the underlying common stock because of the value attributable to the DIVS$^{SM}$ and SPECS$^{SM}$. Investment return on the ZIPS$^{SM}$ will be entirely from preferential price appreciation to the lesser of the stock's price or the Termination Claim (TC$^{SM}$) at maturity. Investors in the ZIPS$^{SM}$ of dividend-paying common stocks will end up with an income-producing investment at termination. A method preferably is utilized (by ASPC) for establishing the Termination Claim (TC$^{SM}$) and Termination Date (TD$^{SM}$) in order to achieve conservative investment objectives of (1) a standstill return to the stock's current price at least as great as the yield on Treasury Notes of comparable maturity, and (2) a margin of safety or downside price protection of at least 25% to 33%. Once these criteria have been satisfied, it should be possible to determine with considerable accuracy the much higher potential returns to the Termination Claim (TC$^{SM}$). The capital conservative aspects of the ZIPS$^{SM}$ results from the fact that they should be available initially at a significant discount from the prevailing price of the common stock while offering investors the prospects of achieving significant potential returns.

Both the DIVS$^{SM}$ and ZIPS$^{SM}$ are completely new investment securities which should have wide appeal to investors, most of whom are risk averse. This will enhance the value of the underlying common stock. All three components will trade in the marketplace and their actual prices will be determined as any publicly traded vehicle.

An important unique aspect of this system is that the vote on the underlying common stock is apportioned on a pro rata basis to each component. If all three components are trading, each gets its vote based on its value relative to the sum of the values of all three components together. There has never before been a way to split the vote of a share of stock. In the case of the components trading as options, never before have the options had a vote. The programmed computer systems that implement the vote apportionment and assure that the vote is properly delivered to each ZIPS$^{SM}$, SPECS$^{SM}$ and DIVS$^{SM}$ holders and to the corporation are described hereinafter. In the case of only the ZIPS$^{SM}$ and SPECS$^{SM}$ trading, the apportionment is based on the value of each component relative to the value of the underlying common stock.

If any two of the three components described above trade in the market place, the non-trading component will be the residual value of the share of stock minus the value of the traded components. All formulas can be adjusted to accommodate this method of creation and trading.

There are described four methods of creating ZIPS$^{SM}$, DIVS$^{SM}$, and SPECS$^{SM}$, as follows:

I. Option Creation Mode. In this mode the components will be created as options by the sale of one or more components. In this case they would be created by an option clearing corporation (OCC), and there would be no direct pledge of the underlying common stock. The seller's OCC participant would be required to ascertain that the seller had the underlying common stock in his account in street name at the OCC participant. The OCC participant would have to maintain margin at OCC to cover the created component. In this mode the OCC interposes itself between the buyer and seller guaranteeing delivery of the components, just as it now does in option trades.

Thus in this mode components can be created from a "covered" or "uncovered" position in the underlying stock. However, this invention and process requires and accommodates the delivery of votes to component holders whether from a covered or uncovered position.

II. Equity Creation Mode. In this mode the components will be created by the owner of the underlying common stock selling one or more components and pledging his or her stock to an Equity Clearing Corporation (ECC) or an agency approved by ECC. The ECC will then deliver the number of components sold to the Depository Trust Corporation (DTC) that are then held by DTC in "street name" in the buyer's DTC participant account for the benefit of the buyer. The pledge to the ECC is done to insure delivery of the interests represented by the sold components prior to and upon termination of the series. In this mode the components preferably trade on an equity exchange. The trading of the components would take place with trade matching and settlement handled identically to the equities.

III. Equity Forwards$^{SM}$ Creation Mode. This mode is a special case of the Equity Creation Mode. In this mode the components will be created by the owner of the underlying stock selling one or more components. The underlying stock will be pledged to the broker instead of to an Equity Clearing Corporation (ECC). The broker then maintains margin at an Equity Forwards$^{SM}$ Clearing Corporation (EFCC) to cover the created components. In this mode the components trade on an equity/option exchange licensed by ASPC with matching and settlement handled identically to options.

IV. Corporate Exchange and Creation Mode. In this mode a corporation would exchange components for its common stock as a service to its shareholders. The most important difference between this mode and the Equity Creation Mode is that all three components will be created at the same time, i.e., at the time of exchange, and be deposited in the stockholder's DTC participant account. The settlement of the traded components would be handled by DTC and National Securities Clearing Corporation (NSCC) in the same manner as applies to equity trades currently.

In the corporate creation mode a corporation could raise equity capital more economically by issuing ZIPS$^{SM}$, SPECS$^{SM}$ and DIVS$^{SM}$ instead of selling common stock the conventional way. The components would be bought by new or existing investors in the company. Trading of the components would also be handled as equities. Instead of purchasing the common stock, investors would buy individual components.

Unlike the first three modes where early redemption by purchasers is not allowed, the Corporate Creation and Exchange Mode could allow the holder of all three components to exchange them for the underlying common stock at anytime during the term of the arrangement. The combined components in the Corporate Exchange and Creation Mode are less likely to sell at a discount to the underlying common stock, than in the other three modes, because of the availability of the redemption feature. However, because of the significant increase in investment utility and capital efficiencies provided by the availability of the DIVS$^{SM}$, ZIPS$^{SM}$ and SPECS$^{SM}$, investors should see either meaningful premiums for the components in the Corporate Exchange and Creation Mode or continued creations in the other three modes.

In all of the creation modes a Termination Date (TD$^{SM}$) and Termination Claim (TC$^{SM}$) must be established before trading can commence.

The splitting of shares of stock described herein is an important improvement over the PRIME® and SCORE® system described in patent 4,093,276 and claimed as a stock certificate. In the original system the PRIME® received all the dividends, price appreciation up to the Termination Claim (TC$^{SM}$), and the entire vote. The SCORE® only received the appreciation above the Termination Claim (TC$^{SM}$). That system demonstrated the value added in terms of the components' premium over the underlying common stock and increased liquidity both volume-wise and dollar-wise relative to the common stock displaced. Thus, there are sound reasons to believe that DIVS$^{SM}$, ZIPS$^{SM}$ and SPECS$^{SM}$ should attract considerable new investor interest in the individual components which will thereby increase the demand and the market value of the underlying common stock.

Some of the improvements of the new system are:

1. By splitting the vote among all the components the new system assures that the vote will have an appropriate value relative to the underlying common stock.

2. This system represents the ultimate splitting of the common stock, since each economic interest of the stock is represented by separately traded components.

3. The new system represents the first time that dividends or substitute dividends on a share of stock will be able to trade on a public exchange.

4. There preferably are no administrative or investment fees in the new system.

5. There preferably are no underwriter or underwriter fees in the new system.

6. The yield on the ZIPS$^{SM}$, due to price appreciation only, is much easier to determine than for the PRIME® since the PRIME® receives price appreciation, dividends, and dividend increases.

7. The splitting has value added as demonstrated by Americus Trust's PRIME®s and SCORES®s. This value stems from the increased investment utility of the components and the capital efficiency that results from the ability of investors to commit capital only to the desired components.

The value added can also be attributed to savings in transaction costs that would be required in attempts to replicate the investment characteristics of the individual components.

8. The ZIPS$^{SM}$ is a safer investment than the PRIME®, and much safer than the underlying common stock, since the common stock's price (if held to the termination of the series) can fall by the value of the SPECS$^{SM}$ and the DIVS$^{SM}$ before the ZIPS$^{SM}$ could lose any value.

There follow definitions of terms used herein.

| | |
|---|---|
| ASPC - | Americus Stock Process Corp. (Applicants' assignee, owner of primary computer) |
| ZIPS$^{SM}$ - | Zero Income Principal of Stock |
| DIVS$^{SM}$ - | DIvidend Value of Stock |
| SPECS$^{SM}$ - | Speculative Equity Component of Stock |
| OCC - | An options clearing corporation |
| ECC - | An equities clearing corporation |
| EFCC - | An Equity Forwards$^{SM}$ clearing corporation |
| DTC - | Depository Trust Company |
| NSCC - | National Securities Clearing Corporation |
| CUSIP - | A string of digits and letters that uniquely identifies every security that trades on the exchanges. |
| Series - | the ZIPS$^{SM}$, DIVS$^{SM}$ and SPECS$^{SM}$ for a particular company with a given Termination Claim (TC$^{SM}$) and Termination Date (TD$^{SM}$). |

Equity Forwards$^{SM}$ - These would be clearing agency issued,

exchange or OTC traded derivative securities that would be issued and margined by the clearing agency in accordance with its normal procedures and rules (i. e., cash, treasuries, letters of credit or cover). The clearing member would require that DIVS™, ZIPS™ and SPECS™ be handled as standardized forward contracts for derivative equity securities. Doing them as standardized forward contracts for derivative equity securities against a long position assures that stock is available to meet the obligation undertaken to give proxies for the portion of the vote allocable to the component parts and to fund the dividend obligations in respect of sold DIVS™. Equity Forwards$^{SM}$ , Forwards, or Standardized Forward Contracts for Derivative Equity Securities are used interchangeably herein.

Termination Claim (TC$^{SM}$) - The value that determines how the

common stock underlying a series will be distributed between the ZIPS$^{SM}$ and SPECS$^{SM}$ component holders. ZIPS$^{SM}$ holders will receive common stock equal to the lesser of the Termination Claim (TC$^{SM}$), or the stock's price, with holders of the SPECS$^{SM}$ component receiving the remaining stock, if any, equal in value to the excess of the stock's price above the Termination Claim (TC$^{SM}$).

Termination Date (TD$^{SM}$) - The last day of trading of the

components which will determine the basis for distribution of the underlying common stock.

Net long and Net short - a detailed report showing all

accounts with long and short components, and the net total position.

The terms Firm, Member Firm and OCC Participant are interchangeable in the option mode.

In the Equity mode and Corporate Creation and Exchange mode the terms Firm, Member Firm and ECC Participant are interchangeable.

In the Equity Forwards$^{SM}$ mode, the terms Firm, Member Firm and EFCC Participant are interchangeable.

SUMMARY OF THE INVENTION

In accordance with the invention as claimed, a system for voting options each of which represents an interest in a share of stock of an entity, comprises computer input and memory means for allocating to a customer's account options that are any of: (a) a component interest indicative of the right to receive a partial share of stock equal in value to a stipulated price or a full share of stock of the entity on a predetermined future date, whichever is the lesser value; (b) a component interest indicative of the right to receive a partial share of stock equal in value to the appreciation, if any, of the share of stock above the stipulated price on the predetermined date; (c) a component interest indicative of the right to receive actual dividends or substitute payments equal in amount to dividends declared with respect to given dates which are prior to the predetermined future date and which goes to zero value at the predetermined future date; and computer data processing means for allocating the right to vote the options among the three component interests.

Also in accordance with the invention as claimed, a system for voting stock interests, each of which represents an interest in a share of stock of an entity, comprises computer input and memory means for allocating to a customer's account stock interests that are any of:

(a) a component interest indicative of the right to receive a partial share of stock equal in value to a stipulated price or a full share of stock of the entity on a predetermined future date, whichever is the lesser value;
(b) a component interest indicative of the right to receive a partial share of stock equal in value to the appreciation, if any, of the share of stock above the stipulated price on the predetermined future date;
(c) a component interest indicative of the right to receive actual dividends or substitute payments equal in amount to dividends declared with respect to a given date which is prior to the predetermined future date and which goes to zero value at the predetermined future date. The system also includes computer data processing means responsive to the computer input and memory means for allocating the right to vote the stock interest among the three component interests.

For a better understanding of the invention, together with other and further objects thereof, reference is made to the following description, taken in connection with the accompanying drawings, and its scope will be pointed out in the appended claims.

BRIEF DESCRIPTION OF THE DRAWINGS

I. Option Mode

Fig. 1 (OPTION MODE CREATION TRADE) and Fig. 1a (DATA FLOW DIAGRAM FOR OPTION MODE CREATION TRADE) are schematic diagrams showing the creation of components and data flow in the option mode;

Fig. 2 is a schematic diagram of the overall system outlining the relationships and flows of data among units involved in this invention;

Fig. 3 is a schematic diagram of the system which shows the interaction of the several related computer systems;

Fig. 4 is a flow chart comprising a representation of a portion of a computer which operates according to a computer program produced according to the flow chart for CUSIP CORRELATION at, for example, a primary computer;

Fig. 5 is a flow chart comprising a representation of a portion of a computer which operates according to a computer program produced according to the flow chart for VOTE CALCULATION at, for example, the primary computer;

Fig. 6 is a flow chart comprising a representation of a portion of a computer which operates according to a computer program produced according to the flow chart for VOTE APPORTIONING at, for example, the primary computer;

Fig. 7 is a flow chart comprising a representation of a portion of a computer which operates according to a computer program produced according to the flow chart for OCC PARTICIPANT MEMBER FIRM AND COMPANY NOTIFICATION at, for example, the primary computer; and

Fig. 8 is a flow chart comprising a representation of a portion of a computer which operates according to a computer program produced according to the flow chart for OCC PARTICIPANT MEMBER COMPUTER.

II. Equity Mode

Fig. 9 (EQUITY MODE CREATION TRADE) and Fig. 9a (DATA FLOW DIAGRAM FOR EQUITY MODE CREATION TRADE) are schematic diagrams showing the creation of components and data flow in the equity mode;

Fig. 10 is a schematic diagram of the overall system outlining the relationships and flows of data among units involved in this invention;

Fig. 11 is a schematic diagram of the system which shows the interaction of the several related computer systems;

Fig. 12 is a flow chart comprising a representation of a portion of a computer which operates according to a computer program produced according to the flow chart for CUSIP CORRELATION at, for example, a primary computer;

Fig. 13 is a flow chart comprising a representation of a portion of a computer which operates according to a computer program produced according to the flow chart for VOTE CALCULATION at, for example, the primary computer;

Fig. 14 is a flow chart comprising a representation of a portion of a computer which operates according to a computer program produced according to the flow chart for VOTE APPORTIONING at, for example, the primary computer;

Fig. 15 is a flow chart comprising a representation of a portion of a computer which operates according to a computer program produced according to the flow chart for DTC PARTICIPANT MEMBER FIRM AND COMPANY NOTIFICATION at, for example, the primary computer; and

Fig. 16 is a flow chart comprising a representation of a portion of a computer which operates according to a computer program produced according to the flow chart for DTC PARTICIPANT MEMBER COMPUTER.

III. Equity Forwards<sup>SM</sup> Mode (Derivation of Equity Mode)

Fig. 17 (EQUITY FORWARDS<sup>SM</sup> MODE CREATION TRADE) and Fig. 17a (DATA FLOW DIAGRAM FOR EQUITY FORWARDS<sup>SM</sup> MODE CREATION TRADE) are schematic diagrams showing the creation of components and data flow in the equity mode;

Fig. 18 is a schematic diagram of the overall system outlining the relationships and flows of data among units involved in this invention;

Fig. 19 is a schematic diagram of the system which shows the interaction of the several related computer systems;

Fig. 20 is a flow chart comprising a representation of a portion of a computer which operates according to a computer program produced according to the flow chart for CUSIP CORRELATION at, for example, a primary computer;

Fig. 21 is a flow chart comprising a representation of a portion of a computer which operates according to a computer program produced according to the flow chart for VOTE CALCULATION at, for example, the primary computer;

Fig. 22 is a flow chart comprising a representation of a portion of a computer which operates according to a computer program produced according to the flow chart for VOTE APPORTIONING at, for example, the primary computer;

Fig. 23 is a flow chart comprising a representation of a portion of a computer which operates according to a computer program produced according to the flow chart for EFCC PARTICIPANT MEMBER FIRM AND COMPANY NOTIFICATION at, for example, the primary computer; and

Fig. 24 is a flow chart comprising a representation of a portion of a computer which operates according to a computer program produced according to the flow chart for EFCC PARTICIPANT MEMBER COMPUTER.

IV. Corporate Exchange And Creation Mode

Fig. 25 (CORPORATE EXCHANGE AND CREATION MODE) and Fig. 25a (DATA FLOW DIAGRAM FOR CORPORATE EXCHANGE AND CREATION MODE) are schematic diagrams showing the creation of components and data flow in the equity mode;

Fig. 26 is a schematic diagram of the overall system outlining the relationships and flows of data among units involved in this invention;

Fig. 27 is a schematic diagram of the system which shows the interaction of the several related computer systems;

Fig. 28 is a flow chart comprising a representation of a portion of a computer which operates according to a computer program produced according to the flow chart for CUSIP CORRELATION at, for example, a primary computer;

Fig. 29 is a flow chart comprising a representation of a portion of a computer which operates according to a computer program produced according to the flow chart for VOTE CALCULATION at, for example, the primary computer;

Fig. 30 is a flow chart comprising a representation of a portion of a computer which operates according to a computer program produced according to the flow chart for VOTE APPORTIONING at, for example, the primary computer;

Fig. 31 is a flow chart comprising a representation of a portion of a computer which operates according to a computer program produced according to the flow chart for DTC PARTICIPANT MEMBER FIRM AND COMPANY NOTIFICATION at, for example, the primary computer; and

Fig. 32 is a flow chart comprising a representation of a portion of a computer which operates according to a computer program produced according to the flow chart for DTC PARTICIPANT MEMBER COMPUTER.

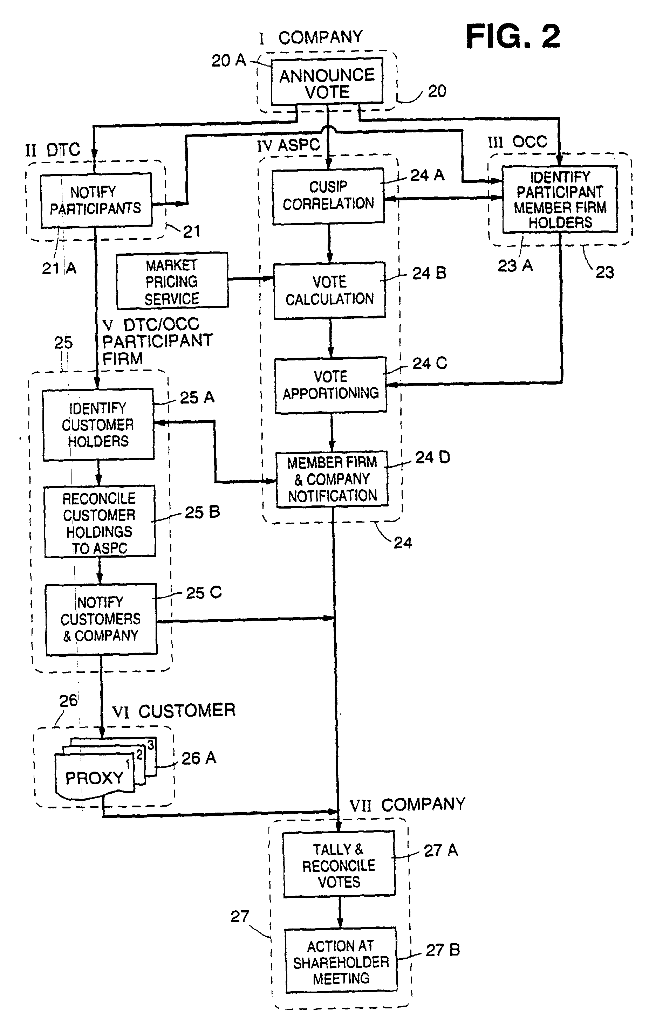

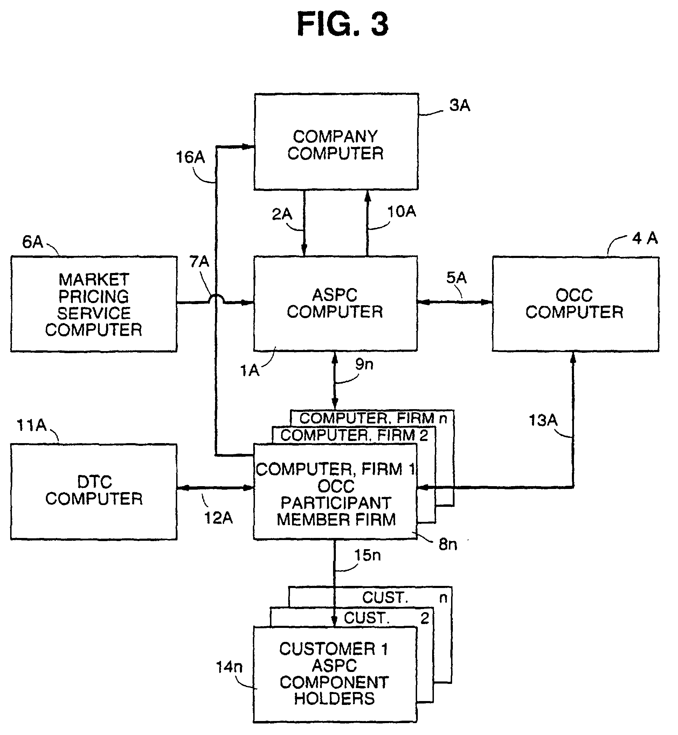

Before referring to the drawings in detail, it will be understood that for purposes of clarity, each computer apparatus represented in block diagrams, for example, in Figs. 2 and 3, utilize, for example, a digital computer processor which includes such hardware as a central processing unit, program and random access memories, timing and control circuitry, input-output interface devices and other conventional digital subsystems necessary to the operation of the central processing unit as is well understood by those skilled in the art. Magnetic memory storage disks (hard drive) are also utilized. The processors operate according to the computer programs produced according to the flow charts represented in the drawings.

## I. Option Mode

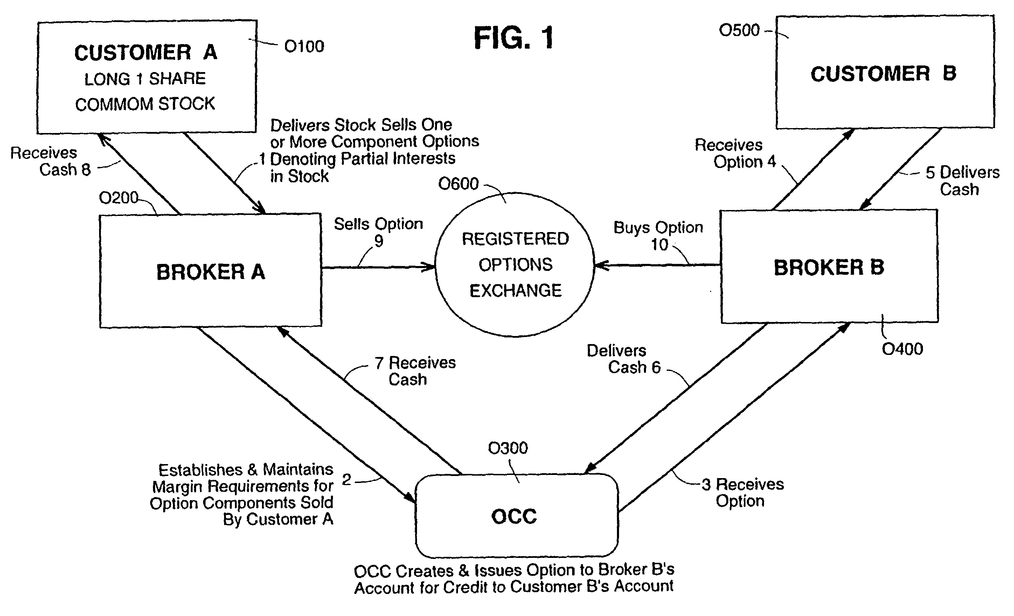

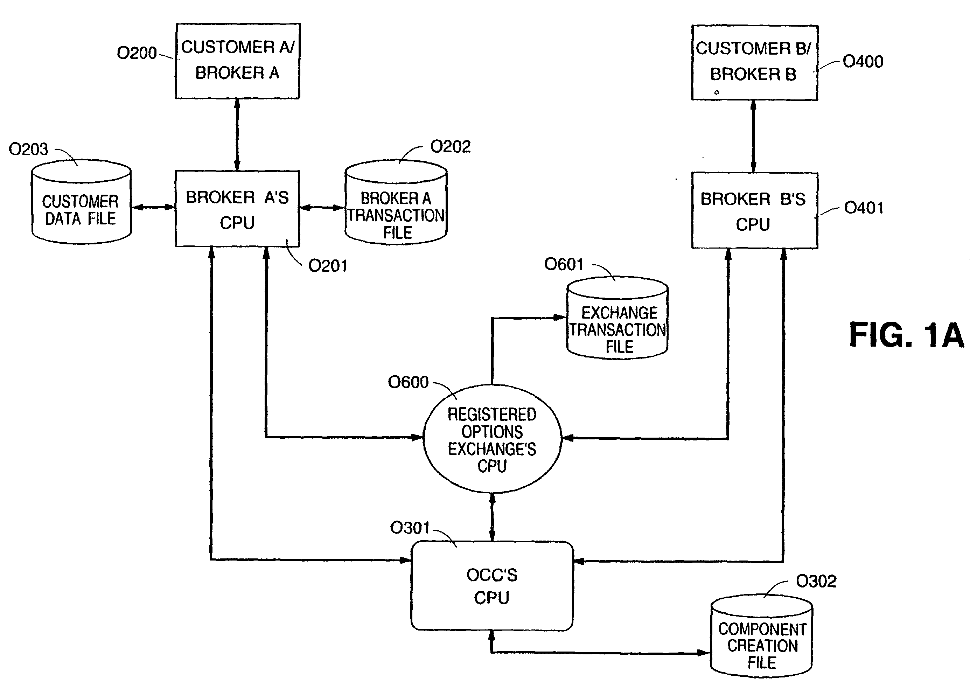

Referring now to Fig. 1 of the drawings, there is represented diagrammatically a transaction involved in the creation and trading in the option mode of one or more DIVS$^{SM}$, SPECS$^{SM}$ or ZIPS$^{SM}$.

As represented in Fig. 1, a system for creating options, each of which represents an interest in a share of stock of an entity comprises computer input and memory means for allocating to a customer's account options that are any of: (a) a component interest indicative of the right to receive a partial share of stock equal in value to a stipulated price or a full share of stock of the entity on a predetermined future date, whichever is the lesser value; (b) a component interest indicative of the right to receive a partial share of stock equal in value to the appreciation, if any, of the share of stock above the stipulated price on the predetermined date; (c) a component interest indicative of the right to receive substitute dividends declared with respect to a given stock and a given date which is prior to the predetermined future date and which goes to zero value at the predetermined future date. The system also includes computer memory means for recording the sale from the customer's account of options that are any of components (a), (b), (c), as described more fully with reference to Fig. 1a.

As represented diagrammatically in Fig. 1, Box 0100, Customer A is long one share of common stock, by which it is meant that he owns common stock carried in his account at Broker A (Box 0200). As represented by arrow 1, Customer A represented by Box 0100 sells one or more options for DIVS$^{SM}$, ZIPS$^{SM}$ or SPECS$^{SM}$ through Broker A, represented by Box O200.

The sale by Customer A, through Broker A, is done on a registered option exchange, represented by Box 0600. This exchange preferably has standardized contract specifications arranged in conjunction with the owner of the primary computer (ASPC). As indicated by arrow 2, Broker A establishes and maintains margin (at OCC) for any option component sold by Customer A. OCC creates and issues an option to Broker B's account, represented by Box O400 for credit to Customer B's account, represented by Box O500. As represented by arrow 3, Broker B receives the option and as represented by arrow 4, Customer B receives the option. As represented by arrow 5, Customer B delivers cash to Broker B, who as represented by arrow 6, delivers cash to OCC. As indicated by arrow 7, Broker A receives cash from OCC and as represented by arrow 8, Customer A O100 receives cash for the option he has sold.

As represented by arrow 9, the sale of the option by Broker A is through a registered options exchange O600. Broker B buys the option from Broker A through the registered options exchange O600, as indicated by arrow 10.

Referring now to Fig. 1a, customer A establishes an account with Broker A 0200 and deposits shares of a company's common stock in his account with Broker A. Broker A 0200 then stores information about Customer A and his stock positions in a magnetic memory disk file O203 in his computer system O201.

Customer A instructs Broker A to sell a component option interest in a common stock.

Broker A's computer O201 queries his account information memory disk file O203 for Customer A to ascertain that Customer A has the underlying common stock in his account for the component being sold and created.

Assuming the underlying common stock is there, Broker A enters into his computer transaction file O202 an order to sell the component as an opening transaction. The floor traders for each customer upon completion of the trade enter the trade in each of their computer systems O201 and O401, and the specialist enters information about the trade into the exchange's computer exchange transaction file O601 which may be stored in a memory storage disk. Customer A's account on the broker's computer system is updated to show that he is short the component sold when confirmation of the sale is received from the registered options exchange. Each broker's computer systems then generate reports for Broker A O200 and Broker B O400 indicating the results of the trade. Then the brokers report the trade to their respective customers.

When a trade is complete the exchange's computer systems transmit data about the trade to the computer system at an option clearing corporation (OCC) O301. This computer system accumulates all opening and closing trades for each component by broker. The OCC component creation file O302, which may be stored in a memory storage disk, registers the component which OCC has created.

For each opening sale of a component OCC's computer system O301 causes a component option to be created in the computer record of the buying broker's account O401 to complete the trade. After the close of trading OCC's computers transmit a report showing the net change in position for each component that each broker traded that day. The broker's computer systems reconcile this net change with the trades the broker made that day. When this is finished the individual customer's account information, stored in the broker's computer system, such as Broker A's transaction file O202, which may be stored in a memory storage disk O202, is updated to reflect the trades the customer's made that day. Each day OCC and the participant member firms adjust maintenance margins to reflect the change in value of the net position they have in component options at OCC.

Referring now to Fig. 2, a Company 20 utilizes computer means 20A for announcing its intent to solicit votes from its stockholders. The computer means 20A communicates with computer means 21A for notifying participant members of Depository Trust Corporation (DTC) 21 which, on behalf of its participant members may serve as the repository for the company's equity. As it learns of shareholder voting matters, the computer means 21A disseminates this information to its participants. For example, the DTC computer means 21A notifies OCC 23 and the DTC/OCC participant firm 25.

The OCC participant firm 25 has computer means 25A for identifying customer holdings, computer means 25B for reconciling component holdings (long and short) to ASPC and computer means 25C for notifying customers and the company.

An Options Clearing Corporation (OCC) 23 maintains records that identify all holders (long and short option contracts) of ZIPS$^{SM}$, SPECS$^{SM}$ and DIVS$^{SM}$. OCC 23 utilizes computer means 23A for identifying participant member holdings.

ASPC 24, owner of the primary computer, utilizes computer means for CUSIP correlation which is necessary to properly apportion component-holder voting rights. ASPC requests from OCC via computer means 23A information that identifies participant holders of record of either long and/or short positions for specified components pertinent to a shareholder vote.

ASPC 24, the owner of the primary computer has computer means for performing four basic tasks in order to establish the voting rights for eligible component-holders:

1. CUSIP correlation computer means 24A for correlating the equity at issue to the corresponding created components: SPECS$^{SM}$, ZIPS$^{SM}$ and DIVS$^{SM}$;
2. vote calculation computer means 24B for calculating the proper voting rights for each of these components;
3. vote apportioning computer means 24C for apportioning the correct number of votes to each OCC participant (as identified by OCC) for each component;
4. computer means 24D notifies all OCC participant members, maintaining component positions of their voting rights.

The OCC participant firm 25, upon receipt of the voting information utilizes a similar computer system to that of ASPC to further apportion the net long and net short vote among its customers as previously described. Ultimately proxies are forwarded to all eligible holders identifying the customer's 26 detailed, as well as net, voting rights.

The customer 26 votes and returns a proxy 26A to the company 27. The company 27 utilizes computer means 27A for tallying and reconciling all votes submitted and, as indicated by Box 27B, takes corresponding action at its shareholder meeting.

Referring now to Fig. 3 of the drawings, a company computer 3a or public channels 2a enters relevant information concerning a stockholder vote into the ASPC computer 1a. This information indicates that company 3a wishes to solicit votes from its stockholders.

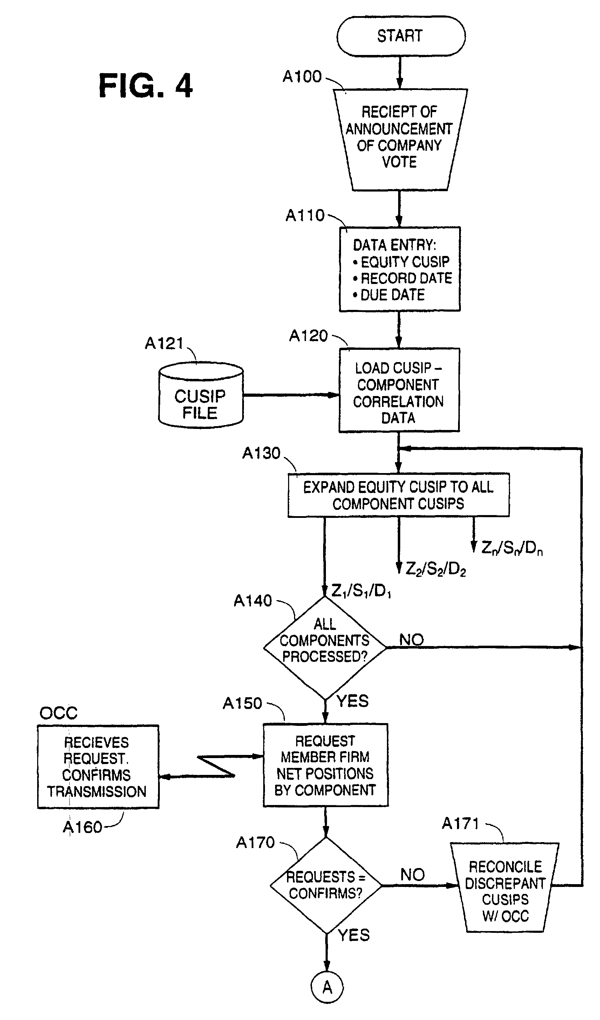

On the stock of record date the ASPC computer 1a initiates a request for data from the OCC computer 4a in order to identify member firms holding positions of all components. This communication occurs over a communication link 5a. This will be explained more fully in connection with Fig. 4.

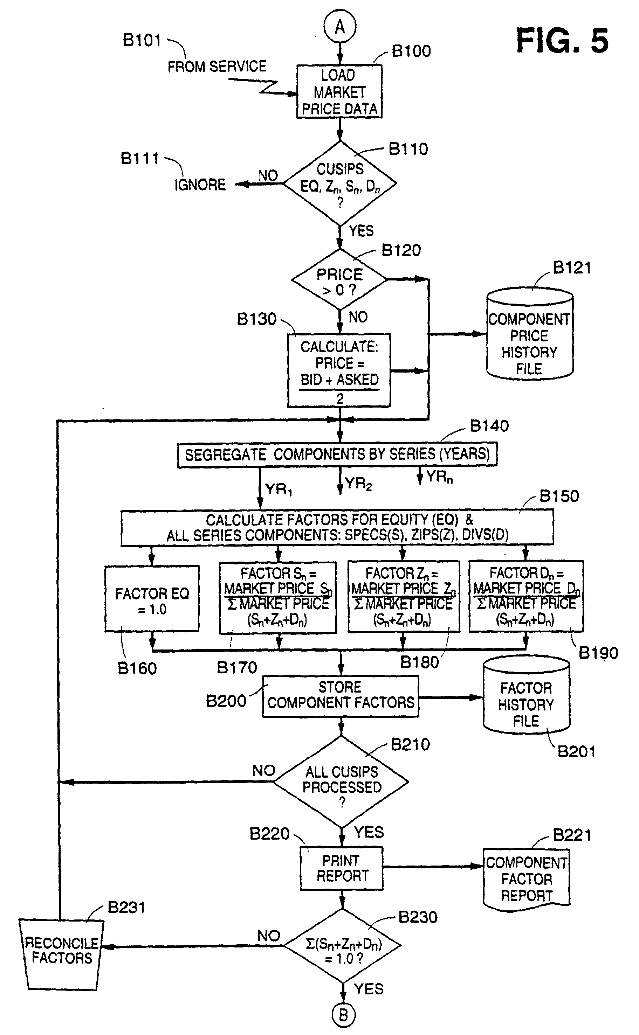

The ASPC computer 1a then calculates the pro rata voting right applicable to each of the components (as more fully explained in connection with Fig. 5). In order to accomplish this, the ASPC computer receives market pricing data from an external market pricing service computer 6a by means of an electronic medium communicated through a communication link 7a.

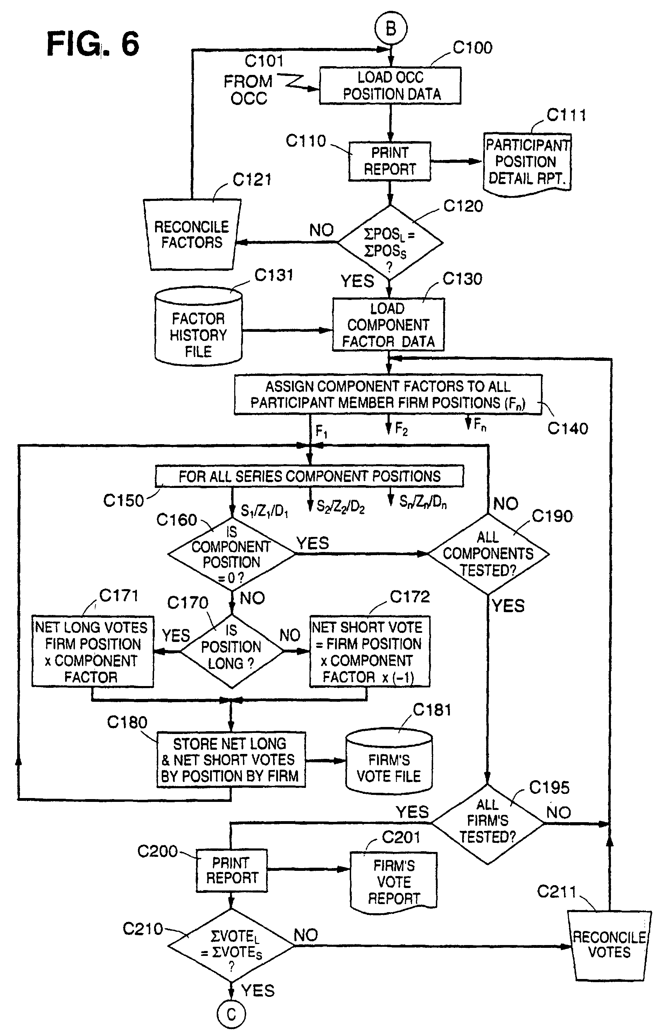

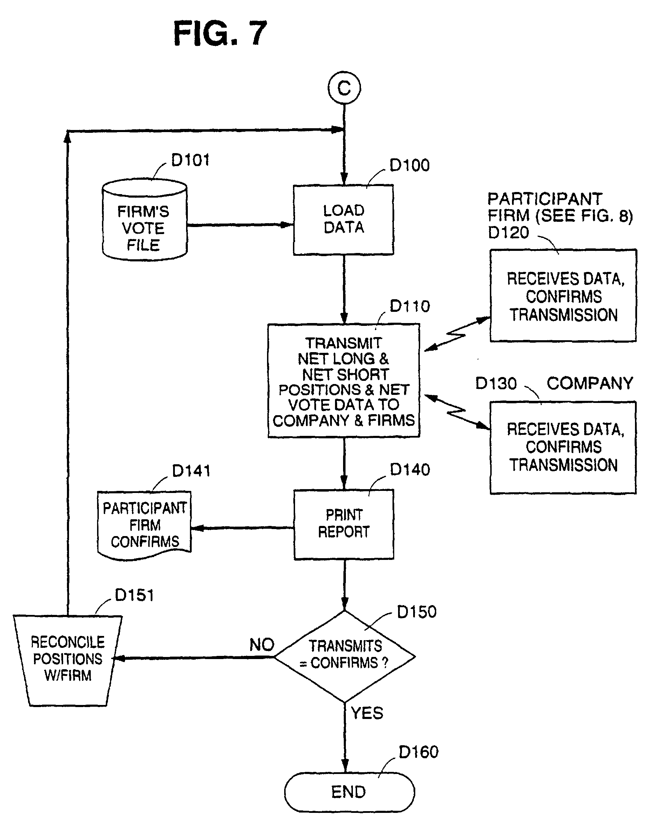

The ASPC computer next apportions the net long and net short votes among the holders of record identified by OCC (as will be described in more detail in connection with Fig. 6) and notifies all such OCC participants 8n of their net applicable long and/or short votes via a communication link 9n. While only one OCC participant 8n and one communication link 9n are represented in Fig. 3, it will be understood that a plurality of firms are in data communication with the ASPC computer 1. The total number of partial interests and corresponding votes apportioned among the OCC participants is then communicated over a link 10a to the company computer 3a, as will be explained more fully in connection with Fig. 7.

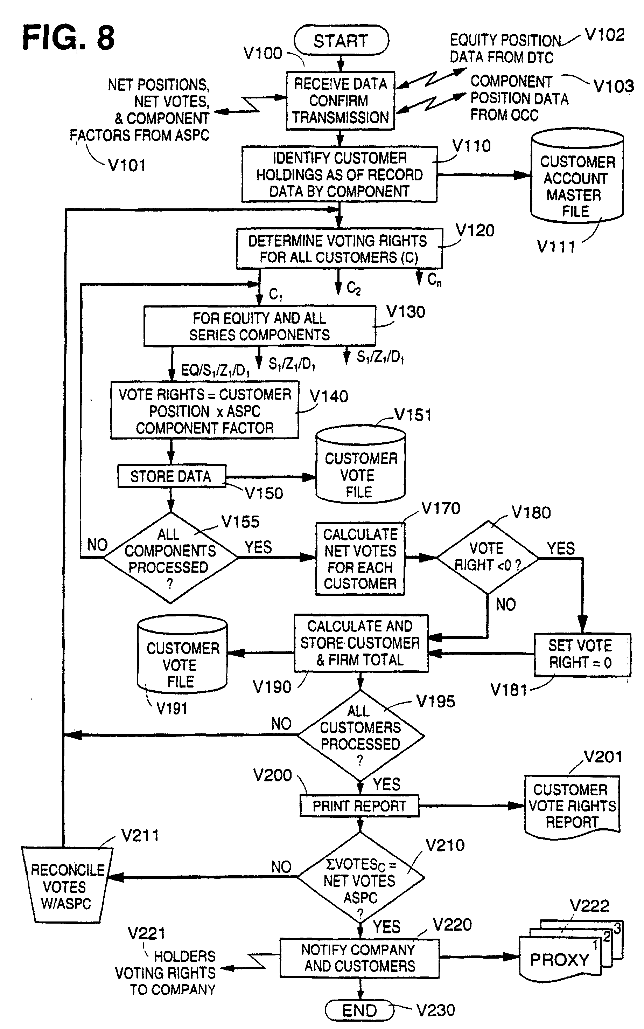

The OCC participant member's computer 8n additionally receives data directly from DTC's computer 11a via communication link 12a as well as the OCC computer 4a via communication link 13a to account properly for all its customers' holdings, including the ASPC-created components, and to apportion voting rights correctly among its customers for the specific vote solicitation, as will be explained more fully in connection with Fig. 8. Individual customers 14n are sent proxies by established means 15n and the total number of proxies (votes) distributed is reported to the company computer 3a as required over link 16a. From this point the standard vote solicitation procedures continue to be made by the company.

Referring now to Fig. 4, the ASPC CUSIP correlation computer will be described with reference to the flow chart. The ASPC computer includes a computer portion A100 for receiving an announcement of a shareholder vote to be taken by a company.

The ASPC computer includes means for manually entering pertinent data concerning the vote to initiate operation of the system. This data includes the equity CUSIP number, the record date and the due date.

A CUSIP file or memory storage means, for example a computer disk, A121 is loaded into a computer portion A120 for loading CUSIP component correlation data. This is done in order to match the equity with its multiple ZIPS$^{SM}$, SPECS$^{SM}$ and DIVS$^{SM}$ for each of the Annual and/or Termination Claim (TC$^{SM}$) Series (there being at least one series anticipated per year of maturity). The CUSIP correlation file contains a unique CUSIP number for every series component created by ASPC.

The ASPC computer comprises a portion A130 for expanding the equity CUSIP to all component CUSIPs. The computer portion matches the equity CUSIP with the component CUSIP numbers. These have been denoted $Z_1$, $S_1$ and $D_1$, respectively, for the ZIPS[SM], SPECS[SM] and DIVS[SM] of year $_1$, respectively, and continuing through year $_n$.

The ASPC computer includes a portion A140 for inquiring "are all components processed?" The portion A140 has a "no" output which is connected back to the input of portion A130 for repeating the matching of the equity CUSIP with the component CUSIP numbers until all the related component CUSIP numbers have been found for the requested equity CUSIP.

The "yes" output of the computer portion A140 is coupled to a "request member firm net positions by component" computer portion A150 which requests from OCC the identification of all OCC participant members holding any positions of any of the above mentioned component CUSIP numbers.

The OCC computer portion A160 receives the request and returns confirmation of the requested identification to ASPC computer portion A150. A "requests = confirms?" computer portion A170 insures that the data requested is consistent with the data confirmed. If not, computer portion A171 is means for manually reconciling any discrepancy and the OCC computer portions repeat their operation until the data requested is consistent with that which has been confirmed.

The "yes" output of the computer portion A170 is connected to the ASPC vote calculation computer portion represented in Fig. 5. The vote calculation computer portion includes a "load market price data" computer portion B100 for loading the market price data supplied from a service B101 into the system to begin the vote calculation. The pricing preferably is the closing market price as of the close on the stock of record date on any exchange where traded, or as determined by specific contract agreements.

The computer portion B100 is coupled to a "CUSIP = EQ, $Z_n$, $S_n$, $D_n$?" computer portion B110. Computer portion B110 determines that only CUSIP numbers with any claim to a voting right are considered (denoted as EQ, $Z_n$, $S_n$ and $D_n$ for the equity, ZIPS[SM], SPECS[SM] and DIVS[SM] for all series, respectively). All other CUSIP numbers are ignored, as indicated by the "no" output to B111 "ignore" computer portion from portion B110.

A "is price greater than 0?" computer portion B120 determines if a market price exists for a CUSIP (that is, its price is greater than zero dollars). The "yes" output of computer portion B120 is coupled for storage to the component price history file computer portion B121 which may be, for example, a computer storage disk.

The "no" output of the computer portion B120 is coupled to a "calculate: price $= \frac{bid + asked}{2}$" computer portion B130. If any equity or component is not traded on a given day (that is, its price is either absent or zero), computer portion B130 calculates its value by determining the mean of the bid and asked prices. This computed value is stored in the component price history file B121.

The output of computer portion B130 is coupled to a "separate components by series (years)" computer portion B140. In order to establish component voting rights, computer portion B140 groups all components by series (that is, by Termination Date (TD[SM]) and/or Termination Claim (TC[SM]) in which they mature). The outputs of computer portions B140 are coupled by year, that is, $YR_1$, $YR_2$ ... $YR_n$ to computer portion B150 "calculate, factors for equity (EQ) & all series components: SPECS[SM] (S), ZIPS[SM] (Z), DIVS[SM] (D)," computer portion B150. Within each series, the computer portion B150 segregates the individual components so that unique component factors can be calculated for each. A "factor EQ = 1.0" computer portion B160 sets the component factor for the equity at 1.0

$$A \text{ "factor } S_n = \frac{\text{market price } S_n}{\Sigma \text{ market prices } (S_n + Z_n + D_n)}\text{"}$$

computer portion B170 determines the component factor for the SPECS[SM], for the year$_n$ by dividing the market price of the SPEC[SM]$_n$ by the sum of the market prices for each of the ZIPS[SM], SPECS[SM] and DIVS[SM] for the same year$_n$.

$$A \text{ "factor } Z_n = \frac{\text{market price } Z_n}{\Sigma \text{ market prices } (S_n + Z_n + D_n)}\text{"}$$

computer portion B180 determines the component factor for the ZIPS[SM] for the year$_n$ by dividing the market price of the ZIPS[SM]$_n$ by the sum of the market prices for each of the ZIPS[SM], SPECS[SM] and DIVS[SM] for the same year$_n$.

$$A \text{ "factor } D_n = \frac{\text{market price } D_n}{\Sigma \text{ market prices } (S_n + Z_n + D_n)}\text{"}$$

determines the component factor for the DIVS[SM] for the year$_n$ by dividing the market price of the DIVS[SM]$_n$ by the sum of the market prices for each of the ZIPS[SM], SPECS[SM] and DIVS[SM] for the same year$_n$.

A "store component factors" computer portion B200 then stores the component factors in a factor history file B201, which may be a computer disk.

The computer portion B200 is also coupled to an "all CUSIPS processed?" computer portion B210, having a "no" output coupled to the input of the B140 computer portion for continuing the operation of the computer until all CUSIPS eligible for voting rights have been calculated and stored.

The "yes" output of the computer portion B210 is coupled to a print report computer portion B220 for printing a component factor report B221, to allow inspection of the data.

As a system control check, a computer portion "$\Sigma (s_n + z_n + d_n) = 1.0$?" computer portion B230 has a "no" output coupled to a "reconcile factors" computer portion B231, which is coupled to the input of computer portion B140. The factors are manually reconciled in computer portion B231, adjustments are made and the computer operation is repeated until the sum equals 1.0. The computer cannot continue its operation until this condition is met.

The "yes" output of the computer portion B230 is coupled to the vote apportioning computer portion of ASPC, represented in Fig. 6.

Referring now to Fig. 6, a "load OCC position data" computer portion C100 is coupled to the OCC computer C101 for loading the net OCC member firm positions into the system. A "print report" computer portion C110 prints a report which may be entitled "OCC participant position detail report" (C111) to allow for inspection of the data. A "$\Sigma \text{ position}_L = \Sigma \text{ position}_s$?" computer portion C120 is provided for checking whether the sum of the long positions for all participants equals the sum of the short positions of all participants. If not, the "no" output of computer portion C120 is coupled to a "reconcile positions" computer portion C121 for manually investigating and making adjustments which is then coupled to the input of the computer portion C100. The system check is repeated until the two sums are equal. The computer cannot continue its operation until this condition is met.

The factor history file C131 is the same factor history file as factor history file B201 for storing the component factors. The factor history file C131 is coupled to a "load component factor data" computer portion C130 to which the "yes" output of computer portion C120 is applied. An "assign component factors to all participant member firm positions ($F_n$)" computer portion C140 is coupled to the output of the computer portion C130 for assigning component factors to all participant positions beginning by reading the data for the first OCC participant member firm ($F_1$).

A computer portion "for all series component positions" computer portion C150 matches each participant member firm's position against the corresponding component factors for that participant's position (denoted as $Z_n$, $S_n$ and $D_n$ for the ZIPS$^{SM}$, SPECS$^{SM}$ and DIVS$^{SM}$ for all series, respectively). A "is firm position = 0?" computer portion C160 determines whether the participant maintains a position for a particular component. If the participant does maintain a position (that is, his position is not equal to zero), the vote apportioning system continues its operation. If the participant does not maintain a position for a particular component (that is, his position is either absent or equal to zero), the "yes" output of the computer portion C160 continues the search as an input to computer portion C140 for subsequent components.

The "no" output of the computer portion C160 is coupled to a "is position long?" computer portion C170. The "yes" output of the computer portion C170 is applied to a "net long votes firm position times component factor" computer portion C171 for multiplying the long position by the ASPC component factor.

If the position is short, the "no" output of computer portion C170 is applied to a "net short vote = firm position times component factor times (-1)" computer portion C172 for applying its output together with the output of computer portion C171 to a "store net long and net short votes by position by firm" computer portion C180 which applies its output to a firm's vote file memory storage means C181, which may be a computer disk. The processing continues with the next series components in C150.

The "yes" output of C160 is applied to an "All Components Tested?" computer portion C190. The "no" output goes to C150 until all series and components of a particular underlying stock have been processed. The "yes" output of C190 goes to the "All Firms Tested?" computer portion C195. The "no" output of C195 goes to C140 to assign component factors for the next participant member firm. The "yes" output of C195 is applied to a "print report" computer portion C200 which prints a report entitled "participant firm net vote report" as indicated by block C201. The output of computer portion C190 is coupled through the computer portion C200 to a "$\Sigma \text{ vote}_L = \Sigma \text{ votes}_s$?" computer portion C210 for determining as a system control check whether the sum of the votes for all long components equals the sum of votes for all short components. If not, the "no" output of computer portion C210 is coupled to a computer portion C211 wherein the votes are manually reconciled, adjustments made and the computer operation repeated. The computer operation cannot go forward until this condition is met.

Referring to Fig. 7 of the drawings, the OCC participant member firm's vote file D101, which may be a storage disk, is reloaded into the ASPC computer system at a "load data" computer portion D100. A "transmit net long and net short positions and net vote data to company and firms" computer portion D110 transmits by telecommunications the net long and net short positions and net vote data and component factor to the company as well as to each member firm maintaining any component position, as indicated by blocks D120 and D130.

The participant member firm's (D120) computer receives the data and returns confirmation of such to ASPC. This data should be in complete agreement with daily positions as reported by OCC and confirmed with the participant. As indicated by block D130, the company computer similarly receives the position and vote data and confirms such to the ASPC computer.

A "print report" computer portion D140 prints a report entitled "the participant firm confirmation report" D141 to allow for inspection of the data. A "transmits equal confirms?" computer portion D150 has a "no" output coupled to a "reconcile positions with firm" computer portion D151 for reconciling the discrepancy if the data transmitted does not agree with the confirmation for the participant firm. The computer repeats this operation until the two positions agree. The "yes" output of computer portion D150 completes the ASPC computer data processing. At this point the standard proxy solicitation process becomes operative.

Referring now to Fig. 8, the OCC participant member firm computer comprises a "receive data, confirm transmission" computer portion V100 which responds to the component factors and net long and net short vote position transmitted by ASPC and sends the confirmation of such to ASPC V101. The participant member firm also receives and reconciles position data from OCC V103 and DTC V102. An "identify customer holdings as of record date by component" computer portion V110 accesses the customer account master file V111, which may be a computer storage disk, in order to identify customers holding any of the relevant components (as identified by their CUSIP numbers) as of the assigned record date.

A "determine voting rights for all customers (C)" computer portion V120 searches each customer file (denoted $C_1$ through $C_n$) to identify component holders.

A "for equity and all series components" computer portion V130 considers only CUSIP numbers with any claim to a voting right (denoted as EQ, $Z_n$, $S_n$ and $D_n$) for the equity, ZIPS$^{SM}$, SPECS$^{SM}$ and DIVS$^{SM}$ for all series, respectively. As an eligible component is found, computer portion "vote right = customer position times ASPC component factor" computer portion V140 establishes the customer's voting right by multiplying the position by the ASPC component factor.

A "store data" computer portion V150 stores each such position in the participant member firm's customer vote file (V151), which may be a computer disk.

An "all components processed?" computer portion V155 has a "no" output connected to the input of computer portion V130 to repeat the computer operations until all components have been processed for a customer. The "yes" output of computer portion V155 is coupled to a "calculate net votes for each customer" computer portion V170 which tabulates the net number of votes assignable to each customer.

If the customer's net vote right is negative (less than zero), the "vote right less than 0?" computer portion V180 causes the value to be retained for reference but the eligible vote right is set to zero. This could occur when an investor is short more component votes than he is long shares of the underlying stock.

The "yes" output of computer portion V180 is coupled to a "set vote right = 0" computer portion V181 which has its output applied to a "calculate and store firm total" computer portion V190. The computer portion V190 calculates and stores the total eligible votes for each customer and accumulates a total firm vote. This output is applied to a customer vote file V191, which may be a computer disk. The "no" output of computer portion V195 "All Customers processed" is coupled back to computer portion V120 to get the next customer's position.

The "yes" output of V195 is coupled to a "print report" computer portion V200 prints the customer vote rights report V201, to allow for inspection of the data.

The output of V190 is coupled through V200 to a "$\Sigma$ votes$_c$ = net votes ASPC?" V210 which as a system control check determines whether the sum of the eligible customer votes equals the net votes assigned by ASPC. If not, any discrepancies are applied to computer portion V211 "reconcile votes with ASPC" where any discrepancies are manually reconciled by the participant firm, adjustments are made and the computer operation repeats until the amounts are equal. The computer operation cannot go forward until this condition is met.

The "yes" output of the computer portion V210 is applied to a "notify company and customers" computer portion V220, for advising the company of each participant's component holders and their component voting rights, as indicated by block V221. Proxies are then sent to individual customers, as indicated by V222.

Standard proxy solicitation then is made by the company.

## II. Equity Mode

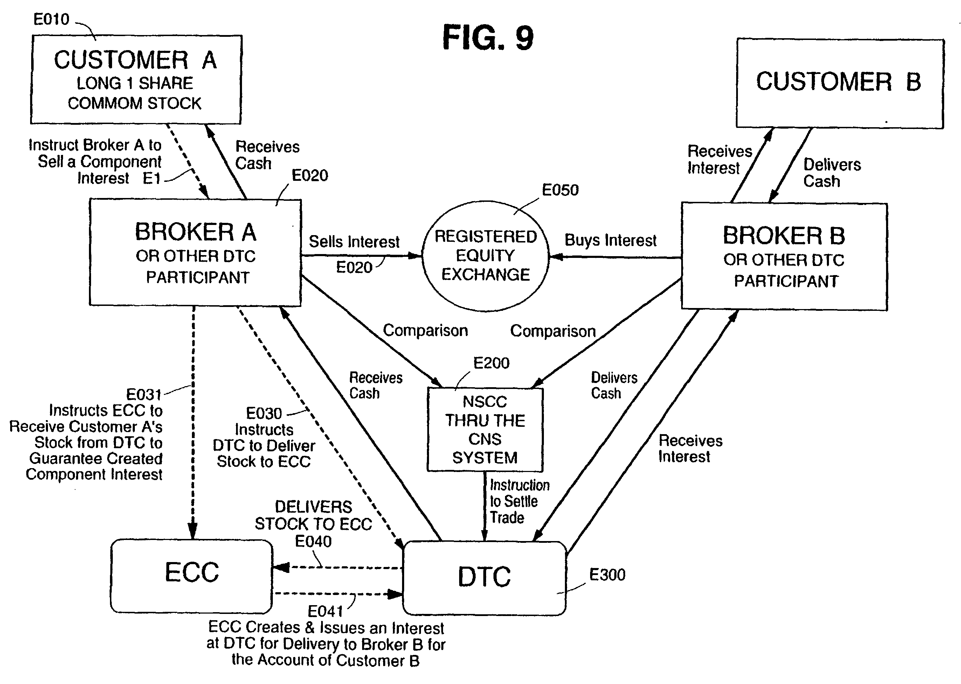

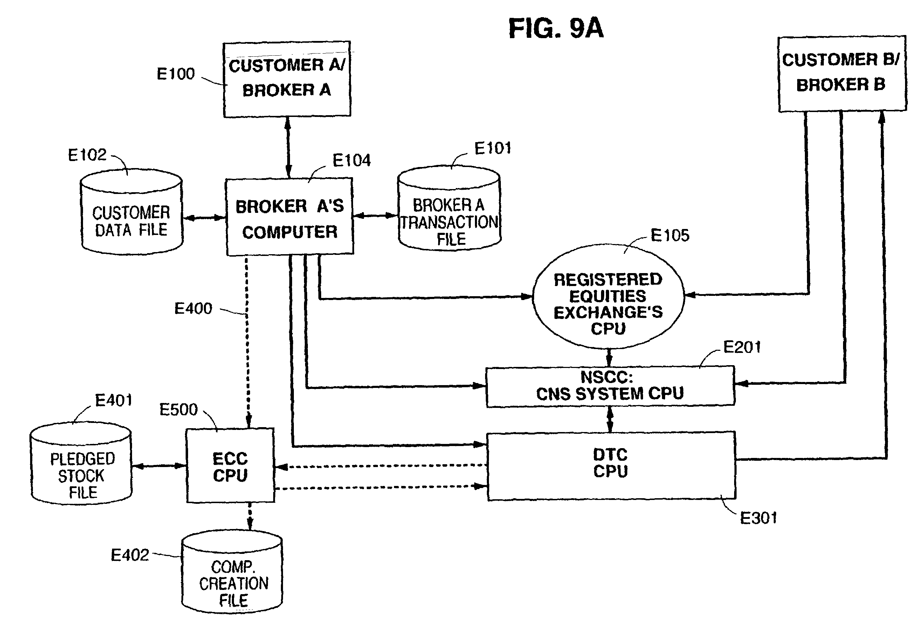

Referring now to Fig. 9 of the drawings, there is represented diagrammatically a transaction involved in the creation and trading in the equity mode of one or more DIVS$^{SM}$, SPECS$^{SM}$ or ZIPS$^{SM}$. As represented in Fig. 9, a system for creating stock interests, each of which represents an interest in a share of stock of an entity, comprises computer input and memory means for allocating to a customer's account stock interests that are any of:

(a) a component interest indicative of the right to receive a partial share of stock equal in value to a stipulated price or a full share of stock of the entity on a predetermined future date, whichever is the lesser value;
(b) a component interest indicative of the right to receive a partial share of stock equal in value to the appreciation, if any, of the share of stock above the stipulated price on the predetermined future date;
(c) a component interest indicative of the right to receive dividends declared with respect to given dates which are prior to the predetermined future date and which goes to zero value at the predetermined future date. The system also includes computer memory means for recording the sale from the customer's account of stock interests that are any of components (a), (b), (c), as described more fully with reference to Fig. 9a.

As represented diagrammatically in Fig. 9, Box E010, Customer A is long one share of common stock, by which it is meant that he owns common stock carried in his account at Broker A (Box E020). As represented by arrow E1, Customer A, represented by Box E010, instructs Broker A to sell and create one or more component interests in the underlying common stock for DIVS$^{SM}$, ZIPS$^{SM}$ or SPECS$^{SM}$.

The sale by Customer A, through Broker A, is done on a Registered Equities Exchange E050, authorized by ASPC to trade component interests. This exchange preferably has standardized contract specifications arranged in conjunction with the owner of the primary computer (ASPC). As indicated by arrow E030, Broker A instructs DTC to deliver Customer A's stock to ECC against creation of a sold component. At the same time, as indicated by arrow E031, Broker A instructs ECC to receive Customer A's pledged stock from DTC and to deliver to DTC the created component that Customer A has sold. As represented by arrow E040, DTC delivers stock to ECC in accordance with Broker A's instructions. As indicated by arrow E041, upon delivery of stock from DTC to ECC, ECC delivers components to DTC in accordance with instructions from Broker A.

The remaining steps in the creation mode are normal equity settlement steps, as indicated in the schematic flow diagram of Fig. 9. Customer B, through Broker B buys the component interest at the Registered Equity Exchange E050. Broker B delivers cash to DTC and receives the component interest from DTC and Customer B receives the interest and delivers cash to Broker B. Comparisons are made by Broker A and Broker B at NSCC through the continuous net settlement (CNS) system.

Referring now more particularly to Fig. 9a, Customer A instructs Broker A (Box E100) to sell and create a component interest in common stock on a Registered Equities Exchange, authorized to trade component interests. Customer A establishes an account with Broker A and deposits shares of a company's common stock in his account with Broker A. Broker A's computer E104 then stores information about Customer A and his stock position in a magnetic memory disk customer data file E102 in his computer system E104. Customer A instructs Broker A to sell and create a component interest in common stock on a Registered Equities Exchange. Broker A's computer E104 communicates with the Registered Equity Exchange's CPU E105.

Broker A's computer E104 queries his account information disk file E102 to ascertain that Customer A has the underlying common stock in his account for the component being sold and created.

Assuming the underlying common stock is there, Broker A enters into his computer transaction file E101 an order to sell the component. The floor traders for each customer, upon completion of the trade enter the trade in each of their computer systems and the specialist enters information about the trade into the exchange's computer exchange transaction file, which may be stored in a memory storage disk. Customer A's account on the Broker's computer system is updated when, upon completion of the trade, Broker A enters the trade into the Broker A transaction file E101 and updates the Customer Data File E102 (both of which may be magnetic memory storage disks) to reflect the sale of a component interest against a long position in Customer A's account. Customer A's account on the Broker's computer system is updated to show that he is short the component sold when confirmation of the sale is received from the registered equity exchange. Each broker's computer system then generates reports for Broker A and Broker B, indicating the results of the trade. Then the brokers report the trade to their respective customers.

For comparison purposes, Broker A's computer and Broker B's computer transmit data about the trade to NSCC's continuous net settlement (CNS) system CPU (Box E201). This information is transmitted to DTC's CPU computer system E301.

Broker A's computer E104 instructs DTC's CPU (Box E301) to transfer shares of common stock from Broker A's participant account to ECC against delivery of the sold component interest. ECC then holds the stock in a pledged account it creates for the benefit of Broker A, as collateral for the sold component.

Broker A's computer instructs ECC's CPU E500 to receive from DTC's CPU common equity stock and create and deliver a component interest to DTC.

ECC's CPU creates an entry in a pledged stock file (E401) which may be a magnetic memory storage disk and creates an entry in the component creation file E402 in anticipation of delivery of stock from DTC.

DTC's CPU E301 delivers the common stock to ECC's CPU E500 and receives back the sold and created component interest. This stock stays in ECC's account at DTC as collateral against the sold and created components. ECC's pledged stock file E401 and component creation file E402, which may be a magnetic memory storage disk, are updated to reflect the receipt of stock and delivery of the sold and created component. Specifically, the ECC component creation file E402 registers the component which Broker A has sold and created.

For each creation sale of a component, ECC's computer system causes a component interest to be created in the computer record of the buying broker's account to complete the trade. After the close of trading, ECC's computers transmit a report showing the net change in position for each component that each broker traded that day. The broker's computer system reconciles this net change with the trades the broker made that day. When this is finished, the individual customer's account information, stored in the broker's computer system, such as Broker A's transaction file E101, which may be stored in a magnetic memory storage disk, is updated to reflect the trades the customers made that day. Each day DTC and the participant member firms reflect the change in value of the net positions they have in component interests at ECC and DTC.

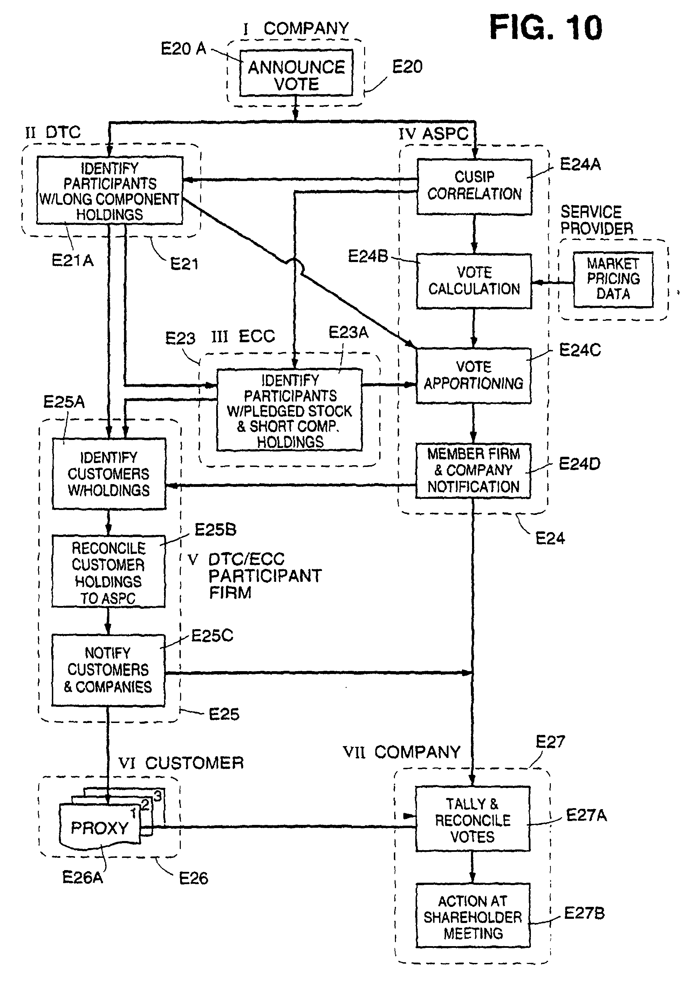

Referring now to Fig. 10, a company E20 utilizes computer means E20A for announcing its intent to solicit votes from its stockholders. The computer means E20A communicates with computer means E21A for notifying participant members of Depository Trust Corporation (DTC) E21 which, on behalf of its participant members may serve as the repository for the company's equity. As it learns of shareholder voting matters, the computer means E21A disseminates this information to its participants. For example, the DTC computer means E21A notifies ECC E23 and the DTC/ECC participant firm E25.

The DTC participant firm E25 has computer means E25A for identifying customer holdings, computer means E25B for reconciling customer holdings (long and short) and including component interest holdings to ASPC and computer means E25C for notifying customers and the company.

DTC E21 maintains records that identify all participant holders with long component holdings of ZIPS$^{SM}$, SPECS$^{SM}$ and DIVS$^{SM}$. DTC E21 utilizes computer means E21A for identifying participants with long component holdings.

An Equities Clearing Corporation (ECC) E23 maintains records that identify all participants with pledged stock and short component holdings. ECC utilizes computer means E23A for identifying participant members with pledged stock and short component holdings.

ASPC E24, owner of the primary computer, utilizes computer means E24A for CUSIP correlation which is necessary to properly apportion component-holder voting rights. ASPC requests from ECC via computer means E23A information that identifies participant holders of record of pledged stock and short positions for specified components pertinent to a shareholder vote. ASPC also requests from DTC via computer means E21A information that identifies participant holders of record of long positions for specified components pertinent to a shareholder vote.

ASPC E24, the owner of the primary computer, has computer means for performing four basic tasks in order to establish the voting rights for eligible component-holders:

> 1. CUSIP correlation computer means E24A for correlating the equity at issue to the corresponding created components: SPECS$^{SM}$, ZIPS$^{SM}$ and DIVS$^{SM}$;
> 2. Vote calculation computer means E24B for calculating the proper voting rights for each of these components;
> 3. Vote apportioning computer means E24C for apportioning the correct number of votes to each DTC/ECC participant (as identified by DTC/ECC) for each component;
> 4. Computer means E24D notifies all DTC/ECC participant members maintaining component positions of their voting rights.

The DTC/ECC participant firm E25, upon receipt of the voting information utilizes a similar computer system to that of ASPC to further apportion the net long and net short vote among its customers as previously described. Ultimately proxies are forwarded to all eligible holders E26 identifying the customer's detailed, as well as net, voting rights.

The customer E26 votes and returns a proxy E26A to the company E27. The company E27 utilizes computer means E27A for tallying and reconciling all votes submitted, and as indicated by box E27B, takes the appropriate corresponding action at its shareholder meeting.

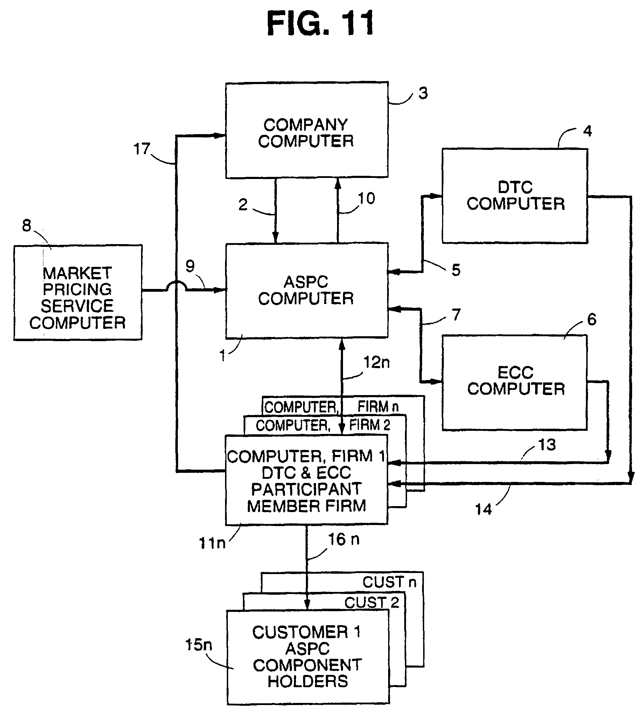

Referring now to Fig. 11 of the drawings, a company computer (designated in Fig. 11 by its central processing unit CPU) 3 or public channels 2 enters relevant information concerning a stockholder vote into the ASPC computer 1. This information indicates that company 3 wishes to solicit votes from its stockholders.

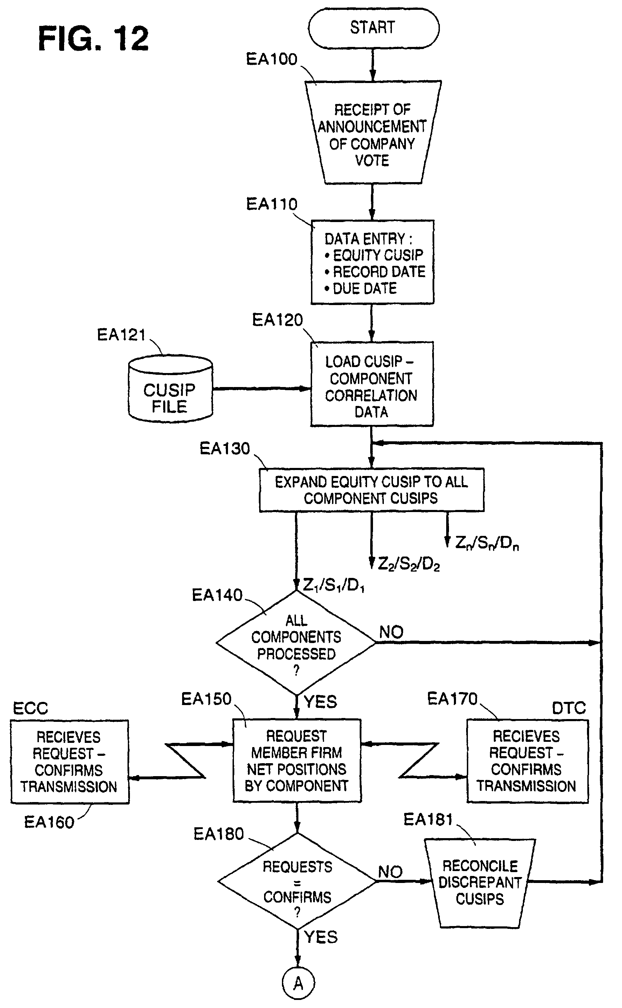

On the stock of record date the ASPC computer 1 initiates a request for data from the DTC computer 4 in order to identify member firms holding positions of any components. On the stock of record date the ASPC computer 1 also initiates a request for data from the ECC computer 6 over a communication link 7. This is done in order to identify member firms holding positions of pertinent components. This will be more fully explained in connection with Fig. 12.

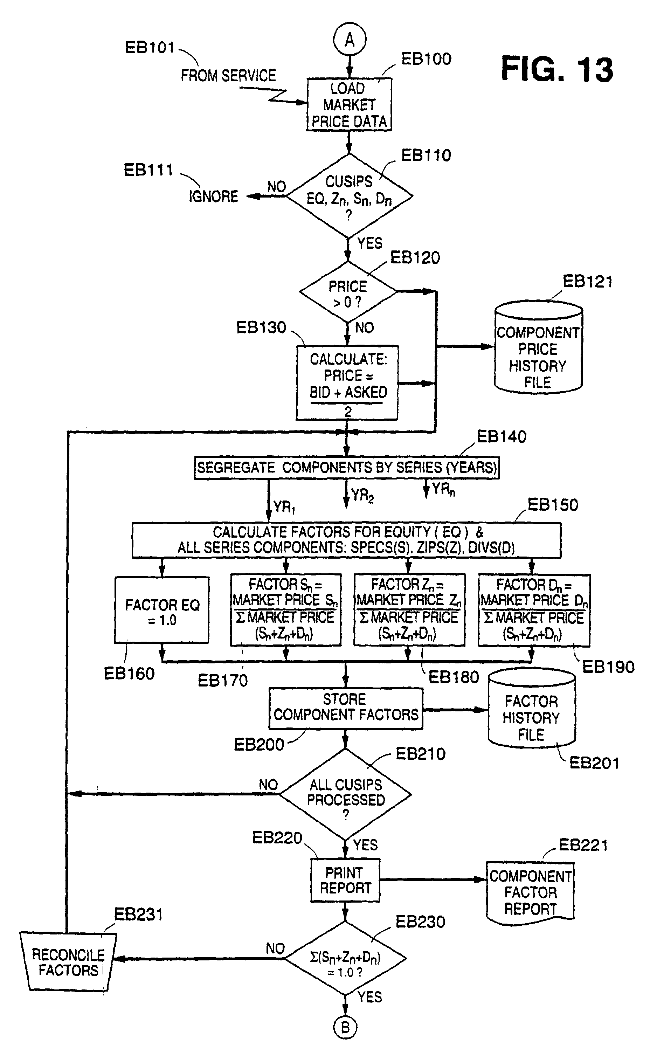

The ASPC computer 1 then calculates the pro rata voting right applicable to each of the components (as more fully explained in connection with Fig. 13). In order to accomplish this the ASPC computer receives market pricing data from an external market pricing service computer 8 by means of an electronic medium communicated through a communication link 9.

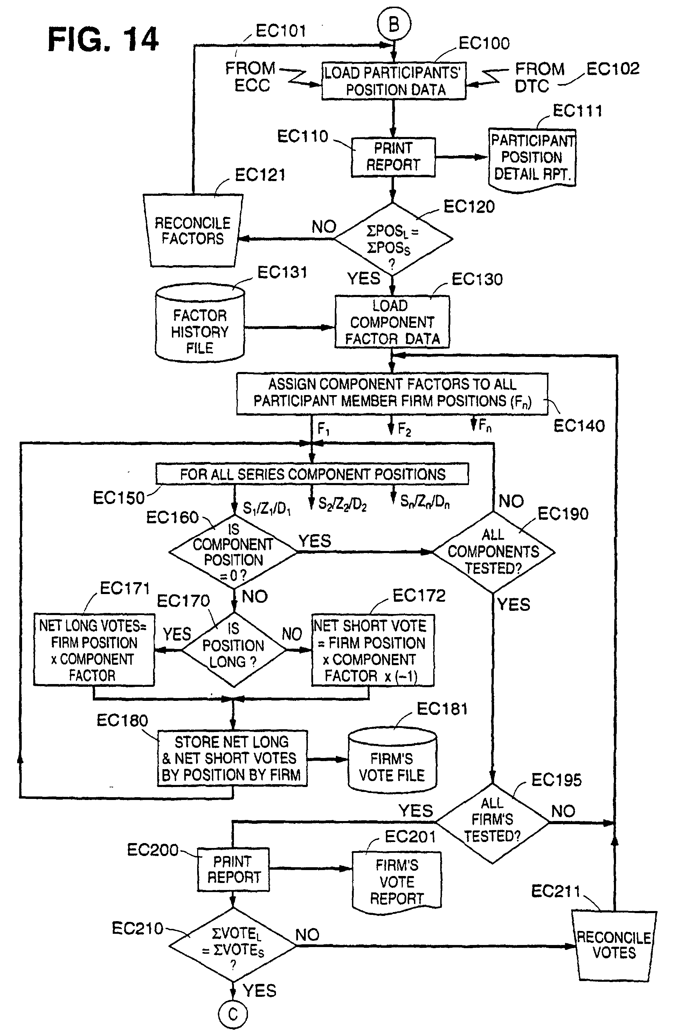

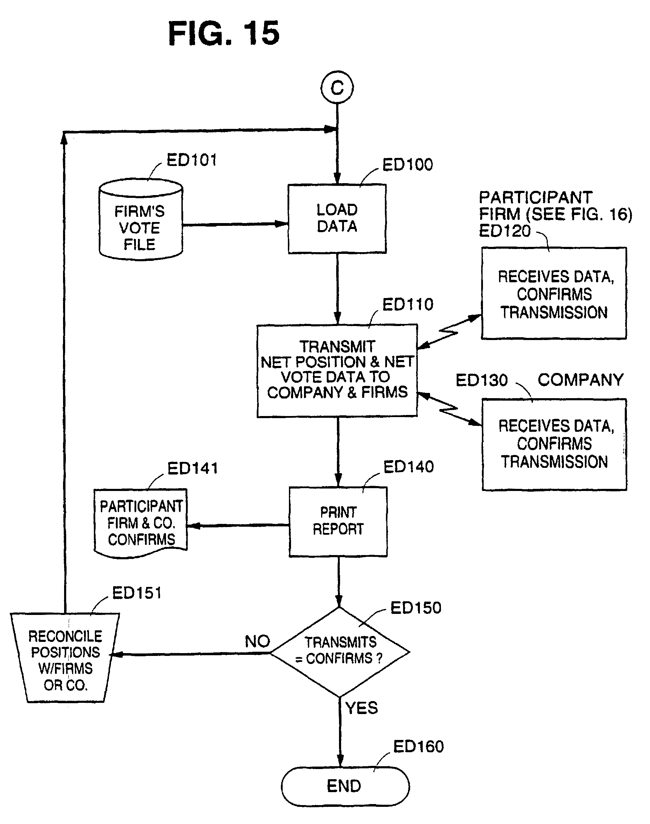

The ASPC computer next apportions the long and short votes among the holders of record identified by DTC and ECC (as will be described in more detail in connection with Fig. 14) and notifies all such DTC and ECC participants 11n of their net applicable long and/or short votes via communication links 12n, 13, and 14. While only one DTC and ECC participant 11n and one communication link from the DTC and from the ECC computers are represented in Fig. 11, it will be understood that a plurality of firms are in data communication with the ASPC computer 1. The total number of partial interests and corresponding votes among the DTC and ECC participants is then communicated over a link 10 to the company computer 3 as will be more fully explained in connection with Fig. 15.

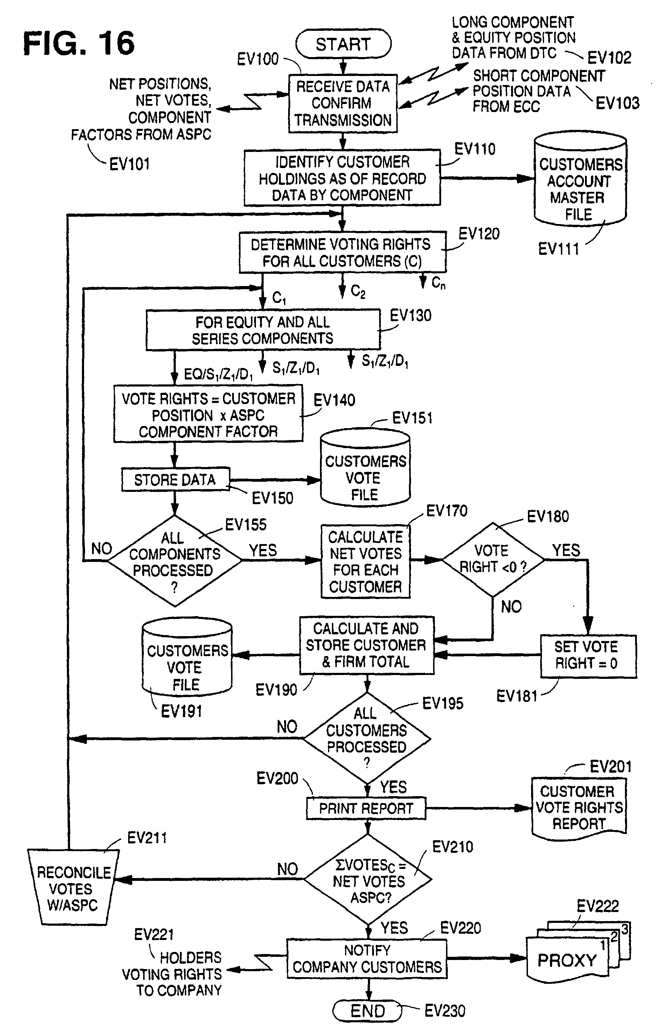

The DTC and ECC participant members' computer 11n additionally receives data directly from DTC's computer 4 via communication link 14, as well as the ECC computer 6, via communication link 13 to account properly for all its customers' holdings, including the ASPC-created components, and to apportion voting rights correctly among its customers for the specific vote solicitation, as will be explained more fully in connection with Fig. 16. Individual customers 15n are sent proxies by established means 16n and the total number of proxies (votes) distributed is reported to the company computer 3 as required over link 17. From this point the standard vote solicitation is made by the company.

Referring now to Fig. 12, the ASPC CUSIP correlation computer will be described with reference to the flow chart. The ASPC computer includes a computer portion EA100 for receiving an announcement of a shareholder vote to be taken by a company.

The ASPC computer includes means for manually entering pertinent data concerning the vote to initiate operation of the system. This data includes the equity CUSIP number, the record date and the due date.

A CUSIP file or memory storage means, for example a computer disk, EA121 is loaded into a computer portion EA120 for loading CUSIP component correlation data. This is done in order to match the equity with its multiple ZIPS$^{SM}$, SPECS$^{SM}$ and DIVS$^{SM}$ for each of the Annual and/or Termination Claim (TC$^{SM}$) Series (there being at least one series anticipated per year of maturity). The CUSIP correlation file contains a unique CUSIP number for every series component created by ASPC.

The ASPC computer comprises a portion EA130 for expanding the equity CUSIP to all component CUSIPs. The computer portion matches the equity CUSIP with the component CUSIP numbers. These have been denoted $Z_1$, $S_1$ and $D_1$, respectively, for the ZIPS$^{SM}$, SPECS$^{SM}$ and DIVS$^{SM}$ of year $_1$, respectively, and continuing through year $_n$.

The ASPC computer includes a portion EA140 for inquiring "are all components processed?" The portion EA140 has a "no" output which is connected back to the input of portion A130 for repeating the matching of the equity CUSIP with the component CUSIP numbers until all the related component CUSIP numbers have been found for the requested equity CUSIP.

The "yes" output of the computer portion EA140 is coupled to a "request member firm net positions by component" computer portion EA150 which requests from OCC the identification of all OCC participant members holding any positions of any of the above mentioned component CUSIP numbers.

The ECC computer portion EA160 and the DTC computer portion EA170 receive the request and return confirmation of the requested identification to ASPC computer portion EA150. A "requests = confirms?" computer portion EA180 insures that the data requested is consistent with the data confirmed. If not, computer portion EA181 is means for manually reconciling any discrepancy and the ECC and DTC computer portions repeat their operation until the data requested is consistent with that which has been confirmed.

The "yes" output of the computer portion EA180 is connected to the ASPC vote calculation computer portion represented in Fig. 13. Referring now to Fig. 13, the vote calculation computer portion includes a "load market price data" computer portion EB100 for loading the market price data supplied from a service EB101 into the system to begin the vote calculation. The pricing preferably is the closing market price as of the close on the stock of record date on any exchange where traded, or as determined by specific contract agreements.

The computer portion EB100 is coupled to a "CUSIP = EQ, $Z_n$, $S_n$, $D_n$?" computer portion EB110. Computer portion EB110 determines that only CUSIP numbers with any claim to a voting right are considered (denoted as EQ, $Z_n$, $S_n$ and $D_n$ for the equity, ZIPS$^{SM}$, SPECS$^{SM}$ and DIVS$^{SM}$ for all series, respectively). All other CUSIP numbers are ignored, as indicated by the "no" output to EB111 "ignore" computer portion from portion EB110.

A "is price greater than 0?" computer portion EB120 determines if a market price exists for a CUSIP (that is, its price is greater than zero dollars). The "yes" output of computer portion EB120 is coupled for storage to the component price history file computer portion EB121 which may be, for example, a computer storage disk.

The "no" output of the computer portion EB120 is coupled to a "calculate: price = $\frac{\text{bid} + \text{asked}}{2}$" computer portion EB 130. If any equity or component is not traded on a given day (that is, its price is either absent or zero), computer portion EB130 calculates its value by determining the mean of the bid and asked prices. This computed value is stored in the component price history file EB121.

The output of computer portion EB130 is coupled to a "separate components by series (years)" computer portion EB140. In order to establish component voting rights, computer portion EB140 groups all components by series (that is, by Termination Date (TD$^{SM}$) and/or Termination Claim (TC$^{SM}$) in which they mature). The outputs of computer portions EB140 are coupled by year, that is, $YR_1$, $YR_2$ ... $YR_n$ to computer portion EB150 "calculate factors for equity (EQ) & all series components: SPECS$^{SM}$ (S), ZIPS$^{SM}$ (Z), DIVS$^{SM}$ (D)," computer portion EB150. Within each series, the computer portion EB150 segregates the individual components so that unique component factors can be calculated for each. A "factor EQ = 1.0" computer portion EB160 sets the component factor for the equity at 1.0.

$$\text{A "factor } S_n = \frac{\text{market price } S_n}{\Sigma \text{ market prices } (S_n + Z_n + D_n)}\text{"}$$

computer portion EB170 determines the component factor for the SPECS$^{SM}$, for the year$_n$ by dividing the market price of the SPEC$^{SM}_n$ by the sum of the market prices for each of the ZIPS$^{SM}$, SPECS$^{SM}$ and DIVS$^{SM}$ for the same year$_n$.

$$A \text{ "factor } Z_n = \frac{\text{market price } Z_n}{\Sigma \text{ market prices } (S_n + Z_n + D_n)}\text{"}$$

computer portion EB180 determines the component factor for the ZIPS$^{SM}$ for the year$_n$ by dividing the market price of the ZIPS$^{SM}_n$ by the sum of the market prices for each of the ZIPS$^{SM}$, SPECS$^{SM}$ and DIVS$^{SM}$ for the same year$_n$.

$$A \text{ "factor } D_n = \frac{\text{market price } D_n}{\Sigma \text{ market prices } (S_n + Z_n + D_n)}\text{"}$$

computer portion EB190 determines the component factor for the DIVS$^{SM}$ for the year$_n$ by dividing the market price of the DIVS$^{SM}_n$ by the sum of the market prices for each of the ZIPS$^{SM}$, SPECS$^{SM}$ and DIVS$^{SM}$ for the same year$_n$.

A "store component factors" computer portion EB200 then stores the component factors in a factor history file EB201, which may be a computer disk.

The computer portion EB200 is also coupled to an "all CUSIPS processed?" computer portion EB210, having a "no" output coupled to the input of the EB140 computer portion for continuing the operation of the computer until all CUSIPS eligible for voting rights have been calculated and stored.

The "yes" output of the computer portion EB210 is coupled to a print report computer portion EB220 for printing a component factor report EB221, to allow inspection of the data.

As a system control check, a computer portion "$\Sigma (S_n + Z_n + D_n) = 1.0$?" computer portion EB230 has a "no" output coupled to a "reconcile factors" computer portion EB231, which is coupled to the input of computer portion EB140. The factors are manually reconciled in computer portion EB231, adjustments are made and the computer operation is repeated until the sum equals 1.0. The computer cannot continue its operation until this condition is met.

The "yes" output of the computer portion B230 is coupled to the vote apportioning computer portion of ASPC, represented in Fig. 14.

Referring now to Fig. 14, a "load participants position data" computer portion EC100 is coupled to the ECC and DTC computers for loading the net ECC and DTC member firm positions into the system. A "print report" computer portion EC110 prints a report which may be entitled "DTC/ECC participant position detail report" (EC111) to allow for inspection of the data. A "$\Sigma \text{ position}_L = \Sigma \text{ position}_s$?" computer portion EC120 is provided for checking whether the sum of the long positions for all participants equals the sum of the short positions of all participants. If not, the "no" output of computer portion EC120 is coupled to a "reconcile positions" computer portion EC121 for manually investigating and making adjustments which is then coupled to the input of the computer portion EC100. The system check is repeated until the two sums are equal. The computer cannot continue its operation until this condition is met.

The factor history file EC131 is the same factor history file as factor history file EB201 for storing the component factors. The factor history file EC131 is coupled to a "load component factor data" computer portion EC130 to which the "yes" output of computer portion EC120 is applied. An "assign component factors to all participant member firm positions ($F_n$)" computer portion EC140 is coupled to the output of the computer portion EC130 for assigning component factors to all participant positions beginning by reading the data for the first DTC participant member firm ($F_1$).

A computer portion "for all series component positions" computer portion EC150 matches each participant member firm's position against the corresponding component factors for that participant's position (denoted as EQ, $Z_n$, $S_n$ and $D_n$ for the equity, ZIPS$^{SM}$, SPECS$^{SM}$ and DIVS$^{SM}$ for all series, respectively). A "is firm position = 0?" computer portion EC160 determines whether the participant maintains a position for a particular component. If the participant does maintain a position (that is, his position is not equal to zero), the vote apportioning system continues its operation. If the participant does not maintain a position for a particular component (that is, his position is either absent or equal to zero), the "yes" output of the computer portion EC160 continues the search as an input to computer portion EC140 for subsequent components.

The "no" output of the computer portion EC160 is coupled to a "is position long?" computer portion EC170. The "yes" output of the computer portion EC170 is applied to a "net long votes = firm position times component factor" computer portion EC171 for multiplying the long position by the ASPC component factor.

If the position is short, the "no" output of computer portion EC170 is applied to a "net short vote = firm position times component factor times (-1)" computer portion EC172 for applying its output together with the output of computer portion EC171 to a "store net long and net short votes by position by firm" computer portion EC180 which applies its output to a firm's vote file memory storage means EC181, which may be a computer disk. The processing continues with the next series components in EC150.

The "yes" output of EC160 is applied to an "All Components Tested?" computer portion EC190. The "No" output goes to EC150 until all series and components of a particular underlying stock have been processed. The "yes" output of EC190 goes to the "All Firms Tested?" computer portion EC195. The "no" output of EC195 goes to EC140 to assign component factors for the next participant member firm. The "yes" output of EC195 is applied to a "print report" computer portion EC200 which prints a report entitled "participant firm net vote report" as indicated by block EC201. The output of computer portion EC190 is coupled through the computer portion EC200 to a "$\Sigma$ vote$_L$ = $\Sigma$ votes$_s$?" computer portion EC210 for determining as a system control check whether the sum of the votes for all long components equals the sum of votes for all short components. If not, the "no" output of computer portion EC210 is coupled to a computer portion EC211 wherein the votes are manually reconciled, adjustments made and the computer operation repeated. The computer operation cannot go forward until this condition is met.

Referring to Fig. 15 of the drawings, the DTC participant member firm's vote file ED101, which may be a storage disk, is reloaded into the ASPC computer system at a "load data" computer portion ED100. A "transmit net position and net vote data to company and firms" computer portion ED110 transmits by telecommunications the net position and net vote data and component factor to the company as well as to each member firm maintaining any component position, as indicated by blocks ED120 and ED130.

The participant member firm's (ED120) computer receives the data and returns confirmation of such to ASPC. This data should be in complete agreement with daily positions as reported by DTC and confirmed with the participant. As indicated by block ED130, the company computer similarly receives the position and vote data and confirms such to the ASPC computer.

A "print report" computer portion ED140 prints a report entitled "the participant firm confirmation report" ED141 to allow for inspection of the data. A "transmits equal confirms?" computer portion ED150 has a "no" output coupled to a "reconcile positions with firm" computer portion ED151 for reconciling the discrepancy if the data transmitted does not agree with the confirmation for the participant firm. The computer repeats this operation until the two positions agree. The "yes" output of computer portion ED150 completes the ASPC computer data processing. At this point the standard proxy solicitation process becomes operative.

Referring now to Fig. 16, the DTC participant member firm computer comprises a "receive data, confirm transmission" computer portion EV100 which responds to the component factors and net long and net short vote position transmitted by ASPC and sends the confirmation of such to ASPC. The participant member firm also receives and reconciles long position data from DTC EV102 and short position data from ECC EV103. An "identify customer holdings as of record date by component" computer portion EV110 accesses the customer account master file EV111, which may be a computer storage disk, in order to identify customers holding any of the relevant components (as identified by their CUSIP numbers) as of the assigned record date.

A "determine voting rights for all customers (C)" computer portion EV120 searches each customer file (denoted $C_1$ through $C_n$) to identify component holders.

A "for equity and all series components" computer portion EV130 considers only CUSIP numbers with any claim to a voting right (denoted as EQ, $Z_n$, $S_n$ and $D_n$) for the equity, ZIPS$^{SM}$, SPECS$^{SM}$ and DIVS$^{SM}$ for all series, respectively. As an eligible component is found, computer portion "vote right = customer position times ASPC component factor" computer portion EV140 establishes the customer's voting right by multiplying the position by the ASPC component factor.

A "store data" computer portion EV150 stores each such position in the participant member firm's customer vote file (EV151), which may be a computer disk.

An "all components processed?" computer portion EV155 has a "no" output connected to the input of computer portion EV130 to repeat the computer operations until all components have been processed for a customer. The "yes" output of computer portion EV155 is coupled to a "calculate net votes for each customer" computer portion EV170 which tabulates the net number of votes assignable to each customer.

If the customer's net vote right is negative (less than zero), the "vote right less than 0?" computer portion EV180 causes the value to be retained for reference but the eligible vote right is set to zero. This could occur when an investor is short more component votes than he is long shares of the underlying stock.

The "yes" output of computer portion EV180 is coupled to a "set vote right = 0" computer portion EV181 which has its output applied to a "calculate and store firm total" computer portion EV190. The computer portion EV190 calculates and stores the total eligible votes for each customer and accumulates a total firm vote. This output is applied to a customer vote file EV191, which may be a computer disk. The "no" output of computer portion EV195 "All Customers Processed" is coupled back to computer portion EV120 to get the next customer's position.

The "yes" output of EV195 is coupled to a "print report" computer portion EV200 which prints the customer vote rights report EV201, to allow for inspection of the data.

The output of EV190 is coupled through EV200 to a "$\Sigma$ votes$_c$ = net votes ASPC?" which as a system control check determines whether the sum of the eligible customer votes equals the net votes assigned by ASPC. If not, any discrepancies are applied to computer portion EV211 "reconcile votes with ASPC" where any discrepancies are manually reconciled by the participant firm, adjustments are made and the computer operation repeats until the amounts are equal. The computer operation cannot go forward until this condition is met.

The "yes" output of the computer portion EV210 is applied to a "notify company and customers" computer portion EV220, for advising the company of each participant's component holders and their component voting rights, as indicated by EV221. Proxies are then sent to individual customers, as indicated by EV222.

III. Equity Forwards<sup>SM</sup> Mode

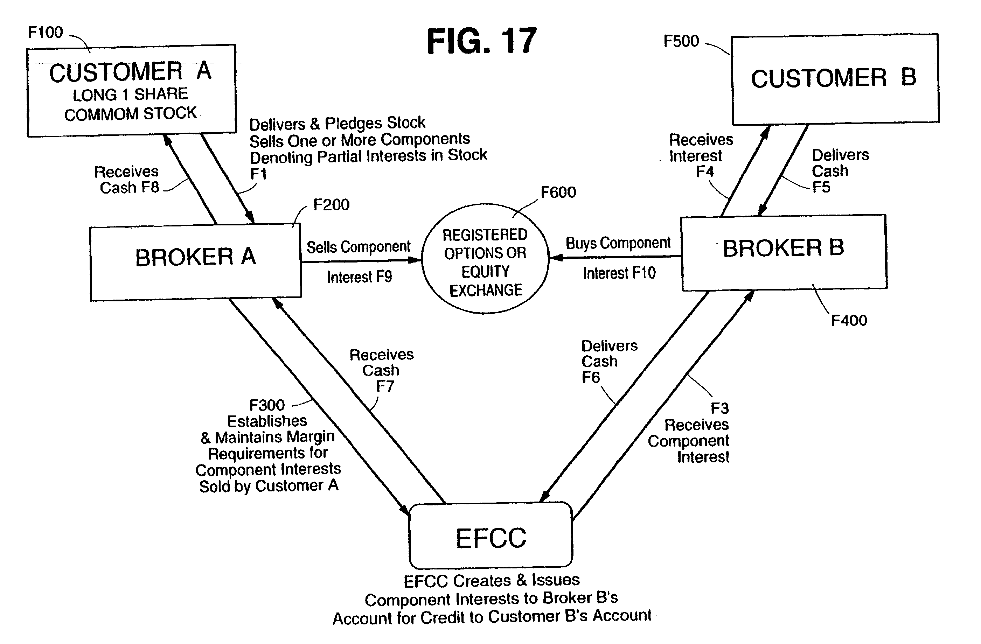

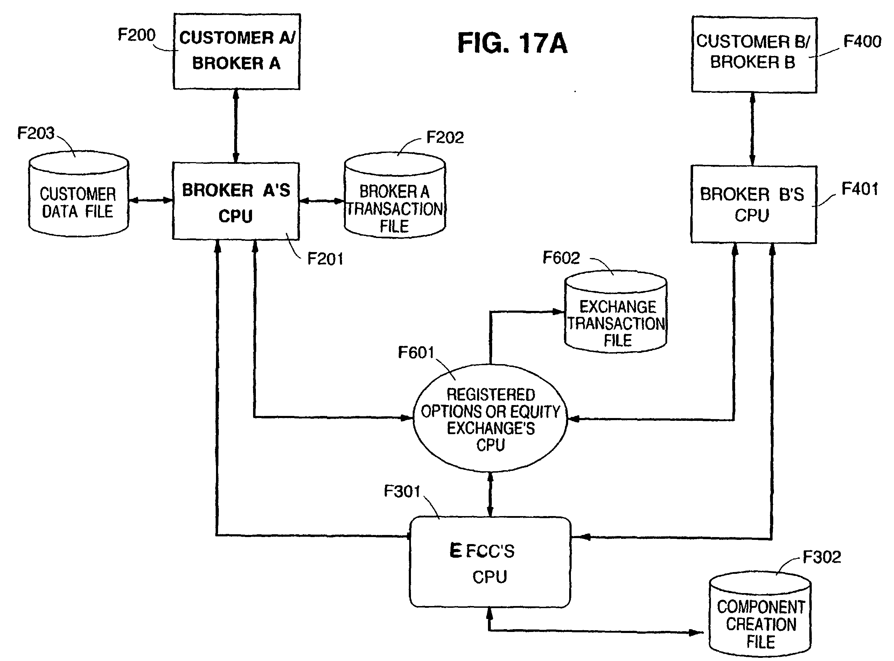

Referring now to Fig. 17 of the drawings, there is represented diagrammatically a transaction involved in the creation and trading in the Equity Forwards<sup>SM</sup> mode of one or more DIVS<sup>SM</sup>, SPECS<sup>SM</sup> or ZIPS<sup>SM</sup>.

As represented in Fig. 17, a system for creating Equity Forwards<sup>SM</sup>, each of which represents an interest in a share of stock of an entity comprises computer input and memory means for allocating to a customer's account Equity Forwards<sup>SM</sup> that are any of: (a) a component interest indicative of the right to receive a partial share of stock equal in value to a stipulated price or a full share of stock of the entity on a predetermined future date, whichever is the lesser value; (b) a component interest indicative of the right to receive a partial share of stock equal in value to the appreciation, if any, of the share of stock above the stipulated price on the predetermined date; (c) a component interest indicative of the right to receive dividends declared with respect to given dates which are prior to the predetermined future date and which goes to zero value at the predetermined future date. The system also includes computer memory means for recording the sale from the customer's account of Equity Forwards<sup>SM</sup> that are any of components (a), (b), (c), as described more fully with reference to Fig. 17a.

As represented diagrammatically in Fig. 17, Box F100, Customer A is long one share of common stock, by which it is meant that he owns common stock carried in his account at Broker A (Box F200). As represented by arrow F1, Customer A represented by Box F100 pledges his or her stock to Broker A and sells one or more Equity Forwards<sup>SM</sup> for DIVS<sup>SM</sup>, ZIPS<sup>SM</sup> or SPECS<sup>SM</sup> through Broker A, represented by Box F200.

The sale by Customer A, through Broker A, is done on a registered Equity Forwards<sup>SM</sup> exchange, represented by Box F600. This exchange preferably has standardized contract specifications arranged in conjunction with the owner of the primary computer (ASPC). As indicated by arrow F2, Broker A establishes and maintains margin (at EFCC) for any Equity Forwards<sup>SM</sup> component sold by Customer A. EFCC creates and issues an Equity Forwards<sup>SM</sup> to Broker B's account, represented by Box F400 for credit to Customer B's account, represented by Box F500. As represented by arrow F3, Broker B receives the Equity Forwards<sup>SM</sup> and as represented by arrow F4, Customer B receives the Equity Forwards<sup>SM</sup>. As represented by arrow F5, Customer B delivers cash to Broker B, who as represented by arrow F6, delivers cash to EFCC. As indicated by arrow F7, Broker A receives cash from EFCC and as represented by arrow F8, Customer A F100 receives cash for the Equity Forwards<sup>SM</sup> he has sold.

As represented by arrow F9, the sale of the Equity Forwards<sup>SM</sup> by Broker A is through a registered Equity Forwards<sup>SM</sup> exchange F600. Broker B buys the Equity Forwards<sup>SM</sup> from Broker A through the registered Equity Forwards<sup>SM</sup> exchange F600, as indicated by arrow F10.

Referring now to Fig. 17a, customer A establishes an account with Broker A F200, deposits and pledges shares of a company's common stock in his account with Broker A. Broker A F200 then stores information about Customer A and his stock positions in a magnetic memory disk file F203 in his computer system F201.

Customer A instructs Broker A to sell a component Equity Forwards<sup>SM</sup> interest in a common stock.

Broker A's computer F201 queries its account information memory disk file F203 for Customer A to ascertain that Customer A has the underlying common stock in his account for the component being sold and created.

Assuming the underlying common stock is there, Broker A enters into his computer transaction file F202 an order to sell the component as an opening transaction. The floor traders for each customer upon completion of the trade enter the trade in each of their computer systems F201 and F401, and the specialist enters information about the trade into the exchange's computer transaction file F602 which may be stored in a memory storage disk. Customer A's account on the broker's computer system is updated to show that he is short the component sold when confirmation of the sale is received from the registered Equity Forwards<sup>SM</sup> exchange. Each broker's computer systems then generate reports for Broker A F200 and Broker B F400 indicating the results of the trade. Then the brokers report the trade to their respective customers.

When a trade is complete the exchange's computer system F601 transmits data about the trade to the computer system at an Equity Forwards<sup>SM</sup> Clearing Corporation (EFCC) F301. This computer system accumulates all opening and closing trades for each component by broker. The EFCC component creation file F302, which may be stored in a memory storage disk, registers the component which EFCC has created.

For each opening sale of a component EFCC's computer system F301 causes a component Equity Forwards<sup>SM</sup> to be created in the computer record of the buying broker's account F401 to complete the trade. After the close of trading EFCC's computers transmit a report showing the net change in position for each component that each broker traded that day. The broker's computer systems reconcile this net change with the trades the broker made that day. When this is finished the individual customer's account information, stored in the broker's computer system, such as Broker A's transaction file F202, which may be stored in a memory storage disk F202, is updated to reflect the trades the customers made that day. Each day EFCC and the participant member firms adjust maintenance margins to reflect the change in value of the net position they have in component Equity Forwards[SM] at EFCC.

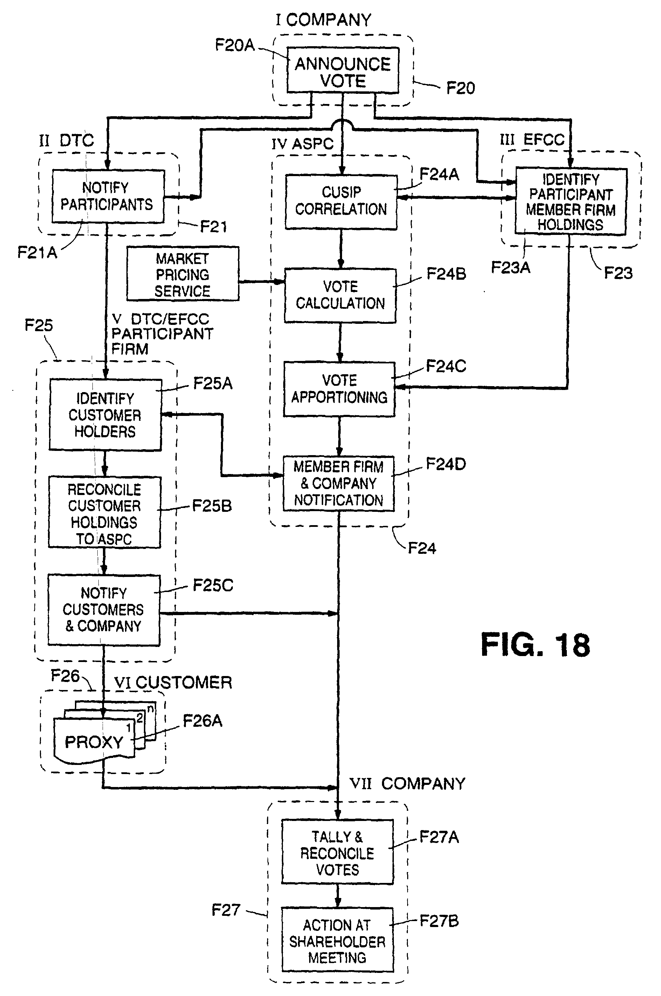

Referring now to Fig. 18, a Company F20 utilizes computer means F20A for announcing its intent to solicit votes from its stockholders. The computer means F20A communicates with computer means F21A for notifying participant members of Depository Trust Corporation (DTC) F21 which, on behalf of its participant members may serve as the repository for the company's equity. As it learns of shareholder voting matters, the computer means P21A disseminates this information to its participants. For example, the DTC computer means F21A notifies EFCC F23 and the DTC/EFCC participant firm F25.

The EFCC participant firm F25 has computer means F25A for identifying customer holdings, computer means F25B for reconciling component holdings (long and short) to ASPC and computer means F25C for notifying customers and the company.

An Equity Forwards[SM] Clearing Corporation (EFCC) F23 maintains records that identify all holders (long and short Equity Forwards[SM] contracts) of ZIPS[SM], SPECS[SM] and DIVS[SM]. EFCC F23 utilizes computer means F23A for identifying participant member holdings.

ASPC F24, owner of the primary computer, utilizes computer means F24A for CUSIP correlation which is necessary to properly apportion component-holder voting rights. ASPC requests from EFCC via computer means F23A information that identifies participant holders of record of either long and/or short positions for specified components pertinent to a shareholder vote.

ASPC F24, the owner of the primary computer has computer means for performing four basic tasks in order to establish the voting rights for eligible component-holders:

> 1. CUSIP correlation computer means F24A for correlating the equity at issue to the corresponding created components: SPECS[SM], ZIPS[SM] and DIVS[SM];
> 2. vote calculation computer means F24B for calculating the proper voting rights for each of these components;
> 3. vote apportioning computer means F24C for apportioning the correct number of votes to each EFCC participant (as identified by EFCC) for each component;
> 4. computer means F24D notifies all EFCC participant members, maintaining component positions of their voting rights.

The EFCC participant firm F25, upon receipt of the voting information utilizes a similar computer system to that of ASPC to further apportion the net long and net short vote among its customers as previously described. Ultimately proxies are forwarded to all eligible holders identifying the customer's F26 detailed, as well as net, voting rights.

The customer F26 votes and returns a proxy F26A to the company F27. The company F27 utilizes computer means F27A for tallying and reconciling all votes submitted and, as indicated by Box F27B, takes appropriate corresponding action at its shareholder meeting.

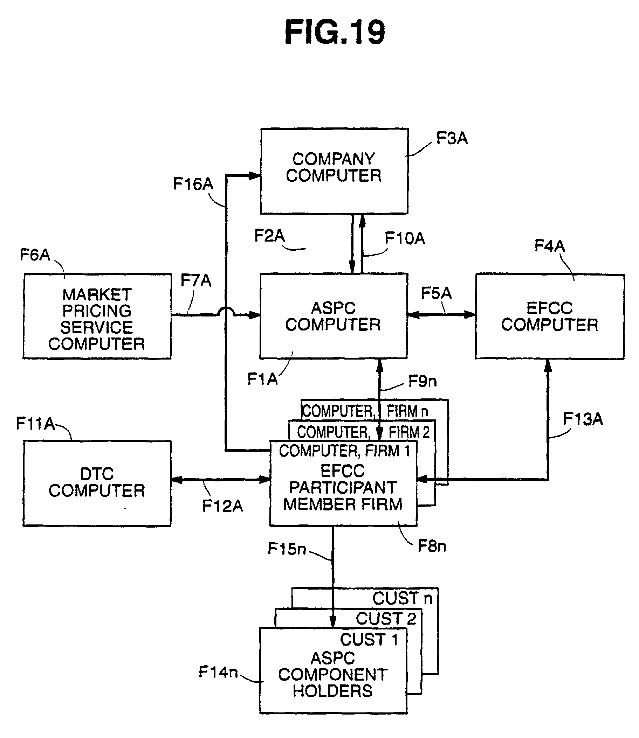

Referring now to Fig. 19 of the drawings, a company computer F3a or public channels F2a enters relevant information concerning a stockholder vote into the ASPC computer F1a. This information indicates that company F3a wishes to solicit votes from its stockholders.

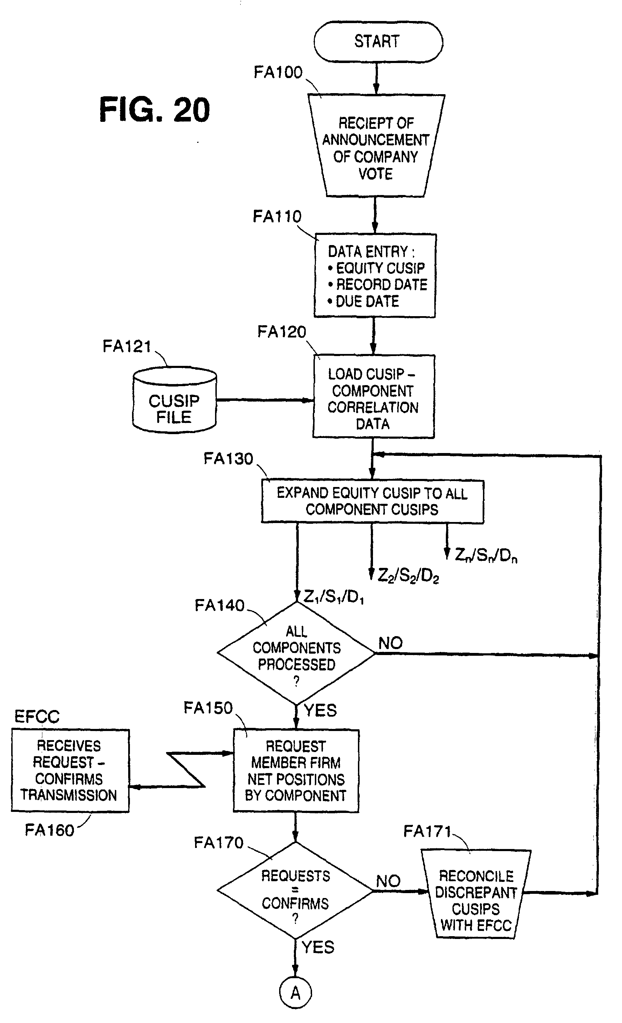

On the stock of record date the ASPC computer F1a initiates a request for data from the EFCC computer F4a in order to identify member firms holding positions of all components. This communication occurs over a communication link F5a. This will be explained more fully in connection with Fig. 20.

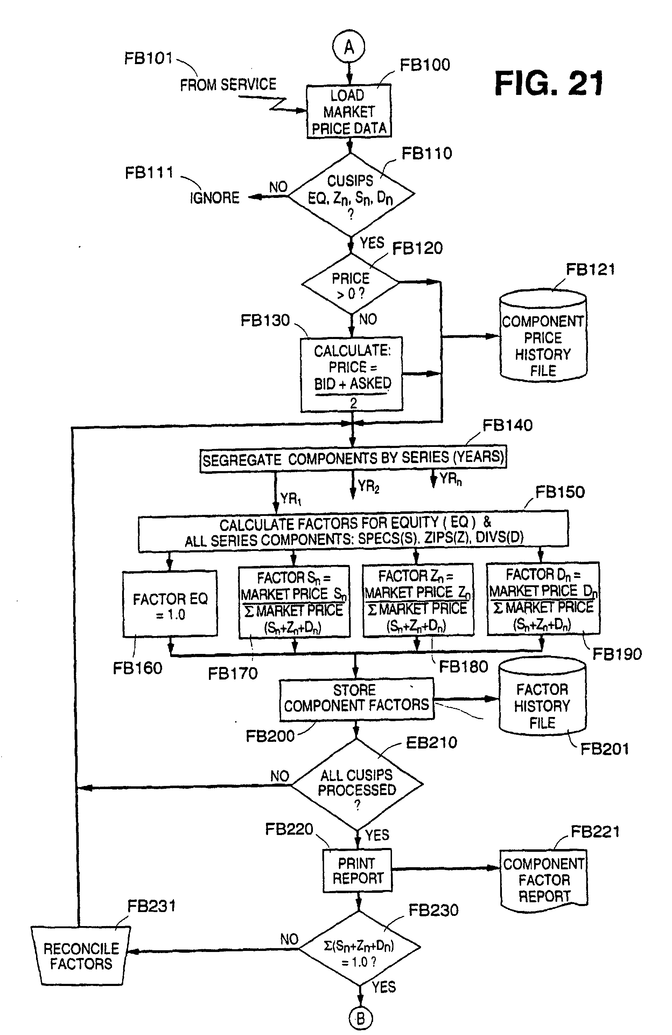

The ASPC computer F1a then calculates the pro rata voting right applicable to each of the components (as more fully explained in connection with Fig. 21). In order to accomplish this, the ASPC computer receives market pricing data from an external market pricing service computer F6a by means of an electronic medium communicated through a communication link F7a.

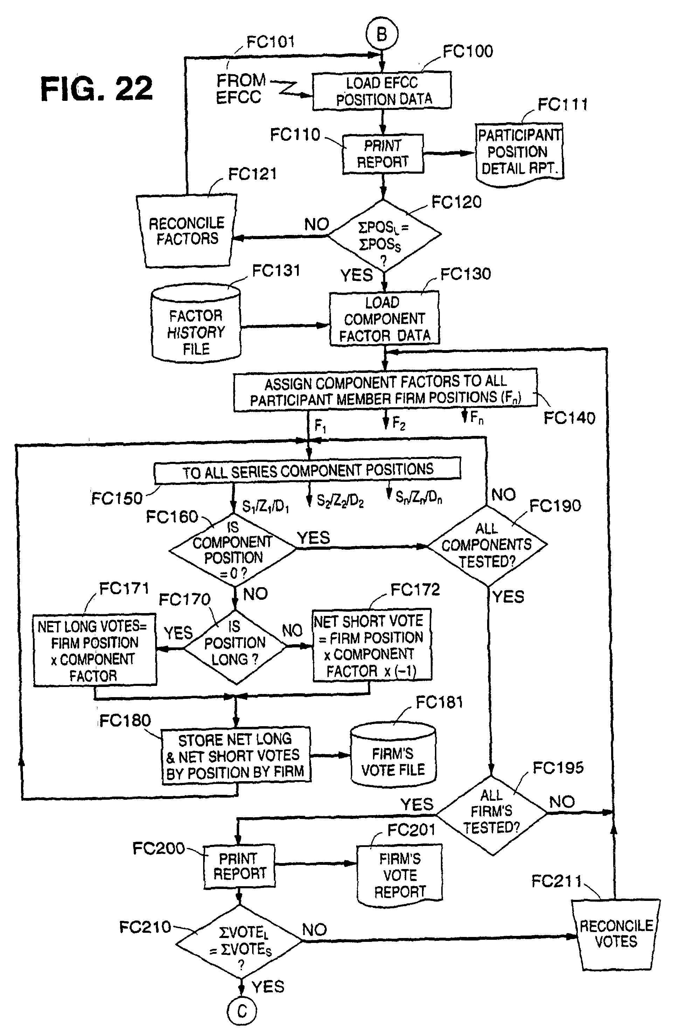

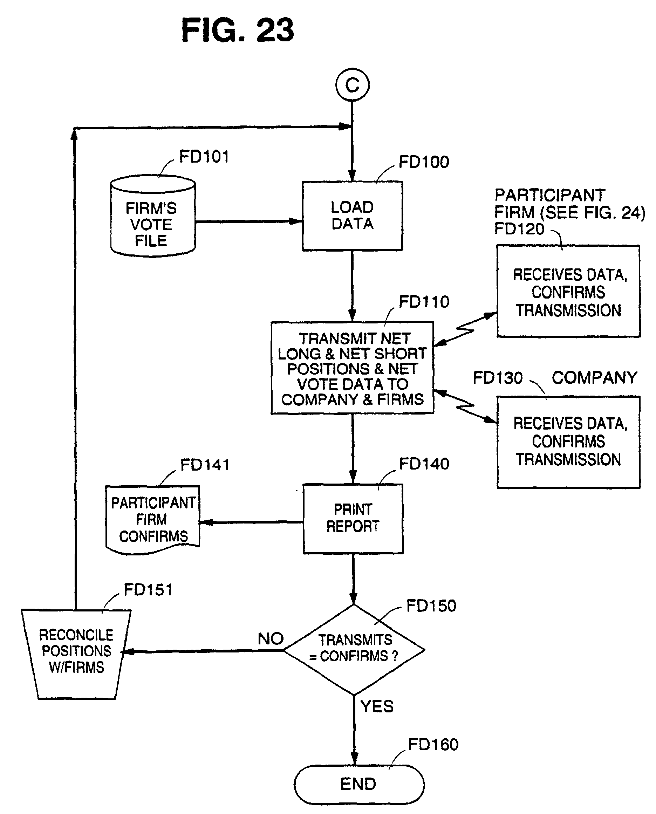

The ASPC computer next apportions the net long and net short votes among the holders of record identified by EFCC (as will be described in more detail in connection with Fig. 22) and notifies all such EFCC participants F8n of their net applicable long and/or short votes via a communication link F9n. While only one EFCC participant F8n and one communication link F9n are represented in Fig. 19, it will be understood that a plurality of firms are in data communication with the ASPC computer 1. The total number of partial interests and corresponding votes apportioned among the EFCC participants is then communicated over a link F10a to the company computer F3a, as will be explained more fully in connection with Fig. 23.

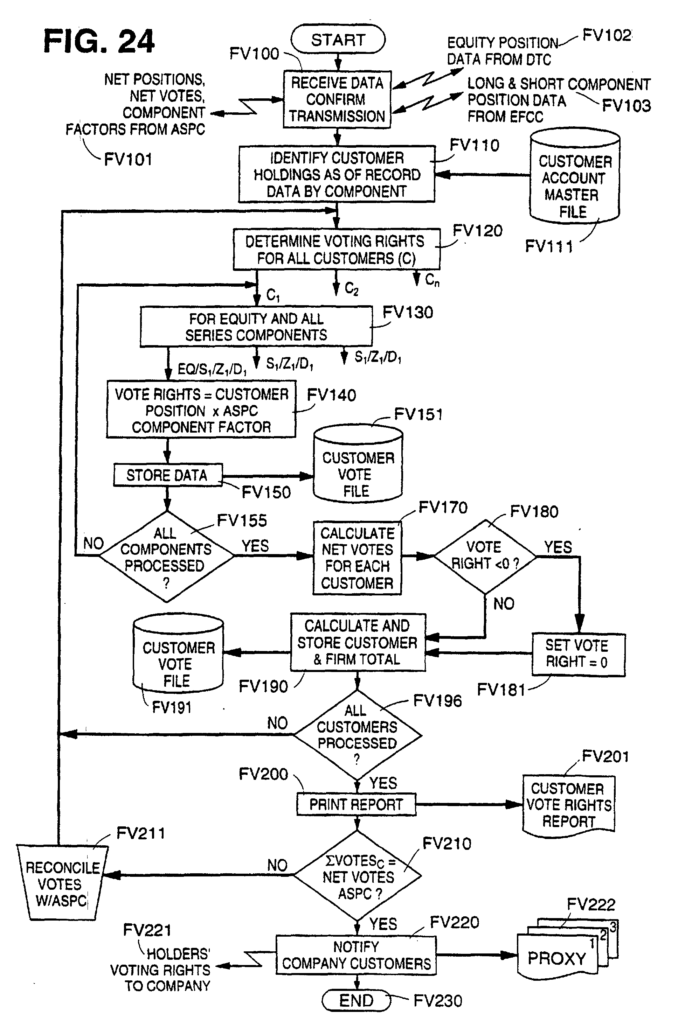

The EFCC participant member's computer F8n additionally receives data directly from DTC's computer F11a via communication link F12a as well as the EFCC computer F4a via communication link F13a to account properly for all its customers' holdings, including the ASPC-created components, and to apportion voting rights correctly among its customers for the specific vote solicitation, as will be explained more fully in connection with Fig. 24. Individual customers F14n are sent proxies by established means F15n and the total number of proxies (votes) distributed is reported to the company computer F3a as required over link F16a. From this point the standard vote solicitation is made by the company.

Referring now to Fig. 20, the ASPC CUSIP correlation computer will be described with reference to the flow chart. The ASPC computer includes a computer portion FA100 for receiving an announcement of a shareholder vote to be taken by a company.

The ASPC computer includes computer means FA110 for manually entering pertinent data concerning the vote to initiate operation of the system. This data includes the equity CUSIP number, the record date and the due date.

A CUSIP file or memory storage means, for example a computer disk, FA121 is loaded into a computer portion FA120 for loading CUSIP component correlation data. This is done in order to match the equity with its multiple ZIPS$^{SM}$, SPECS$^{SM}$ and DIVS$^{SM}$ for each of the Annual and/or Termination Claim (TC$^{SM}$) Series (there being at least one series anticipated per year of maturity). The CUSIP correlation file contains a unique CUSIP number for every series component created by ASPC.

The ASPC computer comprises a portion FA130 for expanding the equity CUSIP to all component CUSIPs. The computer portion matches the equity CUSIP with the component CUSIP numbers. These have been denoted $Z_1$, $S_1$ and $D_1$, respectively, for the ZIPS$^{SM}$, SPECS$^{SM}$ and DIVS$^{SM}$ of Year$_1$, respectively, and continuing through Year$_n$.

The ASPC computer includes a portion FA140 for inquiring "are all components processed?" The portion FA140 has a "no" output which is connected back to the input of portion FA130 for repeating the matching of the equity CUSIP with the component CUSIP numbers until all the related component CUSIP numbers have been found for the requested equity CUSIP.

The "yes" output of the computer portion FA140 is coupled to a "request member firm net positions by component" computer portion FA150 which requests from EFCC the identification of all EFCC participant members holding any positions of any of the above mentioned component CUSIP numbers.

The EFCC computer portion FA160 receives the request and returns confirmation of the requested identification to ASPC computer portion FA150. A "requests = confirms?" computer portion FA170 insures that the data requested is consistent with the data confirmed. If not, computer portion FA171 is means for manually reconciling any discrepancy and the EFCC computer portions repeat their operation until the data requested is consistent with that which has been confirmed.

The "yes" output of the computer portion FA170 is connected to the ASPC vote calculation computer portion represented in Fig. 21. The vote calculation computer portion includes a "load market price data" computer portion FB100 for loading the market price data supplied from a service FB101 into the system to begin the vote calculation. The pricing preferably is the closing market price as of the close on the stock of record date on any exchange where traded, or as determined by specific contract agreements.

The computer portion FB100 is coupled to a "CUSIP = EQ, $Z_n$, $S_n$, $D_n$?" computer portion FB110.

Computer portion FB110 determines that only CUSIP numbers with any claim to a voting right are considered (denoted as EQ, $Z_n$, $S_n$ and $D_n$ for the Equity, ZIPS$^{SM}$, SPECS$^{SM}$ and DIVS$^{SM}$ for all series, respectively). All other CUSIP numbers are ignored, as indicated by the "no" output to FB111 "ignore" computer portion from portion FB110.

A "is price greater than 0?" computer portion FB120 determines if a market price exists for a CUSIP (that is, its price is greater than zero dollars). The "yes" output of computer portion FB120 is coupled for storage to the component price history file computer portion FB121 which may be, for example, a computer storage disk.

The "no" output of the computer portion FB120 is coupled to a "calculate: price = $\frac{bid + asked}{2}$" computer portion of FB130. If any equity or component is not traded on a given day (that is, its price is either absent or zero), computer portion FB130 calculates its value by determining the mean of the bid and asked prices. This computed value is stored in the component price history file FB121.

The output of computer portion FB130 is coupled to a "separate components by series (years)" computer portion FB140. In order to establish component voting rights, computer portion FB140 groups all components by series (that is, by Termination Date (TD$^{SM}$) and/or Termination Claim (TC$^{SM}$) in which they mature). The outputs of computer portions FB140 are coupled by year, that is, YR$_1$, YR$_2$ ... YR$_n$ to computer portion FB150 "calculate factors for equity (EQ) & all series components: SPECS$^{SM}$ (S), ZIPS$^{SM}$ (Z), DIVS$^{SM}$ (D)," computer portion B150. Within each series, the computer portion FB150 segregates the individual components so that unique component factors can be calculated for each. A "factor EQ = 1.0" computer portion FB160 sets the component factor for the equity at 1.0.

$$A \text{ "factor } S_n = \frac{\text{market price } S_n}{\Sigma \text{ market prices } (S_n + Z_n + D_n)}\text{"}$$

computer portion FB170 determines the component factor for the SPECS$^{SM}$, for the year$_n$ by dividing the market price of the SPEC$^{SM}_n$ by the sum of the market prices for each of the ZIPS$^{SM}$, SPECS$^{SM}$ and DIVS$^{SM}$ for the same year$_n$.

$$A \text{ "factor } Z_n = \frac{\text{market price } Z_n}{\Sigma \text{ market prices } (S_n + Z_n + D_n)}\text{"}$$

computer portion FB180 determines the component factor for the ZIPS$^{SM}$ for the year$_n$ by dividing the market price of the ZIPS$^{SM}_n$ by the sum of the market prices for each of the ZIPS$^{SM}$, SPECS$^{SM}$ and DIVS$^{SM}$ for the same year$_n$.

$$A \text{ "factor } D_n = \frac{\text{market price } D_n}{\Sigma \text{ market prices } (S_n + Z_n + D_n)}\text{"}$$

determines the component factor for the DIVS$^{SM}$ for the year$_n$ by dividing the market price of the DIVS$^{SM}_n$ by the sum of the market prices for each of the ZIPS$^{SM}$, SPECS$^{SM}$ and DIVS$^{SM}$ for the same year$_n$.

A "store component factors" computer portion FB200 then stores the component factors in a factor history file FB201, which may be a computer disk.

The computer portion FB200 is also coupled to an "all CUSIPS processed?" computer portion FB210, having a "no" output coupled to the input of the FB140 computer portion for continuing the operation of the computer until all CUSIPS eligible for voting rights have been calculated and stored.

The "yes" output of the computer portion FB210 is coupled to a print report computer portion FB220 for printing a component factor report FB221, to allow inspection of the data.

As a system control check, a computer portion "$\Sigma (S_n + Z_n + D_n) = 1.0$?" computer portion FB230 has a "no" output coupled to a "reconcile factors" computer portion FB231, which is coupled to the input of computer portion FB140. The factors are manually reconciled in computer portion FB231, adjustments are made and the computer operation is repeated until the sum equals 1.0. The computer cannot continue its operation until this condition is met.

The "yes" output of the computer portion FB230 is coupled to the vote apportioning computer portion of ASPC, represented in Fig. 22.

Referring now to Fig. 22, a "load EFCC position data" computer portion FC100 is coupled to the EFCC (FC 101) computer for loading the net EFCC member firm positions into the system. A "print report" computer portion FC110 prints a report which may be entitled "EFCC participant position detail report" (FC111) to allow for inspection of the data. A "$\Sigma \text{ position}_L = \Sigma \text{ position}_s$?" computer portion FC120 is provided for checking whether the sum of the long positions for all participants equals the sum of the short positions of all participants. If not, the "no" output of computer portion FC120 is coupled to a "reconcile positions" computer portion FC121 for manually investigating and making adjustments which is then coupled to the input of the computer portion FC100. The system check is repeated until the two sums are equal. The computer cannot continue its operation until this condition is met.

The factor history file FC131 is the same factor history file as factor history file FB201 for storing the component factors. The factor history file FC131 is coupled to a "load component factor data" computer portion FC130 to which the "yes" output of computer portion FC120 is applied. An "assign component factors to all participant member firm positions (F$_n$)" computer portion FC140 is coupled to the output of the computer portion FC130 for assigning component factors to all participant positions beginning by reading the data for the first EFCC participant member firm (F$_1$).

A computer portion "for all series component positions" computer portion FC150 matches each participant member firm's position against the corresponding component factors for that participant's position (denoted as Z$_n$, S$_n$ and D$_n$ for the ZIPS$^{SM}$, SPECS$^{SM}$ and DIVS$^{SM}$ for all series, respectively). A "is firm position = 0?" computer portion FC160 determines whether the participant maintains a position for a particular component. If the participant does maintain a position (that is, his position is not equal to zero), the vote apportioning system continues its operation. If the participant does not maintain a position for a particular component (that is, his position is either absent or equal to zero), the "yes" output of the computer portion FC160 continues the search as an input to computer portion FC140 for subsequent components.

The "no" output of the computer portion FC160 is coupled to a "is position long?" computer portion FC170. The "yes" output of the computer portion FC170 is applied to a "net long vote = firm position times component factor" computer portion FC171 for multiplying the long position by the ASPC component factor.

If the position is short, the "no" output of computer portion FC170 is applied to a "net short vote = firm position times component factor times (-1)" computer portion FC172 for applying its output together with the output of computer portion FC171 to a "store net long and net short votes by position by firm" computer portion FC180 which applies its output to a firm's vote file memory storage means FC181, which may be a computer disk. The processing continues with the next series of components in FC150.

The "yes" output of FC160 is applied to an "All Components Tested?" computer portion FC190. The "no" output goes to FC150 until all series and components of a particular underlying stock have been processed. The "yes" output of FC190 goes to the "All Firms Tested?" computer portion FC195. The "no" output of FC195 goes to FC140 to assign component factors for the next participant member firm. The "yes" output of FC195 is applied to a "print report" computer portion FC200 which prints a report entitled "participant firm net vote report" as indicated by block FC201. The output of computer portion FC190 is coupled through the computer portion FC200 to a "$\Sigma \text{ vote}_L = \Sigma \text{ votes}_s$?" computer portion FC210 for determining as a system control check whether the sum of the votes for all long components equals the sum of votes for all short components. If not, the "no" output of computer portion FC210 is coupled to a computer portion FC211 wherein the votes are manually reconciled, adjustments made and the computer operation repeated. The computer operation cannot go forward until this condition is met.

Referring to Fig. 23 of the drawings, the EFCC participant member firm's vote file FD101, which may be a storage disk, is reloaded into the ASPC computer system at a "load data" computer portion FD100. A "transmit net long and net short positions and net vote data to company and firms" computer portion FD110 transmits by telecommunications the net long and net short positions and net vote data and component factor to the company as well as to each member firm maintaining any component position, as indicated by blocks FD120 and FD130.

The participant member firm's (FD120) computer receives the data and returns confirmation of such to ASPC. This data should be in complete agreement with daily positions as reported by EFCC and confirmed with the participant. As indicated by block FD130, the company computer similarly receives the position and vote data and confirms such to the ASPC computer.

A "print report" computer portion FD140 prints a report entitled "the participant firm confirmation report" FD141 to allow for inspection of the data. A "transmits equal confirms?" computer portion FD150 has a "no" output coupled to a "reconcile positions with firm" computer portion FD151 for reconciling the discrepancy if the data transmitted does not agree with the confirmation for the participant firm. The computer repeats this operation until the two positions agree. The "yes" output of computer portion FD150 completes the ASPC computer data processing. At this point the standard proxy solicitation process becomes operative.

Referring now to Fig. 24, the EFCC participant member firm computer comprises a "receive data, confirm transmission" computer portion FV100 which responds to the component factors and net long and net short vote position transmitted by ASPC and sends the confirmation of such to ASPC. The participant member firm also receives and reconciles position data from EFCC and DTC. An "identify customer holdings as of record date by component" computer portion FV110 accesses the customer account master file FV111, which may be a computer storage disk, in order to identify customers holding any of the relevant components (as identified by their CUSIP numbers) as of the assigned record date.

A "determine voting rights for all customers (C)" computer portion FV120 searches each customer file (denoted $C_1$ through $C_n$) to identify component holders.

A "for equity and all series components" computer portion FV130 considers only CUSIP numbers with any claim to a voting right (denoted as EQ, $Z_n$, $S_n$ and $D_n$) for the equity, ZIPS$^{SM}$, SPECS$^{SM}$ and DIVS$^{SM}$ for all series, respectively. As an eligible component is found, computer portion "vote right = customer position times ASPC component factor" computer portion FV140 establishes the customer's voting right by multiplying the position by the ASPC component factor.

A "store data" computer portion FV150 stores each such position in the participant member firm's customer vote file (FV151), which may be a computer disk.

An "all components processed?" computer portion FV155 has a "no" output connected to the input of computer portion FV130 to repeat the computer operations until all components have been processed for a customer. The "yes" output of computer portion FV155 is coupled to a "calculate net votes for each customer" computer portion FV170 which tabulates the net number of votes assignable to each customer.

If the customer's net vote right is negative (less than zero), the "vote right less than 0?" computer portion FV180 causes the value to be retained for reference but the eligible vote right is set to zero. This could occur when an investor is short more component votes than he is long shares of the underlying stock.

The "yes" output of computer portion FV180 is coupled to a "set vote right = 0" computer portion FV181 which has its output applied to a "calculate and store firm total" computer portion FV190. The computer portion FV190 calculates and stores the total eligible votes for each customer and accumulates a total firm vote. This output is applied to a customer vote file FV191, which may be a computer disk. The "no" output of computer portion FB195 "All Customers Processed" is coupled back to computer portion FV120 to get the next customer's position.

The "yes" output of FV195 is coupled to a "print report" computer portion FV200 which prints the customer vote rights report FV201, to allow for inspection of the data.

The output of FV290 is coupled through FV200 to a "$\Sigma$ votes$_c$ = net votes ASPC?" which as a system control check determines whether the sum of the eligible customer votes equals the net votes assigned by ASPC. If not, any discrepancies are applied to computer portion FV211 "reconcile votes with ASPC" where any discrepancies are manually reconciled by the participant firm, adjustments are made and the computer operation repeats until the amounts are equal. The computer operation cannot go forward until this condition is met.

The "yes" output of the computer portion FV210 is applied to a "notify company and customers" computer portion FV220, for advising the company of each participant's component holders and their component voting rights, as indicated by block FV221. Proxies are then sent to individual customers, as indicated by FV222.

Standard proxy solicitation then is made by the company.

IV. Corporate Creation and Exchange Mode

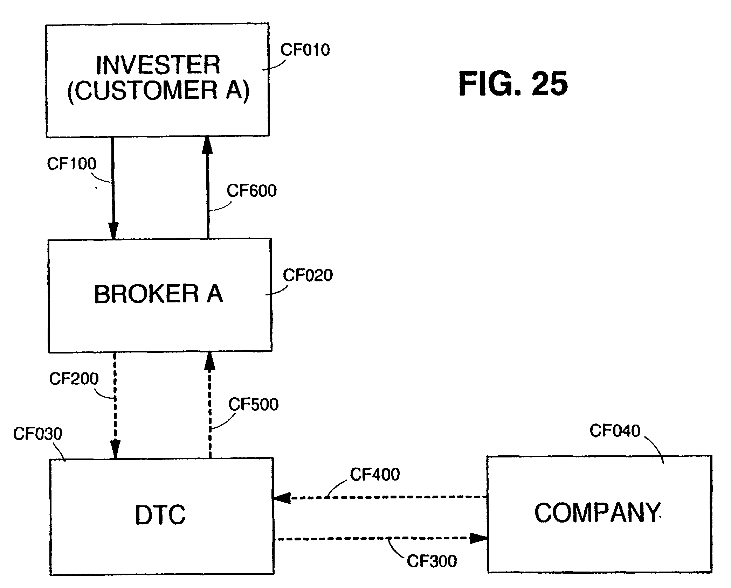

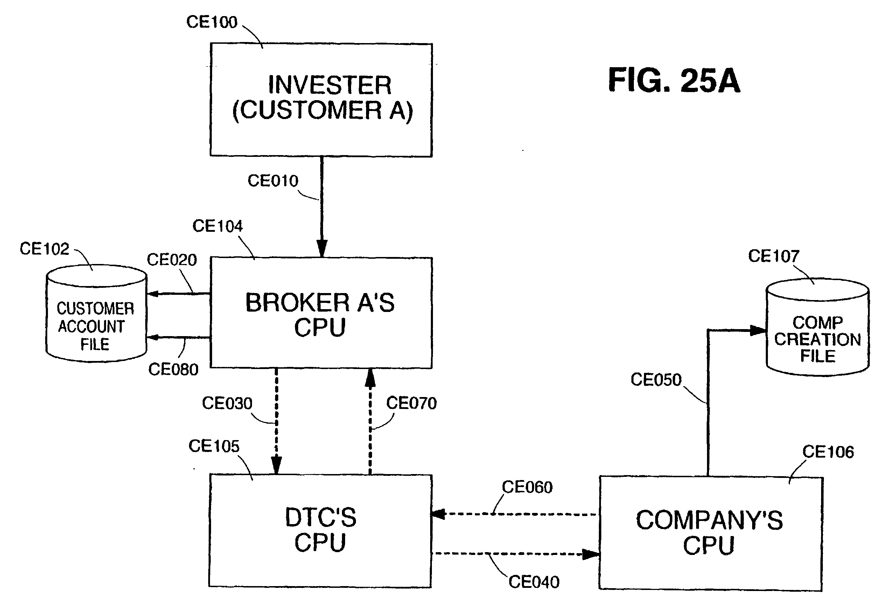

Referring now to Fig. 25 of the drawings, there is represented diagrammatically the creation system in the Corporate Creation and Exchange mode of one or more DIVS$^{SM}$, SPECS$^{SM}$ or ZIPS$^{SM}$.

As represented in Fig. 25, a system for creating stock interests, each of which represents an interest in a share of stock of an entity, comprises computer input and memory means for allocating to a customer's account stock interests that are any of:

(a) a component interest indicative of the right to receive a partial share of stock equal in value to a stipulated price or a full share of stock of the entity on a predetermined future date, whichever is the lesser value;
(b) a component interest indicative of the right to receive a partial share of stock equal in value to the appreciation, if any, of the share of stock above the stipulated price on the predetermined future date;
(c) a component interest indicative of the right to receive dividends declared with respect to given dates which are prior to the predetermined future date and which goes to zero value at the predetermined future date.

The system also includes computer memory means for recording the sale from the customer's account of stock interests that are any of components (a), (b), (c), as described more fully with reference to Fig. 25a.

As represented diagrammatically in Fig. 25, Box CF010, Investor (Customer A) is long one share of common stock, by which it is meant that he owns common stock carried in his account at Broker A (Box CF020). As represented by arrow CF100, Customer A, represented by Box CF010, delivers stock of the soliciting company to Broker A and instructs Broker A to exchange the stock for component interests, DIVS$^{SM}$, ZIPS$^{SM}$ or SPECS$^{SM}$, of the soliciting company.

The instruction CF100 and exchange by Customer A, through Broker A, is done through DTC (Box CF030). DTC preferably has standardized contract specifications for the DIVS$^{SM}$, ZIPS$^{SM}$ and SPECS$^{SM}$ created in conjunction with the owner of the primary computer (ASPC) and the corporation. As indicated by arrow CF200, Broker A instructs DTC to deliver Customer A's stock to the company against creation and exchange of components. As represented by arrow CF300, DTC delivers stock to the company (Box CF040) in accordance with Broker A's instructions. As indicated by arrow CF400, upon delivery of stock from DTC to the company, the company delivers components to DTC.

As indicated by arrow CF500, DTC credits the Broker's account for DIVS$^{SM}$, SPECS$^{SM}$ and ZIPS$^{SM}$ received from the company. The Broker then credits the customer's account for the DIVS$^{SM}$, SPECS$^{SM}$ and ZIPS$^{SM}$, as indicated by arrow CF600.

Referring now more particularly to Fig. 25a, Customer A CE100 establishes an account with Broker A and deposits shares of a company's common stock in his account CE010 with Broker A. Broker A's computer CE104 then stores information CE020 about Customer A and his stock position in a magnetic memory disk customer data file CE102 in his computer system CE104. Customer A instructs Broker A to tender common stock to the soliciting company in exchange for component interests. Broker A's computer CE104 communicates CE030 with DTC's computer CE105 to initiate the transfer of the stock to the company's account at DTC.

As indicated by arrow CE040, DTC's computer sends commands to the company's computer to cause the company to issue DIVS$^{SM}$, SPECS$^{SM}$ and ZIPS$^{SM}$ in exchange for the customer's stock.

As indicated by arrow CEO50, the company's computer CE106 creates an entry in the Component Creation File CE107 indicating the exchange of DIVS$^{SM}$, SPECS$^{SM}$ and ZIPS$^{SM}$ for the stock and sends commands to DTC's computer CE105 as represented by arrow CE060 indicating that the components can be credited to the broker's account.

As indicated by arrow CE070, DTC's computer CE105 sends a confirmation of the component creation to the broker's computer and debits the stock from the broker's account and credits the broker with the DIVS$^{SM}$, SPECS$^{SM}$ and ZIPS$^{SM}$ created. As indicated by arrow CE080, the broker's computer CE104 debits the stock from the customer's account which may be a hard disk file CE102 and credits the account for the DIVS$^{SM}$, SPECS$^{SM}$ and ZIPS$^{SM}$ created.

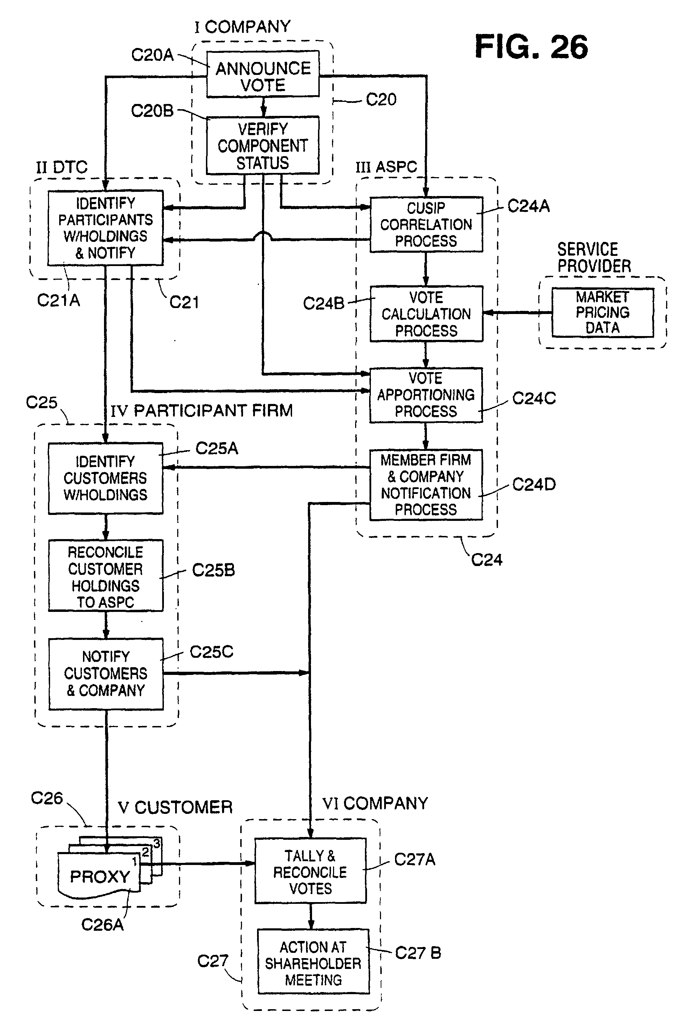

Referring now to Fig. 26, a company C20 utilizes computer means C20A for announcing its intent to solicit votes from its stockholders. The computer means C20A communicates with computer means C21A for notifying participant members of Depository Trust Corporation (DTC) C21 which, on behalf of its participant members may serve as the repository for the company's equity. As it learns of shareholder voting matters, the computer means C21A disseminates this information to its participants. For example, the DTC computer means C21A notifies participant firm C25.

The DTC participant firm C25 has computer means C25A for identifying customer holdings, computer means C25B for reconciling customer holdings (long and short) and computer means C25C for notifying customers and the company.

DTC C21 maintains records that identify all participant holders with long component holdings of ZIPS$^{SM}$, SPECS$^{SM}$ and DIVS$^{SM}$. DTC C21 utilizes computer means C21A for identifying participants with long component holdings.

ASPC C24, owner of the primary computer, utilizes computer means C24A for CUSIP correlation which is necessary to properly apportion component-holder voting rights. ASPC requests from DTC via computer means C21A information that identifies participant holders of record of long positions for specified components pertinent to a shareholder vote.

ASPC C24, the owner of the primary computer, has computer means for performing four basic tasks in order to establish the voting rights for eligible component-holders:

1. CUSIP correlation computer means C24A for correlating the equity at issue to the corresponding created components: SPECS$^{SM}$, ZIPS$^{SM}$ and DIVS$^{SM}$;

2. Vote calculation computer means C24B for calculating the proper voting rights for each of these components;

3. Vote apportioning computer means C24C for apportioning the correct number of votes to each DTC participant (as identified by DTC) for each component;

4. Computer means C24D notifies all DTC participant members maintaining component positions of their voting rights.

The DTC participant firm C25, upon receipt of the voting information utilizes a similar computer system to that of ASPC to further apportion the net long and net short vote among its customers as previously described. Ultimately proxies are forwarded to all eligible holders C26 identifying the customer's voting rights.

The customer C26 votes and returns a proxy C26A to the company C27. The company C27 utilizes computer means C27A for tallying and reconciling all votes submitted, and as indicated by box C27B, takes the appropriate action directed in the proxy at its shareholder meeting.

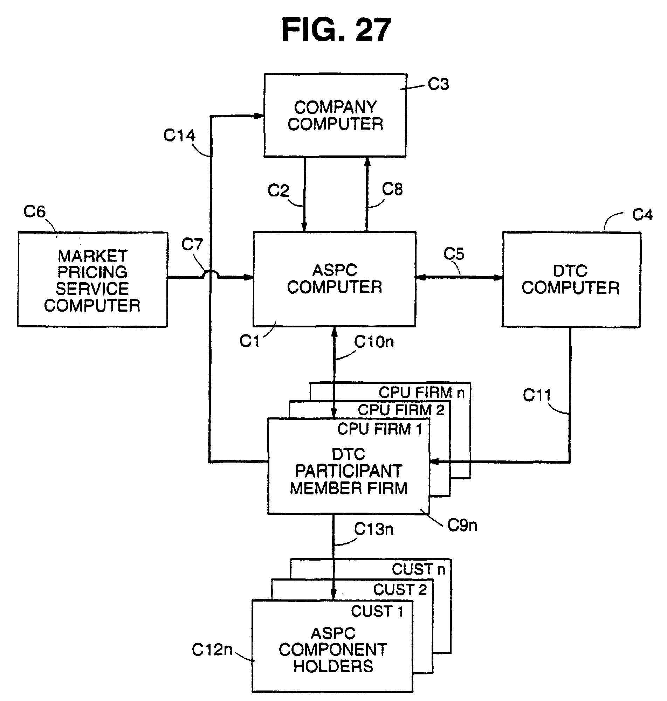

Referring now to Fig. 27 of the drawings, a company computer (designated in Fig. 27 by its central processing unit CPU) C3 or public channels C2 enters relevant information concerning a stockholder vote into the ASPC computer C1. This information indicates that company C3 wishes to solicit votes from its stockholders.

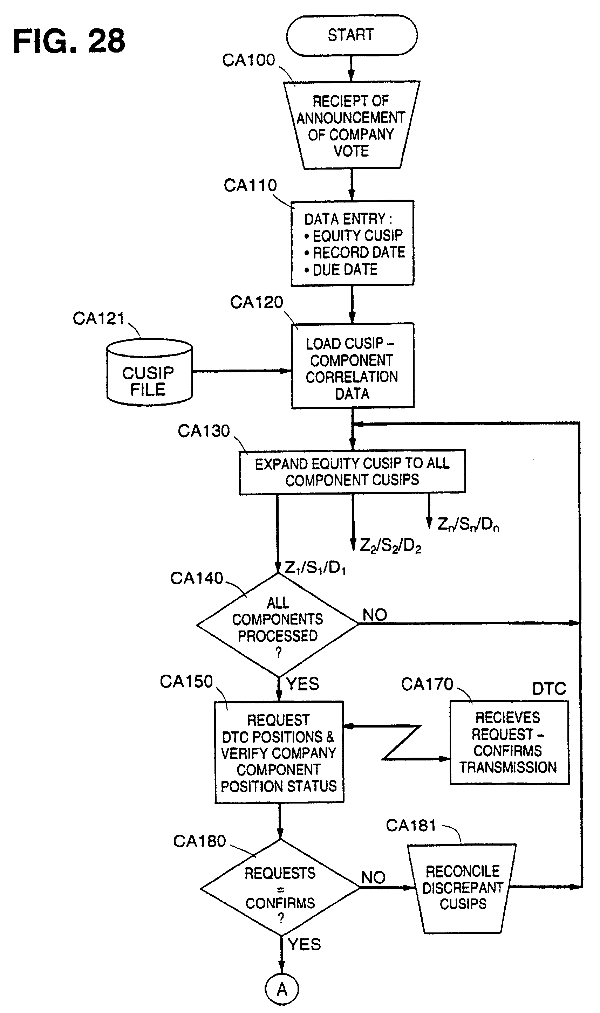

On the stock of record date the ASPC computer C1 initiates a request for data from the DTC computer C4 in order to identify member firms holding positions of any components. On the stock of record date the ASPC computer C1 also initiates a request for data from the market pricing service computer C6 over a communication link C7. This will be more fully explained in connection with Fig. 28.

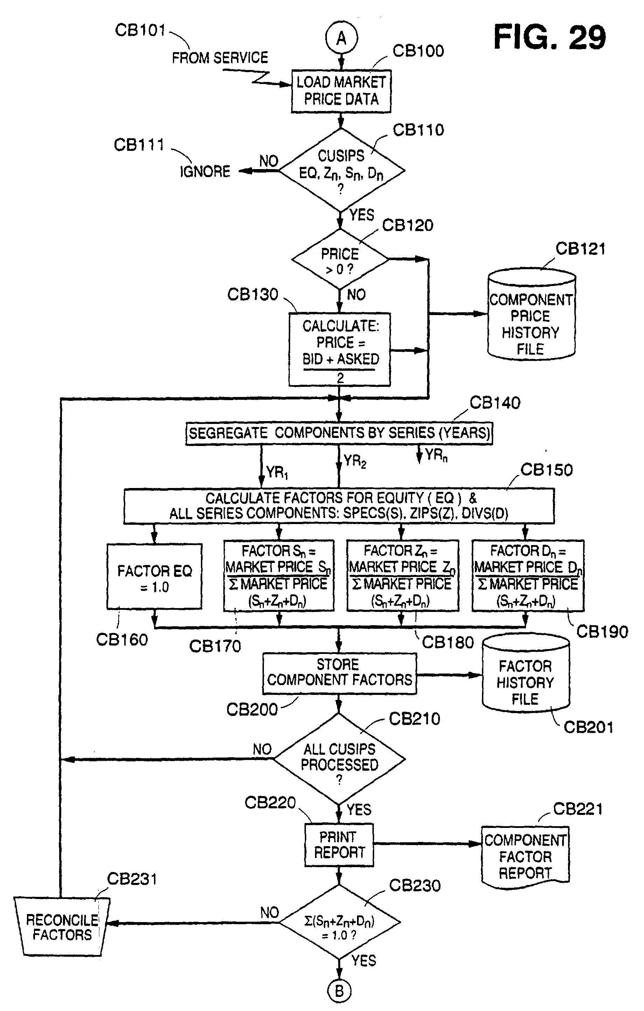

The ASPC computer C1 then calculates the pro rata voting right applicable to each of the components (as more fully explained in connection with Fig. 29). In order to accomplish this the ASPC computer receives market pricing data from an external market pricing service computer C6 by means of an electronic medium communicated through a communication link C7.

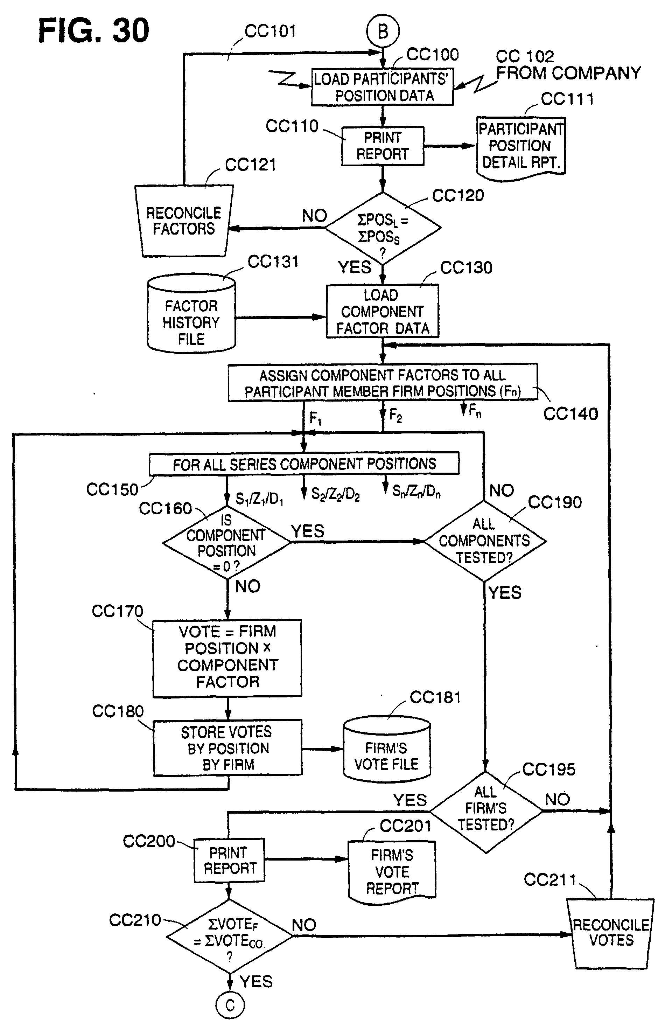

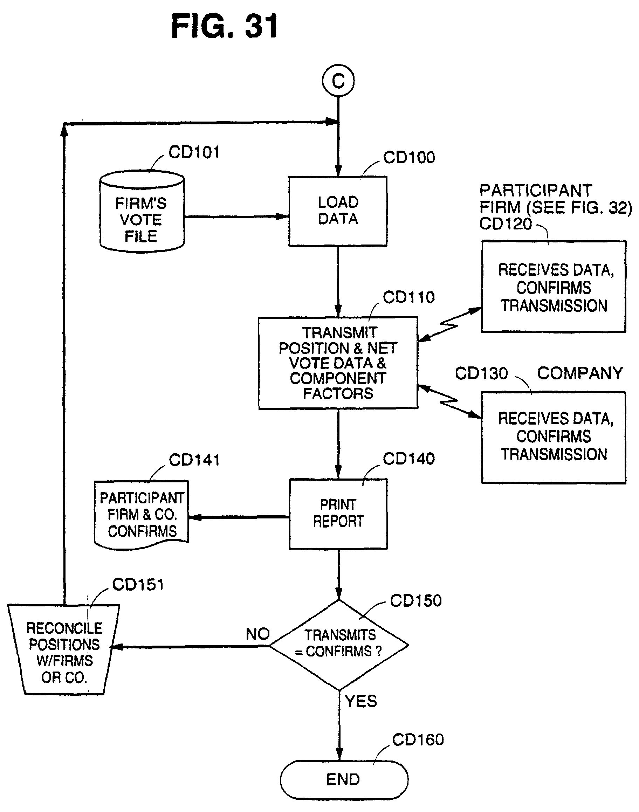

The ASPC computer next apportions votes among the holders of record identified by DTC (as will be described in more detail in connection with Fig. 30) and notifies all such DTC participants C9$_n$ of their votes via communication links C10$_n$. While only one DTC participant C9$_n$ and one communication link from the DTC computer is represented in Fig. 27, it will be understood that a plurality of firms are in data communication with the ASPC computer C1. The total number of partial interests and corresponding votes among the DTC participants is then communicated over a link C14 to the company computer C3 as will be more fully explained in connection with Fig. 31.

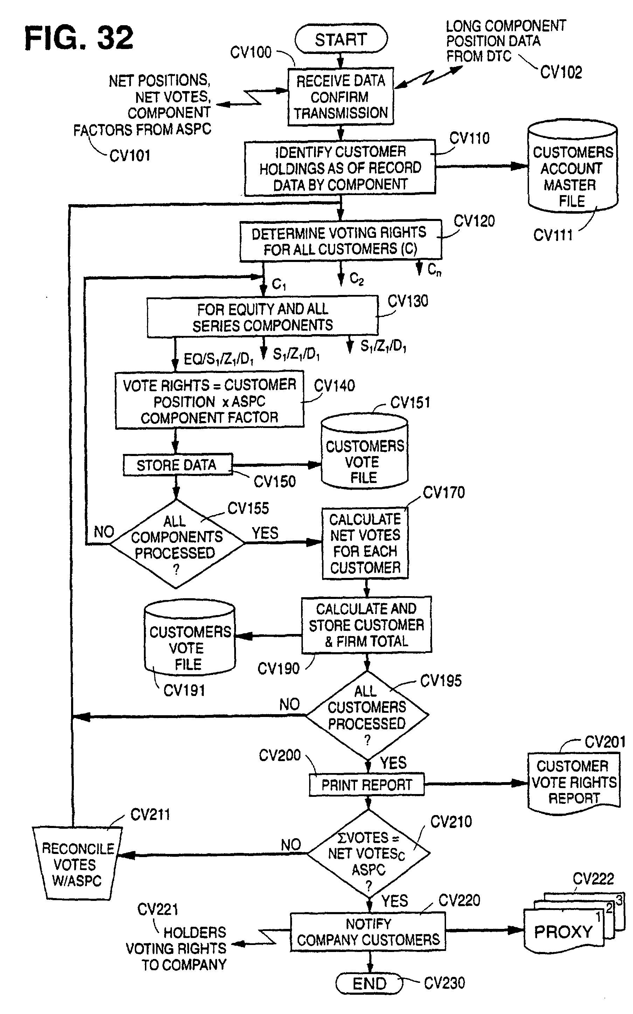

The DTC participant members' computer C9$_n$ additionally receives data directly from DTC's computer C4 via communication link C11, to account properly for all its customers' holdings, including the ASPC-created components, and to apportion voting rights correctly among its customers for the specific vote solicitation, as will be explained more fully in connection with Fig. 32. Individual customers C12$_n$ are sent proxies by established means C13$_n$ and the totall number of proxies (votes) distributed is reported to the company computer C3 as required over link C14.

Referring now to Fig. 28, the ASPC CUSIP correlation computer will be described with reference to the flow chart. The ASPC computer includes a computer portion CA100 for receiving an announcement of a shareholder vote to be taken by a company.

The ASPC computer includes means for manually entering pertinent data CA110 concerning the vote to initiate operation of the system. This data includes the equity CUSIP number, the record date and the due date.

A CUSIP file or memory storage means, for example a computer disk, CA121 is loaded into a computer portion CA120 for loading CUSIP component correlation data. This is done in order to match the equity with its multiple ZIPS$^{SM}$, SPECS$^{SM}$ and DIVS$^{SM}$ for each of the Annual and/or Termination Claim (TC$^{SM}$) Series (there being at least one series anticipated per year of maturity). The CUSIP correlation file contains a unique CUSIP number for every series component created by ASPC.

The ASPC computer comprises a portion CA130 for expanding the equity CUSIP to all component CUSIPs. The computer portion matches the equity CUSIP with the component CUSIP numbers. These have been denoted $Z_1$, $S_1$ and $D_1$, respectively, for the ZIPS$^{SM}$, SPECS$^{SM}$ and DIVS$^{SM}$ of year$_1$, respectively, and continuing through year$_n$.

The ASPC computer includes a portion CA140 for inquiring "are all components processed?" The portion CA140 has a "no" output which is connected back to the input of portion CA130 for repeating the matching of the equity CUSIP with the component CUSIP numbers until all the related component CUSIP numbers have been found for the requested equity CUSIP.

The "yes" output of the computer portion CA140 is coupled to a "request member firm net positions by component" computer portion CA150 which requests from DTC the identification of all DTC participant members holding any positions of any of the above mentioned component CUSIP numbers. ASPC notifies the company of the number of votes due to components from each DTC participant firm. The company confirms receipt of same. Much of this information may already be available to the company from DTC.

The DTC computer portion CA170 receives the request and returns confirmation of the requested identification to ASPC computer portion CA150. A "requests = confirms?" computer portion CA180 insures that the data requested is consistent with the data confirmed. If not, computer portion CA181 is means for manually reconciling any discrepancy and the DTC computer portions repeat their operation until the data requested is consistent with that which has been confirmed.

The "yes" output of the computer portion CA180 is connected to the ASPC vote calculation computer portion represented in Fig. 29. Referring now to Fig. 29, the vote calculation computer portion includes a "load market price data" computer portion CB100 for loading the market price data supplied from a service CB101 into the system to begin the vote calculation. The pricing preferably is the closing market price as of the close on the stock of record date on any exchange where traded, or as determined by specific contract agreements.

The computer portion CB100 is coupled to a "CUSIP = EQ, $Z_n$, $S_n$, $D_n$?" computer portion CB110. Computer portion CB110 determines that only CUSIP numbers with any claim to a voting right are considered (denoted as EQ, $Z_n$, $S_n$ and $D_n$ for the equity, $ZIPS^{SM}$, $SPECS^{SM}$ and $DIVS^{SM}$ for all series, respectively). All other CUSIP numbers are ignored, as indicated by the "no" output to CB111 "ignore" computer portion from portion CB110.

A "is price greater than 0?" computer portion CB120 determines if a market price exists for a CUSIP (that is, its price is greater than zero dollars). The "yes" output of computer portion CB120 is coupled for storage to the component price history file computer portion CB121 which may be, for example, a computer storage disk.

The "no" output of the computer portion CB120 is coupled to a "calculate: price = $\frac{bid + asked}{2}$" computer portion CB130. If any equity or component is not traded on a given day (that is, its price is either absent or zero), computer portion CB130 calculates its value based on specific contract agreements. This computed value is stored in the component price history file CB121.

The output of computer portion CB130 is coupled to a "separate components by series (years)" computer portion CB140. In order to establish component voting rights, computer portion CB140 groups all components by series (that is, by Termination Date ($TD^{SM}$) and/or Termination Claim ($TC^{SM}$) in which they mature). The outputs of computer portions CB140 are coupled by year, that is, $YR_1$, $YR_2$ ... $YR_n$ to computer portion CB150 "calculate factors for equity (EQ) & all series components: $SPECS^{SM}$ (S), $ZIPS^{SM}$ (Z), $DIVS^{SM}$ (D)". Within each series, the computer portion CB150 segregates the individual components so that unique component factors can be calculated for each. A "factor EQ = 1.0" computer portion CB160 sets the component factor for the equity at 1.0.

$$A\ "factor\ S_n = \frac{market\ price\ S_n}{\Sigma\ market\ prices\ (S_n + Z_n + D_n)}"$$

computer portion CB170 determines the component factor for the SPECS", for the $year_n$ by dividing the market price of the $SPEC^{SM}_n$ by the sum of the market prices for each of the $ZIPS^{SM}$, $SPECS^{SM}$ and $DIVS^{SM}$ for the same $year_n$.

$$A\ "factor\ Z_n = \frac{market\ price\ Z_n}{\Sigma\ market\ prices\ (S_n + Z_n + D_n)}"$$

computer portion CB180 determines the component factor for the $ZIPS^{SM}$ for the yearn by dividing the market price of the $ZIPS^{SM}_n$ by the sum of the market prices for each of the $ZIPS^{SM}$, $SPECS^{SM}$ and $DIVS^{SM}$ for the same $year_n$.

$$A\ "factor\ D_n = \frac{market\ price\ D_n}{\Sigma\ market\ prices\ (S_n + Z_n + D_n)}"$$

computer portion CB190 determines the component factor for the $DIVS^{SM}$ for the $year_n$ by dividing the market price of the $DIVS^{SM}_n$ by the sum of the market prices for each of the $ZIPS^{SM}$, $SPECS^{SM}$ and $DIVS^{SM}$ for the same $year_n$.

A "store component factors" computer portion CE200 then stores the component factors in a factor history file CB201, which may be a computer disk.

The computer portion CB200 is also coupled to an "all CUSIPS processed?" computer portion CB210, having a "no" output coupled to the input of the CB140 computer portion for continuing the operation of the computer until all CUSIPS eligible for voting rights have been calculated and stored.

The "yes" output of the computer portion CB210 is coupled to a print report computer portion CB220 for printing a component factor report CB221, to allow inspection of the data.

As a system control check, a computer portion "$\Sigma (S_n + Z_n + D_n) = 1.0$?" computer portion CB230 has a "no" output coupled to a "reconcile factors" computer portion CB231, which is coupled to the input of computer portion CB140. The factors are manually reconciled in computer portion CB231, adjustments are made and the computer operation is repeated until the sum equals 1.0. The computer cannot continue its operation until this condition is met.

The "yes" output of the computer portion C230 is coupled to the vote apportioning computer portion of ASPC, represented in Fig. 30.

Referring now to Fig. 30, a "load participants position data" computer portion CC100 is coupled to the DTC computer CC101 for loading the net DTC member firm positions into the system. ASPC receives position data by component via communication means from the company CC102. A "print report" computer portion CC110 prints a report which may be entitled "DTC participant position report" (CC111) to allow for inspection of the data. A "$\Sigma$ position$_{DTC}$ = $\Sigma$ position$_{CO}$?" computer portion CC120 is provided for checking whether the sum of the long positions for all participants equals the sum of the created positions recorded at the corporation (CO.). If not, the "no" output of computer portion CC120 is coupled to a "reconcile positions" computer portion CC121 for manually investigating and making adjustments which is then coupled to the input of the computer portion CC100. The system check is repeated until the two sums are equal. The computer cannot continue its operation until this condition is met.

The factor history file CC131 is the same factor history file as factor history file CB201 for storing the component factors. The factor history file CC131 is coupled to a "load component factor data" computer portion CC130 to which the "yes" output of computer portion CC120 is applied. An "assign component factors to all participant member firm positions ($F_n$)" computer portion CC140 is coupled to the output of the computer portion CC130 for assigning component factors to all participant positions beginning by reading the data for the first DTC participant member firm ($F_1$).

A computer portion "for all series component positions" computer portion CC150 matches each participant member firm's position against the corresponding component factors for that participant's position (denoted as $Z_n$, $S_n$ and $D_n$ for the ZIPS$^{SM}$, SPECS$^{SM}$ and DIVS$^{SM}$ for all series, respectively). An "is component position = 0?" computer portion CC160 determines whether the firm has a position in each individual component. The "no" output, meaning that the firm has a position, is coupled to a "vote = firm position x component factor" computer portion CC170. The "Store votes by position by firm" computer portion CC180 stores the votes due to each component position in the "firms vote file" CC181 which may be a computer disk. The processing continues with the next series component in CC150.

The "yes" output of CC160 is coupled to an "All Components Tested?" computer portion CC190. The "no" output is coupled to CC150 to continue with the next series component. The "yes" output is coupled to an "All Firms Tested?" computer portion CC195. The "no" output from computer portion CC195 is coupled to the input of computer portion CC140 to continue the previously described operations until the computer has operated for all remaining DTC participant member firms ($F_2$ through $F_n$).

The "yes" output of computer portion CC195 is coupled to a "print report" computer portion CC200 which prints a report entitled "participant firm vote report" as indicated by block CC201. The output of computer portion CC200 is coupled to computer portion CC210 "$\Sigma$ vote$_F$ = $\Sigma$ votes$_{CO}$?" for determining as a system control check whether the sum of the votes for all participant firms (F) for all long components equals the sum of votes indicated by the company (CO.). If not, the "no" output of computer portion CC210 is coupled to a computer portion CC211 wherein the votes are manually reconciled, adjustments made and the computer operation repeated. The computer operation cannot go forward until this condition is met.

Referring to Fig. 31 of the drawings, the DTC participant member firm's vote file CD101, which may be a storage disk, is reloaded into the ASPC computer system at a "load data" computer portion CD100. A "transmit position and vote data to company and firms" computer portion CD110 transmits by telecommunications the position and vote data and component factor to the company as well as to each member firm maintaining any component position, as indicated by blocks CD120 and CD130.

The participant member firm's (CD120) computer receives the data and returns confirmation of such to ASPC. This data should be in complete agreement with daily positions as reported by DTC and confirmed with the participant. As indicated by block CD130, the company computer similarly receives the position and vote data and confirms such to the ASPC computer.

A "print report" computer portion CD140 prints a report entitled "the participant firm confirmation report" CD141 to allow for inspection of the data. A "transmits equal confirms?" computer portion CD150 has a "no" output coupled to a "reconcile positions with firm" computer portion CD151 for reconciling the discrepancy if the data transmitted does not agree with the confirmation for the participant firm. The computer repeats this operation until the two positions agree. The "yes" output of computer portion CD150 completes the ASPC computer data processing. At this point the standard proxy solicitation process becomes operative at the participant member firms.

Referring now to Fig. 32, the DTC participant member firm computer comprises a "receive data, confirm transmission" computer portion CV100 which responds to the component factors and vote position transmitted by ASPC and sends the confirmation of such to ASPC. The participant member firm also receives and reconciles position data from DTC CV102. An "identify customer holdings as of record date by component" computer portion CV110 accesses the customer account master file CV111, which may be a computer storage disk, in order to identify customers holding any of the relevant components (as identified by their CUSIP numbers) as of the assigned record date.

A "determine voting rights for all customers (C)" computer portion CV120 searches each customer file (denoted $C_1$ through $C_n$) to identify component holders.

A "all series components" computer portion CV130 considers only CUSIP numbers with any claim to a voting right (denoted as $Z_n$, $S_n$ and $D_n$) for the ZIPS$^{SM}$, SPECS$^{SM}$ and DIVS$^{SM}$ for all series, respectively. As an eligible component is found, computer portion "vote right = customer position times ASPC component factor" computer portion CV140 establishes the customer's voting right by multiplying the position by the ASPC component factor.

A "store data" computer portion CV150 stores each such position in the participant member firm's customer vote file (CV151), which may be a computer disk.

An "all components processed?" computer portion CV155 has a "no" output connected to the input of computer portion CV130 to repeat the computer operations until all components have been processed for a customer. The "yes" output of computer portion CV155 is coupled to a "calculate net votes for each customer" computer portion CV170 which tabulates the net number of votes assignable to each customer. The output from CV170 is coupled to a "calculate and store firm total" computer portion CV190. The computer portion CV190 calculates and stores the total eligible votes for each customer and the firm total. This output is applied to a customer vote file CV191, which may be a computer disk.

A "print report" computer portion CV200 prints a customer vote rights report CV201, to allow for inspection of the data.

The output of CV190 is coupled through CV200 to a "$\Sigma$ votes$_c$ = net votes ASPC?" which as a system control check determines whether the sum of the eligible customer votes equals the net votes assigned by ASPC. If not, any discrepancies are applied to computer portion CV211 "reconcile votes with ASPC" where any discrepancies are manually reconciled by the participant firm, adjustments are made and the computer operation repeats until the amounts are equal. The computer operation cannot go forward until this condition is met.

The "yes" output of the computer portion CV210 is applied to a "notify company and customers" computer portion CV220, for advising the company of each participant's component holders and their component voting rights, as indicated by CV221. Proxies are then sent to individual customers, as indicated by CV222.

While there have been described what are at present considered to be the preferred embodiments of this invention, it will be obvious to those skilled in the art that various changes and modifications may be made therein without departing from the invention, and it is, therefore, aimed to cover all such changes and modifications as fall within the scope of the invention as claimed.

## Claims

1. A data processing system for processing the voting of partial stock interests via equity and options, comprising:

a control computer (24) for calculating and storing a component factor for equity and for calculating and storing component factors for options that are component interests and vote component factors corresponding to each of said component factors for options, wherein each said vote component factor is indicative of the right to receive a partial vote attributed to each said component factors for options;

said control computer (24) operable to generate data for a broker's computer (25) showing a component factor for each of said component interests and a number of votes allocated to the broker's position in each of said component interests;

said broker's computer (25) being responsive to said control computer (24) for indentifying customer holdings of equity and component interests;

a first communications link (9n) between said control computer (24) and said broker's computer (25) for transmitting said data generated by said control computer (24) to said broker's computer (25);

a company's computer (27) being responsive to said control computer (24) for identifying component interests and votes by broker and to said broker's computer (25) for receiving and identifying customer votes;

a second communications link (10A) between said control computer (24) and said company's computer (27) for transmitting data generated by said control computer (24) to said company's computer (27);

a third communications link (16a) between said broker's computer (25) and said company's computer (27) for transmitting data generated by said broker's computer (25) to said company's computer (27); and

said broker's computer (25) operable to generate a proxy for each customer.

2. The system of claim 1, further comprising:

an option clearing corporation's computer (23) for generating data showing a broker's position in each of said component interests for said control computer (24) and including a device for transmitting data indicative of the broker's position in each of said component interests; and a fourth communications link (5A) between said control computer (24) and said options clearing corporation's computer (23) for transmitting said data indicative of the broker's position to said control computer (24).

3. The system of claim 2, wherein said broker's computer (25) allocates votes to said customers based on said component factors for equity and options and reports to said company's computer (27) the equity and the number of component interests by customer and the number of net votes due to each customer.

4. The system of claim 3, wherein said control computer (24) includes a device (24A) for requesting data indicative of a broker's component positions in each of said component interests.

5. The system of claim 3, wherein said broker's computer (25) generates a proxy for each customer showing the number and type of equity and component interests, said equity and component factors, the votes due to said equity and component interests and the net number of votes due to the customer.

6. The system of claim 2, wherein said component factors for options are at least two of:

    (i) a component interest indicative of the rights to receive a partial share of stock equal in value to a stipulated price or a full share of stock of the company on a predetermined future date, whichever is the lesser value;
    (ii) a component interest indicative of the right to receive a partial share of stock equal in value to the appreciation, if any, of the share of stock above the stipulated price on the predetermined date; and
    (iii) a component interest indicative of the right to receive substitute payments equal in amount to dividends declared with respect to a given date which is prior to the predetermined future date and which goes to zero value at the predetermined future date.

7. The system of claim 6, wherein said control computer (24) comprises a device (24B) for calculating and storing said component factors for options as of a record date for each of said component interests (i), (ii), and (iii).

8. The system of claim 3, wherein said control computer (24) requests data indicative of a broker's component positions in each of said component interests; wherein said fourth communications link (5A) acknowledges receipt of said broker position data from said option corporation's computer (23); wherein said first communication link (9n) acknowledges receipt of said broker position data from said control computer (24); wherein said second communications link (10A) acknowledges receipt of data indicative of said component interests and votes by broker from said control computer (24); and wherein said third communications link (16A) acknowledges receipt of said vote allocation data for customers from said broker's computer (25).

9. The system of claim 8, wherein said first, second, third, and fourth communication links (9n, 10A, 16A, 5A) are telecommunication links.

10. A data processing system for processing the voting of partial stock equity interests comprising:

    a control computer (E24) for calculating and storing component factors for equity component interests and vote component factors corresponding to each of said component factors, wherein each said vote component factor is indicative of the rights to receive a partial vote attributed to each of said equity component interests;
    said control computer (E24) operable to generate data for a broker's computer (E25) showing a component factor for each of said equity component interests and a number of votes allocated to the broker's position in each of said component interests;
    said broker's computer (E25) being responsive to said control computer (E24) for identifying customer holdings of equity components interests;
    a first communications link (12n) between said control computer (E24) and said broker's computer (E25) for transmitting said data generated by said control computer (E24) to said broker's computer (E25);
    a company's computer (E27) being responsive to said control computer (E24) for identifying equity component interests and votes by broker and to said broker's computer (E25) for receiving and identifying customer votes;
    a second communications link (10) between said control computer (E24) and said company's computer (E27) for transmitting data generated by said control computer (E24) to said company's computer (E27);
    said broker's computer (E25) operable to allocate votes to said customers based on said component factors for equity component interests; and
    said broker's computer (E25) operable to generate a proxy having indicia including votes due to equity including equity components of each customer.

11. The system of claim 10, further comprising:

    an equity clearing corporation's computer (E23) responsive to said control computer (E24) for generating data showing a broker's position in each of said equity component interests for said control computer (E24);

a third communications link (7) between said control computer (E24) and said equity clearing corporation's computer (E23) for transmitting data indicative of the broker's component position to said control computer (E24).

12. The system of claim 11, wherein said control computer (E24) includes a device (E24A) for requesting data indicative of a broker's component position.

13. The system of claim 11, wherein said component factors for options are at least two of:

(i) a component interest indicative of the right to receive a partial share of stock equal in value to a stipulated price or a full share of stock of the company on a predetermined future date, which is the lesser value;

(ii) a component interest indicative of the right to receive a partial share of stock equal in value to the appreciation, if any, of the share of stock above the stipulated price on the predetermined date; and

(iii) a component interest indicative of the right to receive substitute payments equal in amount to dividends declared with respect to a given date which is prior to the predetermined future date and which goes to zero value at the predetermined future date.

14. The system of claim 13, wherein said control computer (E24) comprises a device (E24B) for calculating and storing said component factors for equity components as of a record date for each of said component interests (i), (ii), and (iii).

15. The system of claim 12, wherein said third communications link (7) acknowledges receipt of said broker position data from said equity clearing corporation's computer (E23); wherein said first communications link (12n) acknowledges receipt of broker position data from said control computer (E24); and wherein said second communications link (10) acknowledges receipt of data indicative of said component interests and votes by broker from said control computer (E24).

16. The system of claim 15, wherein said first, second and third communications links (12n, 10, 7) are telephone communication links.

**Patentansprüche**

1. Datenverarbeitungssystem zur Verarbeitung der Stimmabgabe bei über Aktien und Optionen vorhandenen partiellen Aktienanteilen, das umfasst:

einen Steuercomputer (24) zur Berechnung und Speicherung eines Komponentenfaktors für Aktien sowie zur Berechnung und Speicherung von Komponentenfaktoren für Optionen, die Komponentenanteile sind, sowie von Abstimmungs-Komponentenfaktoren, die jedem Komponentenfaktor für Optionen entsprechen, wobei jeder Abstimmungs-Komponentenfaktor den Anspruch anzeigt, ein partielles Stimmrecht zu erhalten, das zu jedem Komponentenfaktor für Optionen gehört;

den Steuercomputer (24), der imstande ist, Daten für einen Computer (25) des Brokers zu erzeugen, die einen Komponentenfaktor für jeden Komponentenanteil darstellen, sowie eine Anzahl von Stimmen, die der Position des Brokers in jedem Komponentenanteil zugeordnet sind;

den Computer (25) des Brokers, der auf den Steuercomputer (24) reagiert, um die Kundenbestände an Aktien- und Komponenten-Anteilen zu identifizieren;

eine erste Kommunikationsverbindung (9n) zwischen dem Steuercomputer (24) und dem Computer (25) des Brokers, um die Daten, die vom Steuercomputer (24) erzeugt wurden, zum Computer (25) des Brokers zu übertragen;

einen Computer (27) der Gesellschaft, der auf den Steuercomputer (24) reagiert, um Komponentenanteile und Stimmabgaben je Broker zu identifizieren, sowie auf den Computer (25) des Brokers, um Kundenstimmabgaben zu empfangen und zu identifizieren;

eine zweite Kommunikationsverbindung (10A) zwischen dem Steuercomputer (24) und dem Computer (27) der Gesellschaft, um Daten zum Computer (27) der Gesellschaft zu übertragen, die vom Steuercomputer (24) erzeugt wurden;

eine dritte Kommunikationsverbindung (16a) zwischen dem Computer (25) des Brokers und dem Computer (27) der Gesellschaft, um Daten zum Computer (27) der Gesellschaft zu übertragen, die vom Computer (25) des Brokers erzeugt wurden; und

den Computer (25) des Brokers, der imstande ist, für jeden Kunden einen Proxy-Server einzurichten.

2. System nach Anspruch 1, das weiterhin umfasst:

einen optionslöschenden Computer (23) der Gesellschaft zur Erzeugung von Daten, die die Position eines Brokers in jedem Komponentenanteil für den Steuercomputer (24) darstellen, und der eine Vorrichtung zur Übertragung von Daten enthält, die die Position des Brokers in jedem Komponentenanteil anzeigen; und

eine vierte Kommunikationsverbindung (5A) zwischen dem Steuercomputer (24) und dem optionslöschenden Computer (23) der Gesellschaft, um die Daten, die die Position des Brokers anzeigen, zum Steuercomputer (24) zu übertragen.

3. System nach Anspruch 2, wobei der Computer (25) des Brokers den Kunden Stimmanteile auf der Grundlage der Komponentenfaktoren für Aktien und Optionen zuordnet und dem Computer (27) der Gesellschaft die Aktien und die Anzahl der Komponentenanteile pro Kunde und die Anzahl der Nettostimmabgaben, die von jedem Kunden herrühren, mitteilt.

4. System nach Anspruch 3, wobei der Steuercomputer (24) eine Vorrichtung (24A) zur Anforderung von Daten enthält, die die Komponentenpositionen eines Brokers für jeden Komponentenanteil anzeigen.

5. System nach Anspruch 3, wobei der Computer (25) des Brokers einen Proxy-Server für jeden Kunden einrichtet, der die Anzahl und die Art der Aktien- und Komponentenanteile, die Aktien- und Komponentenfaktoren,' die Stimmabgaben, die von diesen Aktien- und Komponentenanteilen herrühren, sowie die Nettoanzahl von Stimmabgaben, die von dem Kunden herrühren, anzeigt.

6. System nach Anspruch 2, wobei die Komponentenfaktoren für Optionen wenigstens zwei der folgenden sind:

    (i) ein Komponentenanteil, der die Rechte anzeigt, einen anteiligen Aktienanteil, der wertmäßig einem festgelegten Preis entspricht, oder einen vollen Aktienanteil der Gesellschaft zu einem vorher festgelegten zukünftigen Zeitpunkt zu erhalten, je nachdem, welcher den niedrigeren Wert besitzt;
    (ii) ein Komponentenanteil, der das Recht anzeigt, einen anteiligen Aktienanteil zu erhalten, der wertmäßig gleich der eventuellen Wertsteigerung des Aktienanteils über den vertraglich festgelegten Preis zum vorher festgelegten Zeitpunkt ist, und
    (iii) ein Komponentenanteil, der das Recht anzeigt, Ersatzzahlungen zu erhalten, die betragsmäßig gleich den Dividenden sind, die bezüglich eines vorgegebenen Datums festgelegt wurden, das vor dem vorher festgelegten zukünftigen Datum liegt, und der zu dem vorher festgelegten zukünftigen Datum den Wert null annimmt.

7. System nach Anspruch 6, wobei der Steuercomputer (24) eine Vorrichtung (24B) zur Berechnung und Speicherung der Komponentenfaktoren für Optionen bzgl. eines Aufzeichnungsdatums für jeden Komponentenanteil (i), (ii) und (iii) umfasst.

8. System nach Anspruch 3, wobei der Steuercomputer (24) Daten anfordert, die die Komponentenpositionen eines Brokers in jedem Komponentenanteil anzeigen; wobei die vierte Kommunikationsverbindung (5A) den Empfang der Broker-Positionsdaten vom Optionscomputer (23) der Gesellschaft bestätigt; wobei die erste Kommunikationsverbindung (9n) den Empfang der Broker-Positionsdaten vom Steuercomputer (24) bestätigt; wobei die zweite Kommunikationsverbindung (10A) den Empfang der Daten vom Steuercomputer (24) bestätigt, die die Komponenten- und Stimmanteile pro Broker anzeigen und wobei die dritte Kommunikationsverbindung (16A) den Empfang der Stimmenzuordnungsdaten für Kunden vom Computer (25) des Brokers bestätigt.

9. System nach Anspruch 8, wobei die erste, zweite, dritte und vierte Kommunikationsverbindung (9n, 10A, 16A, 5A) Telekommunikationsverbindungen sind.

10. Datenverarbeitungssystem zur Verarbeitung der Stimmabgabe von teilweisen Aktienanteilen, das umfasst:

einen Steuercomputer (E24) zur Berechnung und Speicherung von Komponentenfaktoren für Aktienkomponentenanteile und Stimmanteil-Komponentenfaktoren, die jedem Komponentenfaktor entsprechen, wobei jeder Stimmanteil-Komponentenfaktor die Rechte anzeigt, eine teilweise Stimmabgabe zu erhalten, die zu jedem Aktien-Komponentenanteil gehört;

den Steuercomputer (E24), der imstande ist, Daten für einen Computer (E25) des Brokers zu erzeugen, die einen Komponentenfaktor für jeden Aktien-Komponentenanteil darstellen, sowie eine Anzahl von Stimmen, die der Position des Brokers in jedem Komponentenanteil zugeordnet sind;

den Computer (E25) des Brokers, der auf den Steuercomputer (E24) reagiert, um die Kundenbestände an Aktien-Komponentenanteilen zu identifizieren;

eine erste Kommunikationsverbindung (12n) zwischen dem Steuercomputer (E24) und dem Computer (E25) des Brokers, um die Daten, die von dem Steuercomputer (E24) erzeugt wurden, zum Computer (E25) des Brokers zu übertragen;

einen Computer (E27) der Gesellschaft, der auf den Steuercomputer (E24) reagiert, um Aktien-Komponentenanteile und Stimmabgaben des Brokers zu identifizieren, sowie auf den Computer (E25) des Brokers, um Kundenstimmabgaben zu empfangen und zu identifizieren;

eine zweite Kommunikationsverbindung (10) zwischen dem Steuercomputer (E24) und dem Computer (E27) der Gesellschaft, um Daten zum Computer (E27) der Gesellschaft zu übertragen, die vom Steuercomputer (E24) erzeugt wurden;

den Computer (E25) des Brokers, der imstande ist, den Kunden Stimmabgaben zuzuordnen, die auf den Komponentenfaktoren für Aktien-Komponentenanteile beruhen; und

den;Computer (E25) des Brokers, der imstande ist, für jeden Kunden einen Proxy-Server einzurichten, der Indizes einschließlich von Stimmabgaben besitzt, die von Aktien herrühren, einschließlich der Aktienkomponenten jedes Kunden.

**11.** System nach Anspruch 10, das weiterhin enthält:

einen aktienlöschenden Computer (E23) der Gesellschaft, der auf den Steuercomputer (E24) reagiert, zur Erzeugung von Daten, die die Position eines Brokers in jedem Aktien-Komponentenanteil für den Steuercomputer (E24) anzeigen;
eine dritte Kommunikationsverbindung (7) zwischen dem Steuercomputer (E24) und dem aktienlöschenden Computer (E23) der Gesellschaft zur Übertragung von Daten, die dem Steuercomputer (E24) die Komponentenposition des Brokers anzeigen.

**12.** System nach Anspruch 11, wobei der Steuercomputer (E24) eine Vorrichtung (E24A) zur Anforderung von Daten enthält, die die Komponentenposition eines Brokers anzeigen.

**13.** System nach Anspruch 11, wobei die Komponentenfaktoren für Optionen wenigstens zwei der folgenden sind:

(i) ein Komponentenanteil, der das Recht anzeigt, einen anteiligen Aktienanteil zu erhalten, der wertmäßig gleich einem geforderten Preis ist, oder einen vollen Aktienanteil der Gesellschaft zu einem vorher festgelegten zukünftigen Zeitpunkt, je nachdem, welcher den niedrigeren Wert besitzt;
(ii) ein Komponentenanteil, der das Recht anzeigt, einen anteiligen Aktienanteil zu erhalten, der wertmäßig gleich der eventuellen Wertsteigerung des Aktienanteils über den vertraglich festgelegten Preis zum vorher festgelegten Zeitpunkt ist, und
(iii) ein Komponentenanteil, der das Recht anzeigt, Ersatzzahlungen zu erhalten, die betragsmäßig gleich den Dividenden sind, die bezüglich eines vorgegebenen Datums festgelegt wurden, das vor dem vorher festgelegten zukünftigen Datum liegt, und der zu dem Vorher festgelegten zukünftigen Datum den Wert null annimmt.

**14.** System nach Anspruch 13, wobei der Steuercomputer (E24) eine Vorrichtung (E24B) zum Berechnen und Speichern der Komponentenfaktoren für Aktienkomponenten mit einem Aufzeichnungsdatum für jeden Komponentenanteil (i), (ii) und (iii) umfasst.

**15.** System nach Anspruch 12, wobei die dritte Kommunikationsverbindung (7) den Empfang der Brokerpositionsdaten von dem aktienlöschenden Computer (E23) der Gesellschaft bestätigt, wobei die erste Kommunikationsverbindung (12n) den Empfang der Broker-Positionsdaten vom Steuercomputer (E24) bestätigt, und wobei die zweite Kommunikationsverbindung (10) den Empfang der Daten bestätigt, die die Komponentenanteile und Stimmabgaben pro Broker vom Steuercomputer (E24) bestätigen.

**16.** System nach Anspruch 14, in dem die erste, zweite und dritte Kommunikationsverbindung (12n, 10, 7) Telefon-Kommunikationsverbindungen sind.

**Revendications**

**1.** Système de traitement de données pour traiter le vote des intérêts partiels de valeurs boursières via des actions et des options, comprenant :

un ordinateur de commande (24) pour calculer et stocker un facteur de composants pour une action et pour calculer et stocker des facteurs de composants pour des options qui sont des intérêts de composants et pour voter des facteurs de composants correspondant à chacun desdits facteurs de composants pour des options, où chaque dit facteur de composants de vote est indicateur du droit de recevoir un vote partiel attribué à chacun desdits facteurs de composants pour des options ;

ledit ordinateur de commande (24) utilisable pour générer des données pour un ordinateur de courtier (25) montrant un facteur de composants pour chacun desdits intérêts de composants et un nombre de votes alloués à la position de courtier dans chacun desdits intérêts de composants ;

ledit ordinateur de courtier (25) répondant audit ordinateur de commande (24) pour identifier la détention par des clients d'actions et d'intérêts de composants ;

une première liaison de communication (9n) entre ledit ordinateur de commande (24) et ledit ordinateur de courtier (25) pour transmettre lesdites données générées par ledit ordinateur de commande (24) audit ordinateur de courtier (25) ;

Un ordinateur de société (27) répondant audit ordinateur de commande (24) pour identifier des intérêts de composants et des votes par un courtier et audit ordinateur de courtier (25) pour recevoir et identifier des votes de clients ;

une seconde liaison de communication (10A) entre ledit ordinateur de commande (24) et ledit ordinateur de société (27) pour transmettre des données générées par ledit ordinateur de commande (24) audit ordinateur de société (27) ;

une troisième liaison de communication (16A) entre ledit ordinateur de courtier (25) et ledit ordinateur de société (27) pour transmettre des données générées par ledit ordinateur de courtier (25) et ledit ordinateur de société (27) ; et

ledit ordinateur de courtier (25) utilisable pour générer un proxy pour chaque client.

2. Système selon la revendication 1, comprenant :

un ordinateur de société de compensation d'option (23) pour générer des données montrant une position de courtier dans chacun desdits intérêts de composants pour ledit ordinateur de commande (24) et comprenant un dispositif pour émettre des données indicatrices de la position de courtier dans chacun desdits intérêts de composants ; et

une quatrième liaison de communication (5A) entre ledit ordinateur de commande (25) et ledit ordinateur de société de compensation d'option (23) pour transmettre lesdites données indicatrices de la position courtier audit ordinateur de commande (24).

3. Système selon la revendication 2, dans lequel ledit ordinateur de courtier (25) alloue des votes auxdits clients sur la base desdits facteurs de composants pour des actions et des options et reporte audit ordinateur de société (27) l'action et le nombre d'intérêts de composants par client et le nombre de votes net effectués par chaque client.

4. Système selon la revendication 3, dans lequel ledit ordinateur de commande (24) comprend un dispositif (24A) pour demander des données indicatrices d'une position de composants de courtier dans chacun desdits intérêts de composant.

5. Système selon la revendication 3, dans lequel ledit ordinateur de courtier (25) génère un proxy pour chaque client montrant le nombre et le type d'action et d'intérêts de composants, ladite action et les facteurs de composants, les votes concernant lesdits actions et intérêts de composants et le nombre net de votes effectué par un client.

6. Système selon la revendication 2, dans lequel lesdits facteurs de composants pour des options sont au moins de deux :

(i) un intérêt de composants indicateur des droits pour recevoir une part partielle de la valeur boursière égale en valeur à un prix stipulé ou une part complète d'une valeur boursière de la société à une date prédéterminée future, qui est la valeur la plus petite ;

(ii) un intérêt de composants indicateur du droit de recevoir une part partielle de valeur boursière égale en valeur à l'appréciation, s'il y en a une quelconque de la part de la valeur boursière au-dessus du prix stipulé à la date prédéterminée ; et

(iii) un intérêt de composants indicateur du droit de recevoir des paiements de substitution égal en montant aux dividendes déclarés par rapport à une date donnée qui est antérieure à la date future prédéterminée et qui passe à une valeur de 0 à la date future prédéterminée.

7. Système selon la revendication 6, dans lequel ledit ordinateur de commande (24) comprend un dispositif (24B) pour calculer et stocker lesdits facteurs de composants pour des options comme une date d'enregistrement pour chacun desdits intérêts de composants (i), (ii), (iii).

8. Système selon la revendication 3, dans lequel ledit ordinateur de commande (24) demande des données indicatrices d'une position de composants de courtier dans chacun desdits intérêts de composants ; où ladite quatrième liaison de communication (5A) accuse réception desdites données de position de courtier dudit ordinateur de société d'option (23) ; où ladite troisième liaison de communication (9n) accuse réception desdites données de position de courtier à partir dudit ordinateur de commande (24) ; où ladite seconde liaison (10A) accuse réception des données indicatrices desdits intérêts de composants et du vote par le courtier à partir dudit ordinateur de commande (24) ; et dans lequel ladite troisième liaison de communication (16A) accuse réception desdites données d'allocation de vote pour des clients dudit ordinateur de courtier (25).

9. Système selon la revendication 8, dans lequel lesdites première, seconde, troisième, quatrième liaisons de communication (9A, 10A, 16A, 5A) sont des liaisons de télécommunication.

10. Système de traitement de donnée pour traiter le vote d'intérêts partiels de valeur boursière d'action comprenant :

un ordinateur de commande (E24) pour calculer et stocker des facteurs de composants pour des intérêts de composants de valeurs boursières et voter des facteurs de composants correspondant à chacun desdits facteurs de composants, où chaque dit facteur de composants de vote est indicateur des droits pour recevoir un vote partiel attribué à chacun desdits intérêts de composants d'action ;
ledit ordinateur de commande (E24) utilisable pour générer des données d'un ordinateur de courtier (E25) montrant un facteur de composants pour chacun desdits intérêts de composant d'action et un nombre de votes alloués à la position de courtier dans chacun desdits intérêts de composants.
ledit ordinateur de courtier (E25) répondant audit ordinateur de commande (E24) pour identifier des détentions par des clients d'intérêts de composants d'action ;
une première liaison de communication (12M) entre ledit ordinateur de commande (E24) et ledit ordinateur de courtier (E25) pour transmettre lesdites données générées par ledit ordinateur de commande (E24) audit ordinateur de courtier (E25) ;
un ordinateur de société (E27) répondant audit ordinateur de commande (E24) pour identifier des intérêts de composants d'actions et des votes par courtier et audit ordinateur de courtier (25) pour recevoir et identifier des votes de client ;
15 une seconde liaison de communication (10) entre ledit ordinateur de commande (24) et ledit ordinateur de société (27) pour transmettre des données générées par ledit ordinateur de commande (E24) audit ordinateur de société (E27) ;
ledit ordinateur de courtier (E25) utilisable pour allouer des votes auxdits clients sur la base desdits facteurs de composants pour des intérêts de composants d'actions ; et
ledit ordinateur de courtier (E25) utilisable pour générer un proxy ayant des indices comprenant des votes concernant l'action comprenant des composants d'action de chaque client.

11. Système selon la revendication 10, comprenant en outre :

un ordinateur de société de compensation d'actions (E23) répondant audit ordinateur de commande (E24) pour générer des données montrant une position de courtier dans chacun desdits intérêts de composants d'actions pour ledit ordinateur de commande (E24) ;
une troisième liaison de communication (7) entre ledit ordinateur de commande (E24) et ledit ordinateur de société de compensation d'actions (E23) pour transmettre des données indicatrices de la position de composants de courtier audit ordinateur de commande (E24).

12. Système selon la revendication 11, dans lequel ledit ordinateur de commande (E24) comprend un dispositif (E24A) pour demander des données indicatrices d'une position de composants de courtier.

13. Système selon la revendication 11, dans lequel lesdits facteurs de composants pour des options sont au moins de deux :

(i) un intérêt de composants indicateur des droits pour recevoir une part partielle de la valeur boursière égale en valeur à un prix stipulé ou une part complète d'une valeur boursière de la société à une date prédéterminée futur, qui est la valeur la plus petite ;
(ii) un intérêt de composants indicateur du droit de recevoir une part partielle de valeur boursière égale en valeur à l'appréciation, s'il y en a une quelconque de la part de la valeur boursière au-dessus du prix stipulé à la date prédéterminée ; et
(iii) un intérêt de composants indicateur du droit de recevoir des paiements de substitution égale en montant aux dividendes déclarés par rapport à une date donnée qui est antérieure à la date future prédéterminée et qui passe à une valeur de 0 à la date future prédéterminée.

14. Système selon la revendication 13, dans lequel ledit ordinateur de commande (E24) comprend un dispositif (E24B) pour calculer et stocker lesdits facteurs de composants pour les composants d'action comme d'une date d'enregistrement pour chacun desdits intérêts de composants (i), (ii), (iii).

15. Système selon la revendication 12, dans lequel ladite troisième de liaison de communication (7) accuse réception desdites données de position de courtier à partir dudit ordinateur de société de compensation d'action (23), où ladite première liaison de communication (12n) accuse réception des données de positions de courtier à partir dudit ordinateur de commande (E24) ; et où ladite seconde liaison de communication (10) accuse réception des données indicatrices desdits intérêts de composants et vote par le courtier à partir dudit ordinateur de commande (E24)

16. Système selon la revendication 15, dans lequel lesdites première, seconde et troisième liaisons de communication (12n, 10, 7) sont des liaisons de communication téléphonique.

## FIG. 1

CUSTOMER A
LONG 1 SHARE
COMMOM STOCK — O100

O500 — CUSTOMER B

Delivers Stock Sells One
or More Component Options
1 Denoting Partial Interests
in Stock

Receives
Cash 8

Receives
Option 4

5 Delivers
Cash

O200

O600

Sells Option 9

REGISTERED
OPTIONS
EXCHANGE

Buys Option 10

BROKER A

BROKER B

O400

7 Receives
Cash

Delivers
Cash 6

Establishes & Maintains
Margin Requirements for 2
Option Components Sold
By Customer A

O300

3 Receives
Option

OCC

OCC Creates & Issues Option to Broker B's
Account for Credit to Customer B's Account

EP 0 795 162 B1

34

FIG. 1A

EP 0 795 162 B1

# FIG. 2

# FIG. 3

# FIG. 4

```
                    ( START )
A100
                RECIEPT OF
                ANNOUNCEMENT
                OF COMPANY
                VOTE

A110
                DATA ENTRY:
                • EQUITY CUSIP
                • RECORD DATE
                • DUE DATE

A121                        A120
   ( CUSIP         LOAD CUSIP –
     FILE )        COMPONENT
                   CORRELATION
                   DATA

A130
                EXPAND EQUITY CUSIP TO ALL
                COMPONENT CUSIPS
                                      $Z_n/S_n/D_n$
                              $Z_2/S_2/D_2$
A140          $Z_1/S_1/D_1$
                   ALL
                COMPONENTS        NO
                PROCESSED?

                   YES
OCC                        A150
   RECIEVES          REQUEST
   REQUEST.          MEMBER FIRM
   CONFIRMS          NET POSITIONS
   TRANSMISSION      BY COMPONENT
A160
                                  A171
A170
                   REQUESTS =     NO    RECONCILE
                   CONFIRMS?            DISCREPANT
                                        CUSIPS
                   YES                  W/ OCC

                   ( A )
```

**FIG. 5**

B101

FROM SERVICE

A

B100 — LOAD MARKET PRICE DATA

B110 — CUSIPS EQ, $Z_n$, $S_n$, $D_n$ ?

NO → B111 IGNORE

YES

B120 — PRICE > 0 ?

NO

B130 — CALCULATE: PRICE = $\dfrac{BID + ASKED}{2}$

B121 — COMPONENT PRICE HISTORY FILE

B140 — SEGREGATE COMPONENTS BY SERIES (YEARS)

$YR_1$   $YR_2$   $YR_n$

B150 — CALCULATE FACTORS FOR EQUITY (EQ) & ALL SERIES COMPONENTS: SPECS(S), ZIPS(Z), DIVS(D)

FACTOR EQ = 1.0

FACTOR $S_n$ = $\dfrac{\text{MARKET PRICE } S_n}{\Sigma \text{ MARKET PRICE}}$ $(S_n+Z_n+D_n)$

FACTOR $Z_n$ = $\dfrac{\text{MARKET PRICE } Z_n}{\Sigma \text{ MARKET PRICE}}$ $(S_n+Z_n+D_n)$

FACTOR $D_n$ = $\dfrac{\text{MARKET PRICE } D_n}{\Sigma \text{ MARKET PRICE}}$ $(S_n+Z_n+D_n)$

B160   B170   B180   B190

B200 — STORE COMPONENT FACTORS

B201 — FACTOR HISTORY FILE

B210 — ALL CUSIPS PROCESSED ?

NO ←

YES

B220 — PRINT REPORT

B221 — COMPONENT FACTOR REPORT

B231 — RECONCILE FACTORS

NO ←

B230 — $\Sigma(S_n+Z_n+D_n) = 1.0$ ?

YES

B

EP 0 795 162 B1

# FIG. 6

**B**

C101 FROM OCC

C100 LOAD OCC POSITION DATA

C110 PRINT REPORT → C111 PARTICIPANT POSITION DETAIL RPT.

C121 RECONCILE FACTORS ← NO — C120 $\Sigma POS_L = \Sigma POS_S$ ?

YES

C131 FACTOR HISTORY FILE → C130 LOAD COMPONENT FACTOR DATA

C140 ASSIGN COMPONENT FACTORS TO ALL PARTICIPANT MEMBER FIRM POSITIONS ($F_n$)

$F_1$ $F_2$ $F_n$

FOR ALL SERIES COMPONENT POSITIONS

C150 $S_1/Z_1/D_1$ $S_2/Z_2/D_2$ $S_n/Z_n/D_n$

C160 IS COMPONENT POSITION = 0 ? — YES → C190 ALL COMPONENTS TESTED? — NO

YES

NO

C171 NET LONG VOTES FIRM POSITION x COMPONENT FACTOR ← YES — C170 IS POSITION LONG ? — NO → C172 NET SHORT VOTE = FIRM POSITION x COMPONENT FACTOR x (-1)

C180 STORE NET LONG & NET SHORT VOTES BY POSITION BY FIRM → C181 FIRM'S VOTE FILE

C195 ALL FIRM'S TESTED? — NO → C211 RECONCILE VOTES

YES

C200 PRINT REPORT → C201 FIRM'S VOTE REPORT

C210 $\Sigma VOTE_L = \Sigma VOTE_S$ ? — NO → RECONCILE VOTES

YES

**C**

40

# FIG. 7

C

D101

FIRM'S
VOTE
FILE

D100

LOAD
DATA

PARTICIPANT
FIRM (SEE FIG. 8)
D120

RECEIVES DATA,
CONFIRMS
TRANSMISSION

D110

TRANSMIT
NET LONG &
NET SHORT
POSITIONS & NET
VOTE DATA TO
COMPANY & FIRMS

D130    COMPANY

RECEIVES DATA,
CONFIRMS
TRANSMISSION

D141

PARTICIPANT
FIRM
CONFIRMS

D140

PRINT
REPORT

D151

RECONCILE
POSITIONS
W/FIRM

NO

D150

TRANSMITS
= CONFIRMS ?

YES

D160

END

# FIG. 8

START — V100

EQUITY POSITION DATA FROM DTC — V102

COMPONENT POSITION DATA FROM OCC — V103

RECEIVE DATA CONFIRM TRANSMISSION

NET POSITIONS, NET VOTES, & COMPONENT FACTORS FROM ASPC — V101

IDENTIFY CUSTOMER HOLDINGS AS OF RECORD DATA BY COMPONENT — V110

CUSTOMER ACCOUNT MASTER FILE — V111

DETERMINE VOTING RIGHTS FOR ALL CUSTOMERS (C) — V120

$C_1$   $C_2$   $C_n$

FOR EQUITY AND ALL SERIES COMPONENTS — V130

$EQ/S_1/Z_1/D_1$   $S_1/Z_1/D_1$   $S_1/Z_1/D_1$

VOTE RIGHTS = CUSTOMER POSITION x ASPC COMPONENT FACTOR — V140

STORE DATA — V150

CUSTOMER VOTE FILE — V151

ALL COMPONENTS PROCESSED ? — V155

NO   YES

CALCULATE NET VOTES FOR EACH CUSTOMER — V170

VOTE RIGHT <0 ? — V180

YES   NO

SET VOTE RIGHT = 0 — V181

CALCULATE AND STORE CUSTOMER & FIRM TOTAL — V190

CUSTOMER VOTE FILE — V191

ALL CUSTOMERS PROCESSED ? — V195

NO   YES

PRINT REPORT — V200

CUSTOMER VOTE RIGHTS REPORT — V201

$\Sigma VOTES_C =$ NET VOTES ASPC ? — V210

NO   YES

RECONCILE VOTES W/ASPC — V211

NOTIFY COMPANY AND CUSTOMERS — V220

HOLDERS VOTING RIGHTS TO COMPANY — V221

PROXY — V222

END — V230

# FIG. 9

E010

**CUSTOMER A**
LONG 1 SHARE
COMMOM STOCK

Instruct Broker A to
Sell a Component
Interest   E1

Receives
Cash

E020

**CUSTOMER B**

Receives
Interest

Delivers
Cash

E050

**BROKER A**
OR OTHER DTC
PARTICIPANT

Sells Interest

E020

**REGISTERED
EQUITY
EXCHANGE**

Buys Interest

**BROKER B**
OR OTHER DTC
PARTICIPANT

Comparison

Comparison

E031
Instructs ECC to
Receive Customer A's
Stock from DTC to
Guarantee Created
Component Interest

E030
Instructs
DTC to Deliver
Stock to ECC

Receives
Cash

E200

Delivers
Cash

**NSCC
THRU THE
CNS
SYSTEM**

Receives
Interest

Instruction
to Settle
Trade

DELIVERS
STOCK TO ECC
E040

**ECC**

**DTC**

E300

E041
ECC Creates & Issues an Interest
at DTC for Delivery to Broker B for
the Account of Customer B

EP 0 795 162 B1

# FIG. 9A

# FIG. 10

I COMPANY

E20 A — ANNOUNCE VOTE — E20

II DTC

IDENTIFY PARTICIPANTS W/LONG COMPONENT HOLDINGS

E21A — E21

IV ASPC

CUSIP CORRELATION — E24A

SERVICE PROVIDER

E24B — VOTE CALCULATION ← MARKET PRICING DATA

E23 — III ECC — E23A

IDENTIFY PARTICIPANTS W/PLEDGED STOCK & SHORT COMP. HOLDINGS

E24C — VOTE APPORTIONING

E25A

IDENTIFY CUSTOMERS W/HOLDINGS

MEMBER FIRM & COMPANY NOTIFICATION — E24D

E24

E25B — RECONCILE CUSTOMER HOLDINGS TO ASPC

V DTC/ECC PARTICIPANT FIRM

E25C — NOTIFY CUSTOMERS & COMPANIES

E25

VI CUSTOMER

VII COMPANY — E27

PROXY $^1$ $^2$ $^3$

E26A — E26

TALLY & RECONCILE VOTES — E27A

ACTION AT SHAREHOLDER MEETING — E27B

# FIG. 11

# FIG. 12

START

EA100

RECEIPT OF
ANNOUNCEMENT
OF COMPANY
VOTE

EA110

DATA ENTRY :
• EQUITY CUSIP
• RECORD DATE
• DUE DATE

EA121

CUSIP
FILE

EA120

LOAD CUSIP –
COMPONENT
CORRELATION
DATA

EA130

EXPAND EQUITY CUSIP TO ALL
COMPONENT CUSIPS

$Z_n/S_n/D_n$

$Z_2/S_2/D_2$

$Z_1/S_1/D_1$

EA140

ALL
COMPONENTS
PROCESSED
?

NO

YES

ECC

RECIEVES
REQUEST –
CONFIRMS
TRANSMISSION

EA160

EA150

REQUEST
MEMBER FIRM
NET POSITIONS
BY COMPONENT

EA170          DTC

RECIEVES
REQUEST –
CONFIRMS
TRANSMISSION

EA180

REQUESTS
=
CONFIRMS
?

NO

EA181

RECONCILE
DISCREPANT
CUSIPS

YES

A

47

**FIG. 13**

EB101

FROM SERVICE

EB100

A

LOAD
MARKET
PRICE DATA

EB110

EB111

IGNORE ← NO — CUSIPS
EQ, $Z_n$, $S_n$, $D_n$
?

YES

EB120

PRICE
> 0 ?

EB121

COMPONENT
PRICE
HISTORY
FILE

NO

EB130

CALCULATE:
PRICE =
$\dfrac{BID + ASKED}{2}$

EB140

SEGREGATE COMPONENTS BY SERIES (YEARS)

$YR_1$  $YR_2$  $YR_n$

EB150

CALCULATE FACTORS FOR EQUITY ( EQ ) &
ALL SERIES COMPONENTS: SPECS(S), ZIPS(Z), DIVS(D)

FACTOR EQ
= 1.0

FACTOR $S_n$ =
$\dfrac{MARKET\ PRICE\ S_n}{\Sigma\ MARKET\ PRICE}$
$(S_n + Z_n + D_n)$

FACTOR $Z_n$ =
$\dfrac{MARKET\ PRICE\ Z_n}{\Sigma\ MARKET\ PRICE}$
$(S_n + Z_n + D_n)$

FACTOR $D_n$ =
$\dfrac{MARKET\ PRICE\ D_n}{\Sigma\ MARKET\ PRICE}$
$(S_n + Z_n + D_n)$

EB160  EB170  EB180  EB190

STORE
COMPONENT FACTORS

FACTOR
HISTORY
FILE

EB200  EB210  EB201

NO ← ALL CUSIPS
PROCESSED
?

EB220  YES

PRINT
REPORT

EB221

COMPONENT
FACTOR
REPORT

EB231

RECONCILE
FACTORS

EB230

NO ← $\Sigma(S_n + Z_n + D_n)$
= 1.0 ?

YES

B

# FIG. 14

EC101

B — EC100

FROM ECC → LOAD PARTICIPANTS' POSITION DATA ← FROM DTC — EC102

EC110 → PRINT REPORT → PARTICIPANT POSITION DETAIL RPT. — EC111

EC121 — RECONCILE FACTORS ← NO ← EC120 $\Sigma POS_L = \Sigma POS_S$ ?

YES

EC131 — FACTOR HISTORY FILE → LOAD COMPONENT FACTOR DATA — EC130

ASSIGN COMPONENT FACTORS TO ALL PARTICIPANT MEMBER FIRM POSITIONS ($F_n$) — EC140

$F_1$  $F_2$  $F_n$

FOR ALL SERIES COMPONENT POSITIONS

EC150

$S_1/Z_1/D_1$  $S_2/Z_2/D_2$  $S_n/Z_n/D_n$

EC160 — IS COMPONENT POSITION = 0 ? — YES → EC190 ALL COMPONENTS TESTED? — NO

NO

EC171 — NET LONG VOTES= FIRM POSITION x COMPONENT FACTOR ← YES — EC170 IS POSITION LONG ? — NO → NET SHORT VOTE = FIRM POSITION x COMPONENT FACTOR x (−1) — EC172

YES

EC180 — STORE NET LONG & NET SHORT VOTES BY POSITION BY FIRM → FIRM'S VOTE FILE — EC181

EC195 — ALL FIRM'S TESTED? — NO

YES

EC200 — PRINT REPORT → FIRM'S VOTE REPORT — EC201

EC210 — $\Sigma VOTE_L = \Sigma VOTE_S$ ? — NO → RECONCILE VOTES — EC211

YES

C

# FIG. 15

ED101 — FIRM'S VOTE FILE

ED100 — LOAD DATA

ED110 — TRANSMIT NET POSITION & NET VOTE DATA TO COMPANY & FIRMS

PARTICIPANT FIRM (SEE FIG. 16)
ED120 — RECEIVES DATA, CONFIRMS TRANSMISSION

ED130 — COMPANY
RECEIVES DATA, CONFIRMS TRANSMISSION

ED141 — PARTICIPANT FIRM & CO. CONFIRMS

ED140 — PRINT REPORT

ED151 — RECONCILE POSITIONS W/FIRMS OR CO.

ED150 — TRANSMITS = CONFIRMS ?

NO

YES

ED160 — END

# FIG. 16

START — EV100

LONG COMPONENT & EQUITY POSITION DATA FROM DTC — EV102

SHORT COMPONENT POSITION DATA FROM ECC — EV103

RECEIVE DATA CONFIRM TRANSMISSION

NET POSITIONS, NET VOTES, COMPONENT FACTORS FROM ASPC — EV101

IDENTIFY CUSTOMER HOLDINGS AS OF RECORD DATA BY COMPONENT — EV110

CUSTOMERS ACCOUNT MASTER FILE — EV111

DETERMINE VOTING RIGHTS FOR ALL CUSTOMERS (C) — EV120

$C_1$   $C_2$   $C_n$

FOR EQUITY AND ALL SERIES COMPONENTS — EV130

$EQ/S_1/Z_1/D_1$   $S_1/Z_1/D_1$   $S_1/Z_1/D_1$

VOTE RIGHTS = CUSTOMER POSITION x ASPC COMPONENT FACTOR — EV140

STORE DATA — EV150

CUSTOMERS VOTE FILE — EV151

ALL COMPONENTS PROCESSED ? — EV155

NO

YES

CALCULATE NET VOTES FOR EACH CUSTOMER — EV170

VOTE RIGHT <0 ? — EV180

YES

NO

SET VOTE RIGHT = 0 — EV181

CALCULATE AND STORE CUSTOMER & FIRM TOTAL — EV190

CUSTOMERS VOTE FILE — EV191

ALL CUSTOMERS PROCESSED ? — EV195

NO

YES

PRINT REPORT — EV200

CUSTOMER VOTE RIGHTS REPORT — EV201

$\Sigma VOTES_C = $ NET VOTES ASPC? — EV210

NO

RECONCILE VOTES W/ASPC — EV211

YES

NOTIFY COMPANY CUSTOMERS — EV220

HOLDERS VOTING RIGHTS TO COMPANY — EV221

PROXY — EV222

1 2 3

END — EV230

# FIG. 17

F100

**CUSTOMER A**
LONG 1 SHARE
COMMOM STOCK

Delivers & Pledges Stock
Sells One or More Components
Denoting Partial Interests in Stock
F1

Receives
Cash F8

F200

**BROKER A**

Sells Component

Interest F9

F600

REGISTERED
OPTIONS OR
EQUITY
EXCHANGE

Buys Component

Interest F10

F500

**CUSTOMER B**

Receives
Interest
F4

Delivers
Cash
F5

**BROKER B**

F400

Receives
Cash
F7

Delivers
Cash
F6

F300
Establishes
& Maintains Margin
Requirements for
Component Interests
Sold by Customer A

F3
Receives
Component
Interest

**EFCC**

EFCC Creates & Issues
Component Interests to Broker B's
Account for Credit to Customer B's Account

EP 0 795 162 B1

**FIG. 17A**

FIG. 18

# FIG.19

# FIG. 20

START

FA100

RECIEPT OF ANNOUNCEMENT OF COMPANY VOTE

FA110

DATA ENTRY :
• EQUITY CUSIP
• RECORD DATE
• DUE DATE

FA121

CUSIP FILE

FA120

LOAD CUSIP – COMPONENT CORRELATION DATA

FA130

EXPAND EQUITY CUSIP TO ALL COMPONENT CUSIPS

$Z_n/S_n/D_n$

$Z_2/S_2/D_2$

$Z_1/S_1/D_1$

FA140

ALL COMPONENTS PROCESSED ?

NO

YES

EFCC

RECEIVES REQUEST – CONFIRMS TRANSMISSION

FA160

FA150

REQUEST MEMBER FIRM NET POSITIONS BY COMPONENT

FA170

REQUESTS = CONFIRMS ?

NO

FA171

RECONCILE DISCREPANT CUSIPS WITH EFCC

YES

A

# FIG. 21

A

FB101 — FROM SERVICE

FB100 — LOAD MARKET PRICE DATA

FB110 — CUSIPS EQ, $Z_n$, $S_n$, $D_n$ ?

FB111 — NO — IGNORE

YES — FB120 — PRICE > 0 ?

FB121 — COMPONENT PRICE HISTORY FILE

FB130 — NO — CALCULATE: PRICE = $\frac{BID + ASKED}{2}$

FB140 — SEGREGATE COMPONENTS BY SERIES (YEARS)

$YR_1$   $YR_2$   $YR_n$

FB150 — CALCULATE FACTORS FOR EQUITY ( EQ ) & ALL SERIES COMPONENTS: SPECS(S), ZIPS(Z), DIVS(D)

FB160 — FACTOR EQ = 1.0

FB170 — FACTOR $S_n$ = $\frac{MARKET\ PRICE\ S_n}{\Sigma\ MARKET\ PRICE\ (S_n + Z_n + D_n)}$

FB180 — FACTOR $Z_n$ = $\frac{MARKET\ PRICE\ Z_n}{\Sigma\ MARKET\ PRICE\ (S_n + Z_n + D_n)}$

FB190 — FACTOR $D_n$ = $\frac{MARKET\ PRICE\ D_n}{\Sigma\ MARKET\ PRICE\ (S_n + Z_n + D_n)}$

FB200 — STORE COMPONENT FACTORS

FB201 — FACTOR HISTORY FILE

EB210 — ALL CUSIPS PROCESSED ? — NO

YES — FB220 — PRINT REPORT

FB221 — COMPONENT FACTOR REPORT

FB230 — $\Sigma(S_n + Z_n + D_n)$ = 1.0 ? — NO

FB231 — RECONCILE FACTORS

YES — B

**FIG. 22**

# FIG. 23

©

C

FD101

FIRM'S
VOTE
FILE

FD100

LOAD
DATA

PARTICIPANT
FIRM (SEE FIG. 24)
FD120

RECEIVES DATA,
CONFIRMS
TRANSMISSION

FD110

TRANSMIT NET
LONG & NET SHORT
POSITIONS & NET
VOTE DATA TO
COMPANY & FIRMS

FD130  COMPANY

RECEIVES DATA,
CONFIRMS
TRANSMISSION

FD141

PARTICIPANT
FIRM
CONFIRMS

FD140

PRINT
REPORT

FD151

RECONCILE
POSITIONS
W/FIRMS

NO

FD150

TRANSMITS
= CONFIRMS ?

YES

FD160

END

**FIG. 24**

```
                              ( START )
            FV100                                    EQUITY POSITION ── FV102
                                                     DATA FROM DTC
    NET POSITIONS,        RECEIVE DATA
    NET VOTES,            CONFIRM                     LONG & SHORT COMPONENT
    COMPONENT             TRANSMISSION                POSITION DATA      FV103
    FACTORS FROM ASPC                                 FROM EFCC

            FV101
                         IDENTIFY CUSTOMER      FV110      CUSTOMER
                         HOLDINGS AS OF RECORD              ACCOUNT
                         DATA BY COMPONENT                  MASTER
                                                            FILE

                         DETERMINE VOTING RIGHTS   FV120     FV111
                         FOR ALL CUSTOMERS (C)

                        C₁      ↓ C₂      ↓ Cₙ

                         FOR EQUITY AND ALL       FV130
                         SERIES COMPONENTS

              EQ/S₁/Z₁/D₁   ↓ S₁/Z₁/D₁      ↓ S₁/Z₁/D₁

                         VOTE RIGHTS = CUSTOMER   FV140
                         POSITION  x ASPC                   FV151
                         COMPONENT FACTOR
                                                            CUSTOMER
                                                            VOTE
                         STORE DATA                         FILE
                                    FV150
```

**FIG. 25**

INVESTER
(CUSTOMER A)  CF010

CF100

CF600

BROKER A  CF020

CF200

CF500

CF030

DTC

CF400

CF300

COMPANY  CF040

EP 0 795 162 B1

**FIG. 25A**

CE100

INVESTER
(CUSTOMER A)

CE010

CE104

CE102    CE020

CUSTOMER
ACCOUNT
FILE

BROKER A'S
CPU

CE080

CE030        CE070

CE105

DTC'S
CPU

CE060

COMPANY'S
CPU

CE040

CE107

COMP
CREATION
FILE

CE050

CE106

EP 0 795 162 B1

62

**FIG. 26**

# FIG. 27

# FIG. 28

```
                    ┌─────────────┐
                    │    START    │
                    └─────────────┘
                           │
                           ▼
CA100          ╱─────────────────────╲
              │      RECIEPT OF        │
              │   ANNOUNCEMENT OF      │
              │    COMPANY VOTE        │
               ╲─────────────────────╱
                           │
                           ▼
CA110          ┌─────────────────────┐
               │   DATA ENTRY :       │
               │  • EQUITY CUSIP      │
               │  • RECORD DATE       │
               │  • DUE DATE          │
               └─────────────────────┘
                           │
                           ▼
CA121                   CA120
┌──────────┐    ┌─────────────────────┐
│  CUSIP   │───▶│   LOAD CUSIP –       │
│  FILE    │    │   COMPONENT          │
│          │    │   CORRELATION        │
└──────────┘    │   DATA               │
                └─────────────────────┘
                           │
                           ▼
CA130          ┌─────────────────────┐
               │ EXPAND EQUITY CUSIP  │
               │ TO ALL COMPONENT     │
               │ CUSIPS               │
               └─────────────────────┘
```

$Z_n/S_n/D_n$

$Z_2/S_2/D_2$

$Z_1/S_1/D_1$

```
CA140          ╱─────────────╲
              ╱      ALL       ╲     NO
             │   COMPONENTS     │─────────▶
             │   PROCESSED      │
              ╲       ?        ╱
               ╲─────────────╱
                     │ YES
                     ▼
CA150                              CA170                  DTC
┌─────────────────────┐         ┌─────────────────────┐
│    REQUEST           │         │    RECIEVES          │
│ DTC POSITIONS &      │◀────────│    REQUEST –         │
│ VERIFY COMPANY       │         │    CONFIRMS          │
│ COMPONENT            │         │    TRANSMISSION       │
│ POSITION STATUS      │         └─────────────────────┘
└─────────────────────┘
          │
          ▼
CA180                          CA181
    ╱─────────────╲         ╱─────────────────────╲
   ╱   REQUESTS    ╲   NO   │    RECONCILE          │
  │       =         │──────▶│    DISCREPANT         │─────▶
  │    CONFIRMS      │       │    CUSIPS             │
   ╲      ?         ╱        ╲─────────────────────╱
    ╲─────────────╱
          │ YES
          ▼
        ( A )
```

# FIG. 29

# FIG. 30

Flowchart (FIG. 30):

- CC101
- B (connector) → CC100
- CC 102 FROM COMPANY
- LOAD PARTICIPANTS' POSITION DATA (CC100)
- PRINT REPORT (CC110) → PARTICIPANT POSITION DETAIL RPT. (CC111)
- CC120: $\Sigma POS_L = \Sigma POS_S$ ?
  - NO → RECONCILE FACTORS (CC121)
  - YES → LOAD COMPONENT FACTOR DATA (CC130)
- FACTOR HISTORY FILE (CC131) → LOAD COMPONENT FACTOR DATA (CC130)
- ASSIGN COMPONENT FACTORS TO ALL PARTICIPANT MEMBER FIRM POSITIONS ($F_n$) (CC140)
  - $F_1$, $F_2$, $F_n$
- FOR ALL SERIES COMPONENT POSITIONS (CC150)
  - $S_1/Z_1/D_1$, $S_2/Z_2/D_2$, $S_n/Z_n/D_n$
- CC160: IS COMPONENT POSITION = 0 ?
  - YES → CC190: ALL COMPONENTS TESTED?
    - NO
    - YES
  - NO → VOTE = FIRM POSITION × COMPONENT FACTOR (CC170)
- STORE VOTES BY POSITION BY FIRM (CC180) → FIRM'S VOTE FILE (CC181)
- CC195: ALL FIRM'S TESTED?
  - YES → PRINT REPORT (CC200) → FIRM'S VOTE REPORT (CC201)
  - NO → RECONCILE VOTES (CC211)
- CC210: $\Sigma VOTE_F = \Sigma VOTE_{CO.}$ ?
  - NO → RECONCILE VOTES (CC211)
  - YES → C (connector)

# FIG. 31

# FIG. 32